(19) Europäisches Patentamt
European Patent Office
Office européen des brevets

(11) EP 3 763 774 A1

(12) EUROPEAN PATENT APPLICATION
published in accordance with Art. 153(4) EPC

(43) Date of publication:
13.01.2021 Bulletin 2021/02

(21) Application number: 19791841.0

(22) Date of filing: 11.04.2019

(51) Int Cl.:
*C08J 5/24* (2006.01)

(86) International application number:
PCT/JP2019/015807

(87) International publication number:
WO 2019/208242 (31.10.2019 Gazette 2019/44)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 27.04.2018 JP 2018086158
18.09.2018 JP 2018173427

(71) Applicant: Toray Industries, Inc.
Tokyo, 103-8666 (JP)

(72) Inventors:
- SUGIMOTO, Atsuki
Iyo-gun, Ehime 791-3193 (JP)
- ARAI, Atsuhito
Iyo-gun, Ehime 791-3193 (JP)
- FURUKAWA, Koji
Iyo-gun, Ehime 791-3193 (JP)
- WATARI, Ryohei
Iyo-gun, Ehime 791-3193 (JP)

(74) Representative: Prüfer & Partner mbB
Patentanwälte · Rechtsanwälte
Sohnckestraße 12
81479 München (DE)

# (54) PREPREG AND CARBON-FIBER-REINFORCED COMPOSITE MATERIAL

(57) Provided is a prepreg for providing a carbon fiber reinforced material having excellent Mode I interlaminar toughness and Mode II interlaminar toughness and the carbon fiber reinforced material, the prepreg including the following constituents [A] to [C], the prepreg satisfying the following conditions [I] to [III]:
[A]: a sizing agent-coated carbon fiber;
[B]: an epoxy resin having a specific structure; and
[C]: a hardener for [B],
[I]: an epoxy resin composition including the constituents [B] and [C] has a nematic-isotropic phase transition temperature in a temperature range of 130°C to 180°C;
[II] a prepreg after isothermal holding at 100°C for 30 minutes does not have a high-order structure originated from a diffraction angle of 2θ = 1.0° to 6.0° measured by wide angle X-ray diffraction at 100°C; and
[III]: a prepreg after isothermal holding at 180°C for 2 hours has a high-order structure originated from the diffraction angle of 2θ = 1.0° to 6.0° measured by wide angle X-ray diffraction at 180°C.

EP 3 763 774 A1

## Description

### Field

The present invention relates to a prepreg providing a carbon fiber reinforced material having both excellent Mode I interlaminar toughness and Mode II interlaminar toughness and the carbon fiber reinforced material.

### Background

Conventionally, a fiber reinforced material made of a reinforcement fiber such as a carbon fiber and a glass fiber and a thermosetting resin such as an epoxy resin and a phenol resin has excellent mechanical properties such as strength and stiffness, heat resistance, and corrosion resistance in addition to lightweight and thus has been applied for various fields such as an aerospace field, an automotive field, a railway car field, a ship and vessel field, a civil engineering and construction field, and a sporting goods field. In particular, in applications requiring high performance, a fiber reinforced material using a continuous reinforcement fiber has been used and a carbon fiber, which has excellent specific strength and specific elastic modulus, has been mainly used as the reinforcement fiber and a thermosetting resin, in particular, an epoxy resin, which has excellent adhesiveness to the carbon fiber, has been mainly used as a matrix resin.

The carbon fiber reinforced material is a nonuniform material including the carbon fiber and the matrix resin as essential constituents and has significant difference between physical properties in an arrangement direction of the carbon fiber and physical properties in other directions. For example, it has been known that the interlaminar toughness exhibiting difficulty in progress of the interlaminar fracture of the carbon fiber is failed to be fundamentally improved by only improving the strength of the carbon fiber. In particular, the carbon fiber reinforced material including the thermosetting resin as the matrix resin has characteristics that the carbon fiber reinforced material is easily fractured by the stress from a direction other than the arrangement direction of the carbon fiber due to the low toughness of the matrix resin. Therefore, for the application requiring high strength and reliability such as a constructional material of an aircraft, various techniques have been developed in order to improve the physical properties of the composite material including the interlaminar toughness that can endure the stress from the direction other than the arrangement direction of the carbon fiber while securing the strength in the fiber direction.

In recent years, in addition to an increase in the application sites of the carbon fiber reinforced material to the constructional material of an aircraft, the application of the carbon fiber reinforced material to wind turbine blades and various turbines aiming to improve power generation efficiency or energy conversion efficiency has been progressed. The study of application to a thick member and a member having a three-dimensional curved surface shape has been progressed. In the case where tensile or compression stress is applied to such a thick member or the member having a curved surface shape, peeling stress between prepreg interlayers in out-of-plane directions of the surface is generated. This stress may generate a crack between layers by a crack opening mode and thus the strength and the stiffness of the entire member may deteriorate due to the progress of this crack. Consequently, the entire member may be fractured. In order to resist this stress, the interlaminar toughness in the crack opening mode, that is, Mode I is required. In order to obtain the carbon fiber reinforced material having high Mode I interlaminar toughness, the matrix resin itself is required to have high toughness. In order to improve the toughness of the matrix resin, a method for blending a rubber component into a matrix resin (refer to Patent Literature 1) and a method for blending a thermoplastic resin into a matrix resin (refer to Patent Literature 2) have been known. In addition, a method for inserting a kind of adhesion layer or an impact absorption layer called an interleaf between the layers (refer to Patent Literature 3) and a method for strengthening the interlayer with particles (refer to Patent Literature 4) have been developed.

### Citation List

#### Patent Literature

Patent Literature 1: Japanese Patent Application Laid-open No. 2001-139662
Patent Literature 2: Japanese Patent Application Laid-open No. H7-278412
Patent Literature 3: Japanese Patent Application Laid-open No. S60-231738
Patent Literature 4: Japanese Patent Application Laid-open No. H6-94515

## Summary

### Technical Problem

However, the methods described in Patent Literature 1 and Patent Literature 2 provide an insufficient toughness improvement effect of the matrix resin. The methods described in Patent Literature 3 and Patent Literature 4 provide an effect for Mode II interlaminar toughness. However, these methods provide an insufficient effect for Mode I interlaminar toughness. Therefore, an object of the present invention is to provide a prepreg that provides a carbon fiber reinforced material having excellent Mode I interlaminar toughness and Mode II interlaminar toughness and the carbon fiber reinforced material.

### Solution to Problem

A prepreg of the present invention, which solves the problem, includes the following constituents [A] to [C], the prepreg satisfying the following conditions [I] to [III] :

[A]: a sizing agent-coated carbon fiber;
[B]: an epoxy resin having a structure represented by a general formula (1):

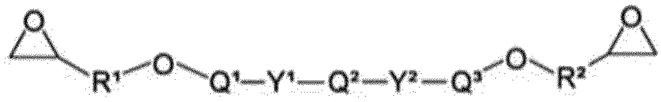

···(1)

in the general formula (1), $Q^1$, $Q^2$, and $Q^3$ each include one structure selected from a group (I); $R^1$ and $R^2$ in the general formula (1) each represent an alkylene group having a carbon number of 1 to 6; Z in the group (I) each independently represents an aliphatic hydrocarbon group having a carbon number of 1 to 8, an aliphatic alkoxy group having a carbon number of 1 to 8, a fluorine atom, a chlorine atom, a bromine atom, an iodine atom, a cyano group, a nitro group, or an acetyl group; n each independently represents an integer of 0 to 4; and $Y^1$, $Y^2$, and $Y^3$ each in the general formula (1) and the group (I) are selected from a single bond or one group from a group (II); and

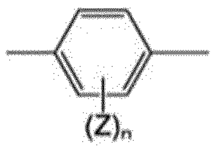
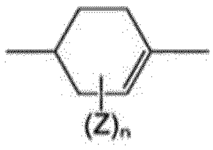
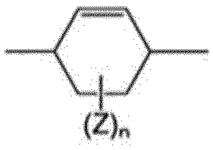
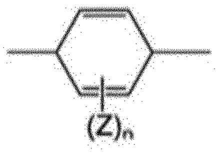
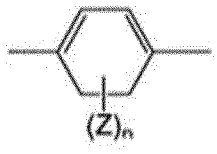
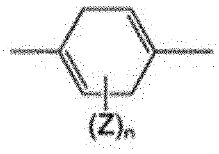
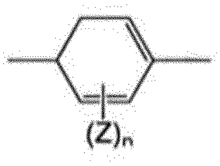
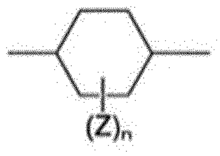
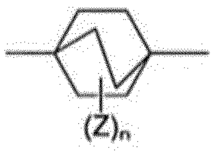

Group (I)

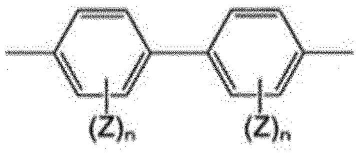
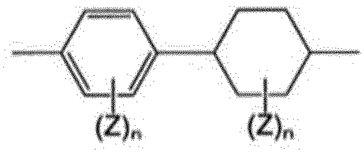
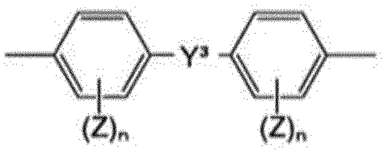
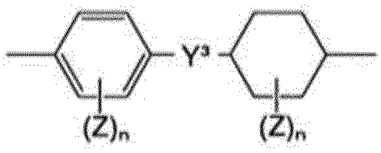
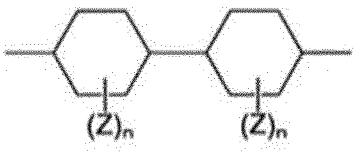
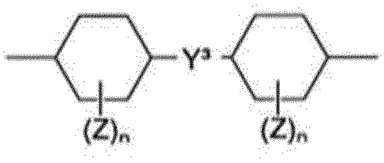

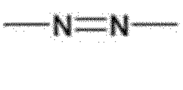
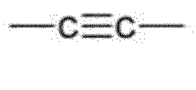
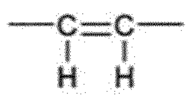
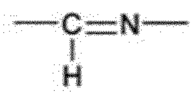
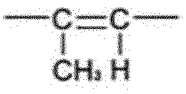
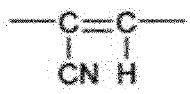
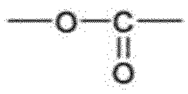
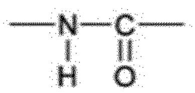

Group (II)

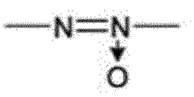
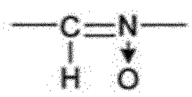
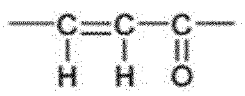

[C]: a hardener for [B],

[I]: an epoxy resin composition including the constituents [B] and [C] has a nematic-isotropic phase transition temperature in a temperature range of 130°C to 180°C;

[II]: a prepreg after isothermal holding at 100°C for 30 minutes does not have a high-order structure originated from a diffraction angle of 2θ = 1.0° to 6.0° measured by wide angle X-ray diffraction at 100°C; and

[III]: a prepreg after isothermal holding at 180°C for 2 hours has a high-order structure originated from the diffraction angle of 2θ = 1.0° to 6.0° measured by wide angle X-ray diffraction at 180°C.

A carbon fiber reinforced material of the present invention is made by curing the above-described prepreg.

Advantageous Effects of Invention

According to the present invention, the carbon fiber reinforced material having excellent Mode I interlaminar toughness and Mode II interlaminar toughness is obtained.

Brief Description of Drawing

FIG. 1 is a view illustrating the measurement method of Mode I interlaminar toughness ($G_{IC}$).

Description of Embodiments

The constituent [A] sizing agent-coated carbon fiber according to the present invention provides the carbon fiber reinforced material that has an excellent handling property due to the effect of the sizing agent and excellent interfacial adhesion between the carbon fiber and a matrix resin by reacting the matrix resin with the sizing agent existing on the surface of the carbon fiber. The constituent [A] according to the present invention is a continuous fiber and the term "continuous fiber" means a fiber having an average fiber length of 100 mm or more.

The attached amount of the sizing agent in the constituent [A] according to the present invention is preferably 0.1 part by mass or more, more preferably in the range of 0.1 part by mass to 3.0 parts by mass, and further preferably in the range of 0.2 part by mass to 3.0 parts by mass relative to 100 parts by mass of the sizing agent-coated carbon fiber. As a method for measuring the attached amount of the sizing agent, the attached amount is determined to be the mass percentage of a value obtained by dividing a mass change amount before and after heat treatment by a mass before the heat treatment when 2 ± 0.5 g of the sizing agent-coated carbon fiber is collected and subjected to the heat treatment at 450°C for 15 minutes under a nitrogen atmosphere.

In the constituent [A] according to the present invention, the sizing agent attached amount ratio remaining on the after-washing carbon fiber after washing with a solvent made by mixing acetonitrile and chloroform in a volume ratio of 9 to 1 is preferably 0.08% by mass or more relative to the sizing agent-coated carbon fiber. The ratio is more preferably in the range of 0.08% by mass to 3.0% by mass and further preferably in the range of 0.14% by mass to 0.30% by mass. The sizing agent-coated carbon fiber having the attached amount ratio of the sizing agent after washing in this range allows the interfacial adhesion between the carbon fiber and the sizing agent to be excellent and high shear toughness to be exhibited when the carbon fiber reinforced material is prepared. The phrase "attached amount ratio of the sizing agent after washing" described here refers to an amount ratio measured and calculated as follows. To 10 ml of solution prepared by mixing acetonitrile and chloroform in a volume ratio of 9:1, 2 ± 0.5 g of the sizing agent-coated carbon fiber is immersed and subjected to ultrasonic washing for 20 minutes to elute the sizing agent from the carbon fiber. Thereafter, the carbon fiber after washing is sufficiently dried and the mass is measured. Furthermore, the carbon fiber after washing is subjected to heat treatment at 450°C for 15 minutes under a nitrogen atmosphere. The attached amount ratio of the sizing agent after washing is determined to be a mass percentage of a value obtained by dividing a mass change amount before and after the heat treatment by a mass of the sizing agent-coated carbon fiber before the heat treatment.

In the present invention, the sizing agent preferably includes an epoxy compound. Examples of the epoxy compound included in the sizing agent include an aliphatic epoxy compound and an aromatic epoxy compound. These compounds may be used singly or in combination.

The carbon fiber prepared by applying the sizing agent made of the aliphatic epoxy compound alone is confirmed to have high adhesiveness to the matrix resin. The mechanism of this phenomenon is not clear. However, it is considered that the aliphatic epoxy compound can form strong interaction with the functional groups such as carboxy group and hydroxy group on the carbon fiber surface due to a flexible molecular skeleton and a structure having a high degree of freedom of the aliphatic epoxy compound.

The carbon fiber prepared by applying the sizing agent made of the aromatic epoxy compound alone has advantages that the reactivity of the sizing agent with the matrix resin is low and physical property change is small when the prepreg is stored for a long period of time. In addition, this carbon fiber also has an advantage that a rigid interface layer can be formed.

In the case of the sizing agent prepared by mixing the aliphatic epoxy compound and the aromatic epoxy compound, a phenomenon in which more aliphatic epoxy compound, which has higher polarity, is localized on the carbon fiber side and the aromatic epoxy compound, which has lower polarity, is localized on the outermost layer of the sizing layer opposite to the carbon fiber can be observed. As a result of the gradient structure of the sizing layer, the aliphatic epoxy compound has strong interaction with the carbon fiber in the vicinity of the carbon fiber and thus the adhesiveness between the carbon fiber and the matrix resin can be improved. The aromatic epoxy compound existing on the outer layer at a high content acts as shielding the aliphatic epoxy compound from the matrix resin in the case where the prepreg is formed from the sizing agent-coated carbon fiber. This allows the reaction of the aliphatic epoxy compound with highly reactive components in the matrix resin to be inhibited and thus the stability at the time of storage for a long

period of time can be achieved.

In the carbon fiber reinforced material made of the sizing agent-coated carbon fiber and the matrix resin, what is called an interface layer in the vicinity of the carbon fiber may be affected by the carbon fiber or the sizing agent and may have different properties from the matrix resin. The epoxy compound included in the sizing agent containing one or more aromatic rings forms the rigid interface layer. Therefore, stress transfer ability between the carbon fiber and the matrix resin is improved and mechanical properties such as 0° tensile strength of the carbon fiber reinforced material are improved. In addition, improvement in hydrophobicity due to the aromatic ring results in weakening the interaction to the carbon fiber compared with the aliphatic epoxy compound. Therefore, the aromatic epoxy compound can cover the aliphatic epoxy compound and this allows the aromatic epoxy compound to exist on the outer layer of the sizing layer. This allows the change over time during storage for a long period of time to be inhibited in the case where the sizing agent-coated carbon fiber is used for the prepreg, which is preferable. The aromatic epoxy compound having two or more aromatic rings is preferable because the stability for a long period of time due to the aromatic rings is improved. The upper limit of the number of the aromatic rings that the epoxy compound has is not particularly limited. Ten rings are sufficient from the viewpoints of the mechanical properties and the inhibition of the reaction with the matrix resin.

In the present invention, the epoxy equivalent weight of the sizing agent applied to the carbon fiber is preferably 350 g/mol to 550 g/mol. The sizing agent having an epoxy equivalent weight of 550 g/mol or less allows the adhesiveness between the carbon fiber prepared by applying the sizing agent and the matrix resin to be improved, which is preferable. The sizing agent having an epoxy equivalent weight of 350 g/mol or more allows the reaction of the resin component used for the prepreg and the sizing agent to be inhibited in the case where the sizing agent-coated carbon fiber is used for the prepreg. Therefore, the physical properties of the obtained carbon fiber reinforced material are excellent even when the prepreg is stored for a long period of time, which is preferable. The epoxy equivalent weight of the carbon fiber to which the sizing agent in the present invention is applied can be determined by immersing the sizing agent-coated fiber into a solvent represented by N,N-dimethylformamide, eluting the sizing agent from the fiber by subjecting to ultrasonic cleaning, thereafter opening the ring of the epoxy group with hydrochloric acid, and carrying out acid-base titration. The epoxy equivalent weight is preferably 360 g/mol or more and more preferably 380 g/mol or more. The epoxy equivalent weight is also preferably 530 g/mol or less and more preferably 500 g/mol or less. The epoxy equivalent weight of the sizing agent applied to the carbon fiber can be controlled by, for example, the epoxy equivalent weight of the sizing agent used for the application and thermal history in drying after the application.

The constituent [A] of the present invention is not limited by the form or arrangement of the fiber. For example, a long fiber arranged in one direction and fiber structure products such as a single tow, a fabric, a woven fabric, and a braid are used. The carbon fiber may be used by combining two or more types of carbon fibers or used in combination with other reinforcement fibers such as a glass fiber, an aramid fiber, a boron fiber, a PBO fiber, a high strength polyethylene fiber, an alumina fiber, and a silicon carbide fiber.

Specific examples of the carbon fiber include an acrylic carbon fiber, a pitch-based carbon fiber, and a rayon carbon fiber. In particular, the acrylic carbon fiber having high tensile strength is preferably used.

Such an acrylic carbon fiber can be produced through, for example, the process described below. A spinning dope solution including polyacrylonitrile obtained from a monomer containing acrylonitrile as a main component is spun by a wet spinning method, a dry-jet wet spinning method, a dry spinning method, or a melt spinning method. A precursor is formed from a coagulated fiber after the spinning through a spinning process. Subsequently, the precursor is subjected to the process for providing flame resistance and carbonizing to give the carbon fiber.

As the form of the carbon fiber, a twisted yarn, an untwisted yarn, a non-twisted yarn, or the like may be used. In the case of the twisted yarn, the orientation of filaments constituting the carbon fiber is not parallel and thus this orientation causes reduction in the mechanical properties of the obtained carbon fiber reinforced material. Therefore, the untwisted yarn or the non-twisted yarn having good balance between the moldability and strength property of the carbon fiber reinforced material is preferably used.

In order to improve adhesiveness to the sizing agent existing on the surface, usually, the constituent [A] according to the present invention is preferably subjected to oxidation treatment to introduce oxygen containing functional groups. As the method of oxidation treatment, gas phase oxidation, liquid phase oxidation, and liquid phase electrochemical oxidation are used. The liquid phase electrochemical oxidation is preferably used from the viewpoints of high productivity and uniform treatment.

In the present invention, examples of the electrolytic solution used in the liquid phase electrochemical oxidation include an acidic electrolytic solution and an alkaline electrolytic solution. From the viewpoint of adhesiveness, the sizing agent is preferably applied after the liquid phase electrochemical oxidation is carried out in the alkaline electrolytic solution.

Examples of the acidic electrolytic solution include inorganic acids such as sulfuric acid, nitric acid, hydrochloric acid, phosphoric acid, boric acid, and carbonic acid; organic acids such as acetic acid, butyric acid, oxalic acid, acrylic acid, and maleic acid; and salts such as ammonium sulfate and ammonium hydrogen sulfate. Of these compounds, sulfuric acid and nitric acid, which indicate strong acidity, are preferably used.

Specific examples of the alkaline electrolytic solution include the aqueous solutions of hydroxides such as

sodium hydroxide, potassium hydroxide, magnesium hydroxide, calcium hydroxide, and barium hydroxide; the aqueous solutions of carbonate salts such as sodium carbonate, potassium carbonate, magnesium carbonate, calcium carbonate, barium carbonate, and ammonium carbonate; the aqueous solutions of hydrogen carbonate salts such as sodium hydrogen carbonate, potassium hydrogen carbonate, magnesium hydrogen carbonate, calcium hydrogen carbonate, barium hydrogen carbonate, and ammonium hydrogen carbonate; and the aqueous solutions of ammonia, tetraalkylammonium hydroxide, and hydrazine. Of these compounds, the aqueous solutions of ammonium carbonate and ammonium hydrogen carbonate or an aqueous solution of tetraalkylammonium hydroxide, which indicates strong alkaline, is preferably used from the viewpoint of not including alkali metals that induce curing inhibition of the matrix resin.

The concentration of the electrolytic solution used in the present invention is preferably in the range of 0.01 mol/liter to 5 mol/liter and more preferably in the range of 0.1 mol/liter to 1 mol/liter. The electrolytic solution having a concentration of 0.01 mol/liter or more allows electrochemical treatment voltage to be reduced and thus is advantageous in operation cost. On the other hand, the electrolytic solution having a concentration of 5 mol/liter or less is advantageous from the viewpoint of safety.

The temperature of the electrolytic solution used in the present invention is preferably in the range of 10°C to 100°C and more preferably in the range of 10°C to 40°C. The electrolytic solution at a temperature of 10°C or more allows the effect of the electrochemical treatment to be improved and thus is advantageous in operation cost. On the other hand, the electrolytic solution at a temperature of 100°C or less is advantageous from the viewpoint of safety.

In the present invention, electric quantity in the liquid phase electrochemical oxidation is preferably optimized in accordance with the degree of carbonization of the carbon fiber. In the case where the carbon fiber having high modulus is treated, larger electric quantity is required.

In the present invention, the electric current density in the liquid phase electrochemical oxidation is preferably in the range of 1.5 ampere to 1,000 ampere per square meter of the surface area of the carbon fiber in the electrochemical treatment solution, and more preferably in the range of 3 ampere/$m^2$ to 500 ampere/$m^2$. The liquid phase electrochemical oxidation in an electric current density of 1.5 ampere/$m^2$ or more allows efficiency of the electrochemical treatment to be improved and thus is advantageous in operation cost. On the other hand, the liquid phase electrochemical oxidation in an electric current density of 1,000 ampere/$m^2$ or less is advantageous from the viewpoint of safety.

In the present invention, the total amount of the electrochemical electric quantity employed in the electrochemical treatment is preferably 3 coulombs to 300 coulombs per gram of the carbon fiber. The electrochemical treatment using a total amount of the electrochemical electric quantity of 3 coulombs/g or more allows the functional groups to be sufficiently provided onto the carbon fiber surface and the interface adhesion property between the matrix resin and the carbon fiber to be excellent. On the other hand, the electrochemical treatment using a total amount of the electrochemical electric quantity of 300 coulombs/g or less allows the flaw expansion in the single fiber surface of the carbon fiber to be reduced and strength deterioration in the carbon fiber to be reduced.

The constituent [A] used in the present invention preferably has a Young's modulus in the range of 200 GPa to 440 GPa. Young's modulus of the carbon fiber is affected by crystallinity of a graphite structure constituting the carbon fiber. As the crystallinity becomes higher, the modulus becomes higher. Young's modulus of the carbon fiber in this range allows all of the stiffness and strength of the carbon fiber reinforced material to be balanced on a high level, which is preferable. More preferable Young's modulus is in the range of 230 GPa to 400 GPa and further preferable Young's modulus is in the range of 260 GPa to 370 GPa. Here, Young's modulus of the carbon fiber is a value measured in accordance with JIS R7601 (2006).

Examples of the commercially available products of the carbon fiber include "torayca (registered trademark)" T800G-24K, "torayca (registered trademark)" T300-3K, "torayca (registered trademark)" T700G-12K, and "torayca (registered trademark)" T1100G-24K (all products are manufactured by Toray Industries, Inc.).

The constituent [A] used in the present invention preferably has a single fiber fineness of 0.2 dtex to 2.0 dtex and more preferably 0.4 dtex to 1.8 dtex. The carbon fiber having a single fiber fineness of 0.2 dtex or more may be difficult to cause damage of the carbon fiber due to contact with a guide roller at the time of twisting. In addition, a similar damage may be reduced at the impregnation treatment process of the epoxy resin composition. The carbon fiber having a single fiber fineness of 2.0 dtex or less may achieve sufficient impregnation thereof with the epoxy resin composition and consequently deterioration of fatigue resistance may be prevented.

The constituent [A] used in the present invention preferably has a number of filaments in one fiber bundle in the range of 2,500 to 50,000. The fiber bundle having a number of filaments of 2,500 or more is difficult to cause the meandering of the fiber arrangement and allows deterioration in strength to be reduced. The fiber bundle having a number of filaments of 50,000 or less facilitates impregnation of the epoxy resin composition at the time of prepreg preparation or at the time of molding. The number of filaments is preferably in the range of 2,800 to 40,000.

In constituent [A] according to the present invention, a surface oxygen concentration (O/C), which is the ratio of the numbers of atoms of oxygen (O) and carbon (C) at the surface of the fiber measured by X-ray photoelectron spectroscopy, is preferably 0.10 or more. The carbon fiber having the surface oxygen concentration in the range of 0.10 to 0.50 is more preferable, in the range of 0.14 to 0.30 is further preferable, and in the range of 0.14 to 0.20 is particularly

preferable. The carbon fiber having a surface oxygen concentration (O/C) of 0.10 or more allows the oxygen containing functional groups at the carbon fiber surface to be secured and strong adhesion to the matrix resin to be obtained. The carbon fiber having a surface oxygen concentration (O/C) of 0.50 or less allows deterioration in strength of the carbon fiber itself due to oxidation to be reduced, which is preferable.

The surface oxygen concentration of the carbon fiber can be determined by the X-ray photoelectron spectroscopy in accordance with the following procedure. First, the carbon fiber from which contamination and the like attached to the carbon fiber surface are removed with a solvent is cut into a length of 20 mm and is spread and arranged on the sample support stage made of copper. Thereafter the sample is measured at a photoelectron takeoff angle of 90° using $AlK_{\alpha 1,2}$ as an X-ray source while maintaining at $1 \times 10^{-8}$ Torr in a sample chamber. The binding energy value of the main peak (top peak) of $C_{1s}$ is adjusted to 284.6 eV as the correction value of the peak associated with electrostatic charge during the measurement. The peak area of $C_{1s}$ is determined by drawing a linear base line in the range of 282 eV to 296 eV, while the peak area of $O_{1s}$ is determined by drawing a linear base line in the range of 528 eV to 540 eV. The surface oxygen concentration (O/C) is represented by an atomic number ratio calculated by dividing the ratio of the $O_{1s}$ peak area by the apparatus-specific sensitivity correction value. In the case where ESCA-1600 manufactured by ULVAC-PHI, Inc. is used as the X-ray photoelectron spectroscopy apparatus, the apparatus-specific sensitivity correction value is 2.33.

In the constituent [A] according to the present invention, the interfacial shear strength (IFSS) defined by the following method is preferably 25 MPa or more, more preferably 29 MPa or more, and further preferably 40 MPa or more. As the interfacial shear strength becomes higher, the adhesiveness between the carbon fiber and the epoxy resin tends to become higher. Consequently, high Mode I interlaminar toughness and Mode II interlaminar toughness are exhibited. Here, the term "interfacial shear strength" in the present invention refers to interfacial shear strength between the single fiber of the carbon fiber and the bisphenol A epoxy resin and is a value measured and calculated as follows.

Hereinafter, the measurement method of the interfacial shear strength will be described. The measurement is carried out with reference to Drzal, L. T., Master, Sci, Eng. A126, 289 (1990).

More specifically, each 100 parts by mass of bisphenol A epoxy compound "jER (registered trademark)" 828 (manufactured by Mitsubishi Chemical Corporation) and 14.5 parts by mass of metaphenylenediamine (manufactured by Sigma-Aldrich Japan G. K.) is placed in a container. Thereafter, the compounds are heated at a temperature of 75°C for 15 minutes in order to reduce the viscosity of the above-described jER 828 and to dissolve metaphenylenediamine. Thereafter, both of the compounds are mixed sufficiently and the resultant mixture is subjected to vacuum defoaming at a temperature of 80°C for about 15 minutes.

Subsequently, a single fiber is pulled out from the carbon fiber bundle and both edges of the single fiber are fixed in a dumbbell-shaped mold in a longitudinal direction in a state where constant tension is applied to the single fiber. Thereafter, in order to remove water attached to the carbon fiber and the mold, vacuum drying is carried out at a temperature of 80°C for 30 minutes or more. The dumbbell-shaped mold is made of silicone rubber. The cast molding part has the shape of a center part width of 5 mm, a length of 25 mm, both edge part width of 10 mm, and an entire length of 150 mm.

The prepared resin is poured into the above-described mold after the vacuum drying. The temperature is raised to 75°C at a temperature ramp rate of 1.5 °C/min, retained for 2 hours, thereafter raised to 125°C at a temperature ramp rate of 1.5 °C/min, retained for 2 hours, and thereafter lowered to 30°C at a temperature lowering rate of 2.5 °C/min. Thereafter, the molded resin is removed from the mold to give a test specimen.

Tensile tension is applied to the test specimen obtained by the above-described procedure in a fiber axis direction (longitudinal direction) at a strain rate of 0.3 %/second to generate a strain of 12%. Thereafter, the number of fiber breaks N (breaks) in the center part of the test specimen in a range of 22 mm is measured with a polarizing microscope. Subsequently, an average broken fiber length la is calculated in accordance with the formula la (μm) = 22 × 1,000 (μm)/N (breaks). Subsequently, critical fiber length lc is calculated from the average broken fiber length la in accordance with the formula lc (μm) = (4/3) × la (μm). The strand tensile strength σ and the diameter d of the single fiber of the carbon fiber are further measured and the value calculated in accordance with the following formula is determined to be the "interfacial shear strength" in the present invention.

· Interfacial shear strength IFSS (MPa) = σ (MPa) × d (μm)/(2 × lc)(μm).

The carbon fiber reinforced material prepared by curing the prepreg according to the present invention surprisingly exhibits excellent Mode I interlaminar toughness and Mode II interlaminar toughness due to having a high-order structure of the cured product of the epoxy resin composition. This is considered to be because much energy is required for breaking the high-order structure of the cured product of the epoxy resin composition at the time of developing a

crack in the carbon fiber reinforced material.

The term "high-order structure" means a state where the molecules are oriented and arrayed after curing or semi-curing the epoxy resin composition and means, for example, a state where a crystal structure or a liquid crystal structure exists in the cured product.

The presence or absence of the high-order structure in the cured product of the epoxy resin composition can also be ensured by examining the presence or absence of optical anisotropy using a polarizing microscope as described above. In the case where the size of the structure having the optical anisotropy is equal to or larger than the order of the wavelength of visible light, interference fringes are observed under the polarizing microscope in a crossed Nicol state. In the case where the high-order structure is not formed or the size of the formed high-order structure is smaller than the size in the order of the wavelength of visible light, the interference fringes are not observed because the cured product has no optical anisotropy. In the case where a smectic structure is formed as the high-order structure, the interference fringes such as a bâtonnet texture, a focal conic fan texture, and an oily streak texture can be observed by the polarizing microscope.

Hereinafter, Conditions [II] and [III] that the prepreg according to the present invention satisfies will be described. The prepreg according to the present invention does not form the smectic structure in the epoxy resin composition under the condition of the isothermal holding at 100°C for 30 minutes (Condition [II]) and forms the smectic structure in the epoxy resin composition under the condition of the isothermal holding at 180°C for 2 hours (Condition [III]). In the case where the epoxy resin composition forms the smectic structure at 100°C, a viscosity is not sufficiently lowered. Consequently, wettability to the constituent [A] is worsened, or the reaction with the sizing agent existing on the surface of the constituent [A] is difficult to occur. As a result, the carbon fiber reinforced material becomes a carbon fiber reinforced material having low adhesiveness between the epoxy resin and the carbon fiber. From the viewpoint of sufficiently reducing the viscosity of the epoxy resin composition and reacting the epoxy resin composition with the sizing on the surface of the constituent [A], it is important that the epoxy resin composition does not form the smectic structure under the isothermal holding condition at 100°C for 30 minutes.

The prepreg according to the present invention exhibits high Mode I interlaminar toughness and Mode II interlaminar toughness by forming the smectic structure in the epoxy resin composition under the condition at 180°C for 2 hours. In the case where the epoxy resin composition forms the smectic structure, a peak is generally observed in X-ray diffraction measurement in the region of a diffraction angle of $2\theta \leq 10°$. The presence or absence of the smectic structure in the epoxy resin composition can be confirmed by the presence or absence of the peak in this region. This peak is caused by the periodic structure (the high-order structure) originated from a mesogenic structure (for example, a biphenyl group, a terphenyl group, a terphenyl-related group, an anthracene group, a group formed by bonding these groups with an azomethine group or an ester group) existing in the constituent [B], in the constituent [C], or in both of the constituent [B] and the constituent [C].

A specific method for ensuring that the prepreg according to the present invention satisfies the conditions [II] and [III] will be described. A measurement sample formed by cutting one ply of the prepreg according to the present invention into a length of 20 mm and a width of 10 mm is prepared. The measurement sample is set in a temperature control unit (FP82; manufactured by Mettler-Toledo International Inc.) attached to a wide angle X-ray diffractometer (D8 DISCOVER; manufactured by Bruker AXS GmbH) and two-dimensional wide angle X-ray diffraction is measured. In Condition [II], the temperature of the measurement sample is raised from 40°C to 100°C at 2 °C/minute using the temperature control unit and the measurement sample is retained for 30 minutes from the time when the temperature reaches 100°C. The presence or absence of the peak existing in $2\theta = 1.0°$ to $6.0°$ is confirmed for the obtained diffraction pattern by the wide angle X-ray diffraction measurement immediately after 30 minutes have passed. In Condition [III], the temperature of the measurement sample is raised from 40°C to 180°C at 2 °C/minute using the temperature control unit and the measurement sample is retained for 2 hours from the time when the temperature reaches 180°C. The presence or absence of the peak existing in $2\theta = 1.0°$ to $6.0°$ is confirmed for the obtained diffraction pattern by the wide angle X-ray diffraction measurement immediately after 2 hours have passed.

For Condition [III], the high-order structure of the epoxy resin composition may have any direction relative to the carbon fiber of the constituent [A]. In the case where the high-order structure has a periodic structure in the perpendicular direction alone relative to a carbon fiber axis, the peak originated from the epoxy resin composition may fail to be observed by the X-ray diffraction due to the strong peak originated from the carbon fiber. In this case, the presence or absence of the periodic structure can be confirmed by measuring the resin composition excluding the carbon fiber by the X ray diffraction. As another confirmation method, use of synchrotron radiation is also effective. A beam radius is narrowed down to several micrometers, whereby the cured product of the epoxy resin composition alone including the constituents [B] and [C] and excluding the constituent [A] can be measured. Consequently, the presence or absence of high-order structure formation can be confirmed.

The prepreg and carbon fiber reinforced material according to the present invention preferably include the resin region where the cured product of the epoxy resin composition exhibits molecular anisotropy. The term "resin region having molecular anisotropy" refers to an oriented domain in which molecules are oriented in a unidirection in a size of

diameter of 1 μm or more. As a confirmation method, for example, the resin region having molecular anisotropy can be confirmed by measuring the polarized IR spectroscopy or polarized Raman spectroscopy when an arbitrary direction is determined to be 0°, the polarizing direction is changed from 0° to 150° at intervals of 30° for 5 to 10 places in the resin region in the carbon fiber reinforced material, and the presence or absence of the change in signal intensity is observed to the polarizing direction. An epoxy resin composition having no molecular anisotropy does not indicate the intensity change.

In the range where the resin composition after curing has the high-order structure derived from the diffraction angle 2θ = 1.0° to 6.0° observed by the X-ray diffraction, the molding conditions of the carbon fiber reinforced material according to the present invention are not particularly limited. However, excessively high molding temperature results in requiring an apparatus and auxiliary materials to be used having high heat resistance and thus the production cost of the carbon fiber reinforced material becomes high. Excessively low molding temperature results in requiring a long period of time for the reaction of the constituents [B] and [C] and thus the production cost may also become high. The maximum temperature used in the molding is preferably 100°C to 220°C and further preferably 120°C to 200°C.

As Condition [I], the epoxy resin composition including the constituents [B] and [C] in the prepreg according to the present invention has a nematic-isotropic phase transition temperature in the range of 130°C to 180°C. Generally, as the ratio of the above-described high-order structure existing in the cured product of the epoxy resin composition increases, the thermal conductivity and resin toughness of the epoxy resin composition alone are improved. In order to increase the ratio of the high-order structure in the cured product, the cured product is cured in a manner that a non-liquid crystal state (an isotropic structure) part is included as low as possible while maintaining the liquid crystal structure in a temperature range where curing failure does not occur. In many cases, the curing starts from a nematic phase (a liquid crystal state) and structure formation proceeds to a smectic phase. In other words, in order to improve the resin toughness and thermal conductivity, an epoxy resin composition in which the nematic-isotropic phase transition does not occur and the liquid crystal structure is retained after curing and an epoxy resin composition having a higher nematic-isotropic phase transition temperature are preferable. On the other hand, in the present invention, the inventors of the present invention have found that the high resin properties of the cured product of the epoxy resin composition are sufficiently utilized and thus that Mode I interlaminar toughness and Mode II interlaminar toughness are remarkably improved by not using the epoxy resin composition alone but achieving both existence of the high-order structure in the cured product in the carbon fiber reinforced material in sufficiently large ratio and improvement in the adhesiveness with the carbon fiber interface, particularly in the case of mechanical tests such as Mode I interlaminar toughness and Mode II interlaminar toughness. Condition [I] is a condition for satisfying both requirements. Satisfying Condition [I] allows the cured product to exhibit high resin toughness, the wettability of the cured product with the constituent [A] to be improved, and the cured product to be sufficiently reacted with the sizing agent existing on the surface of the constituent [A] due to reduction in the resin viscosity associated with the phase transition from the nematic phase to the isotropic phase. As a result, in the carbon fiber reinforced material obtained by curing the prepreg according to the present invention, the interfacial adhesion between the resin and the carbon fiber is improved. In the case where the prepreg has a higher nematic-isotropic phase transition temperature than 180°C, the resin viscosity is not sufficiently reduced and the sizing agent existing on the surface of the constituent [A] is not sufficiently reacted with the resin. Consequently, the interfacial adhesion between the constituent [A] and the epoxy resin composition is not sufficiently improved. As a result, such an epoxy resin composition provides lower Mode II interlaminar toughness than that of the epoxy resin composition satisfying Condition [I]. In the case where the nematic-isotropic phase transition temperature is lower than 130°C, the ratio of the high-order structure included in the cured product of the epoxy resin composition including the constituents [B] and [C] is decreased and the resin toughness itself is deteriorated. Consequently, such an epoxy resin composition provides lower Mode I interlaminar toughness and Mode II interlaminar toughness than those of the epoxy resin composition satisfying Condition [I].

The nematic-isotropic phase transition temperature can be determined by polarizing microscope observation for the epoxy resin composition including the constituents [B] and [C] during a temperature ramp process in a crossed Nicol state. In the polarizing microscope observation in the crossed Nicol state, in the case where the epoxy resin composition forms the nematic phase, interference fringes such as a schlieren texture, a threadlike texture, a sand-like texture, and a droplet texture are observed. On the other hand, in the case where the nematic phase is not formed (in the case of isotropic phase), light is not transmitted due to the optical isotropy of the resin and thus the interference fringes are not observed. In the case of the isotropic phase, the visual field is observed as a dark region. In the epoxy resin composition including the constituents [B] and [C] according to the present invention, appearance in which the phase transition from the nematic phase to the isotropic phase proceeds with the temperature rising is observed. At this time, rapid phase transition from the nematic phase to the isotropic phase may fail to occur and the phase transition may proceed through the coexistence state of the nematic phase and the isotropic phase. Hereinafter, a specific method for determining the nematic-isotropic phase transition temperature will be described. Polarizing microscope observation images of the epoxy resin composition including the constituents [B] and [C] at a magnification of 300 times are obtained at intervals of five minutes during the temperature ramp process from 40°C to 190°C at a temperature ramp rate of 2

°C/min. The lowest temperature at which the ratio of the area occupied by the isotropic phase (the resin region where the interference fringes are not observed) becomes 40% or more relative to the area of the entire epoxy resin composition of the total of the nematic phase and the isotropic phase in the obtained images is defined as the nematic-isotropic phase transition temperature in Condition [I] according to the present invention. Here, in the case where a region other than the nematic phase or the isotropic phase, for example, a component insoluble to the constituent [B] and [C] is included, this insoluble component is not involved in the calculation of the area. Each of the areas can be calculated by binarizing the images.

The constituent [B] is an epoxy resin having the mesogenic structure in its molecules in order that the cured product of the epoxy resin composition in the prepreg and carbon fiber reinforced material according to the present invention has the high-order structure. The mesogenic structure (for example, a biphenyl group, a terphenyl group, a terphenyl-related group, an anthracene group, a group formed by bonding these groups with an azomethine group or an ester group) provides the formation of the high-order structure (also referred to as a periodic structure) derived from the mesogenic structure.

The constituent [B] is an epoxy resin having a structure represented by the following general formula (1).

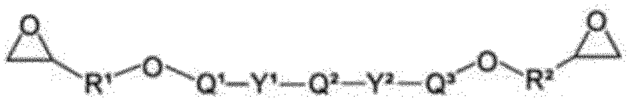

···(1)

In the general formula (1), $Q^1$, $Q^2$, and $Q^3$ each include one structure selected from a group (I). $R^1$ and $R^2$ in the general formula (1) each represent an alkylene group having a carbon number of 1 to 6. Z in the general formula (1) each independently represents an aliphatic hydrocarbon group having a carbon number of 1 to 8, an aliphatic alkoxy group having a carbon number of 1 to 8, a fluorine atom, a chlorine atom, a bromine atom, an iodine atom, a cyano group, a nitro group, or an acetyl group. n each independently represents an integer of 0 to 4. $Y^1$, $Y^2$, and $Y^3$ each in the general formula (1) and the group (I) represent a single bond or a group from a group (II).

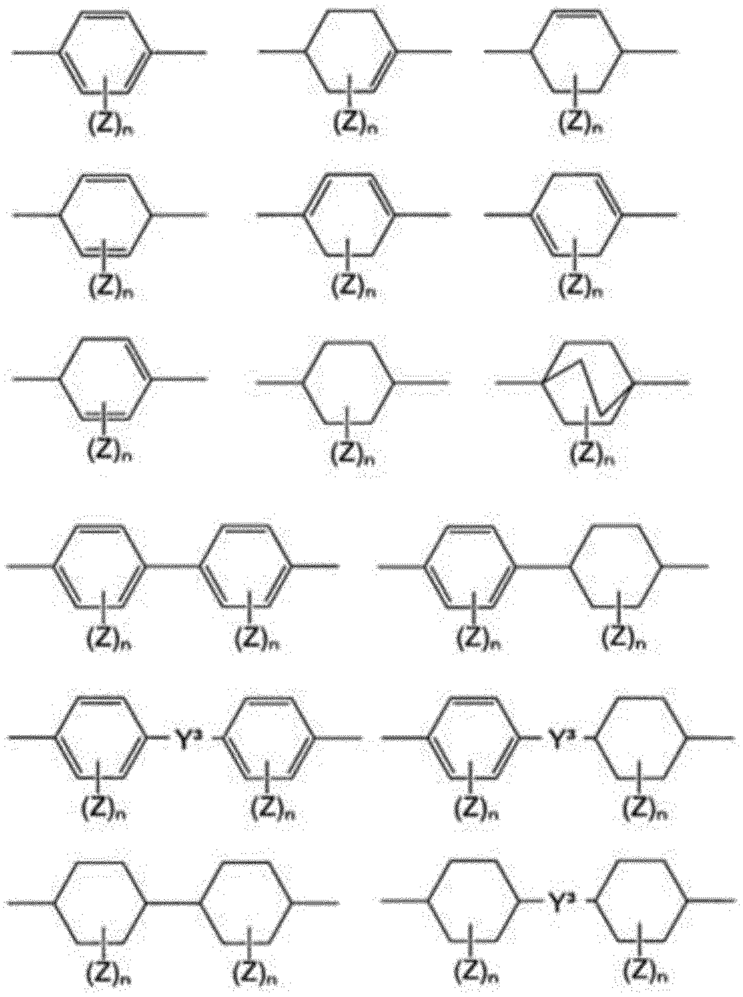

Group (I)

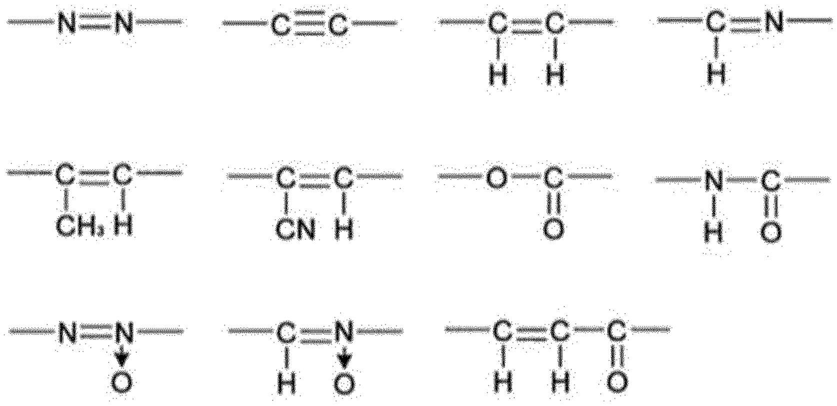

Group (II)

Z in the group (I) each is independently preferably an aliphatic hydrocarbon group having a carbon number of 1 to 4, an aliphatic alkoxy group having a carbon number of 1 to 4, a fluorine atom, a chlorine atom, a bromine atom, an iodine atom, a cyano group, a nitro group, or an acetyl group, more preferably a methyl group, an ethyl group, a methoxy group, an ethoxy group, or a chlorine atom, and further preferably a methyl group or an ethyl group. n in the group (I) each is independently preferably an integer of 0 to 2 and more preferably 0 or 1.

In the case where the constituent [B] is a liquid crystalline epoxy resin, as the ratio of the mesogenic structure in the constituent [B] becomes more, the resin more easily forms the high-order structure after curing. However, the excessive mesogenic structure results in high softening point and deterioration in the handleability. Therefore, the number of the mesogenic structures in the general formula (1) is particularly preferably two. Here, the softening point in the present invention refers to a temperature when the temperature of the sample poured in a ring is raised in a bath and the ball set to the sample intersects an optical sensor in accordance with the ring and boll method defined by JIS K7234

(1986).

$Q^1$, $Q^2$, and $Q^3$ in the general formula (1) including benzene rings provide a rigid structure of the constituent [B]. This allows the high-order structure to be easily formed and is advantageous for toughness improvement, which is preferable. $Q^1$, $Q^2$, and $Q^3$ in the general formula (1) including alicyclic hydrocarbon cause reduction in the softening point and thus the handleability is improved. Therefore, this is also a preferable aspect. The epoxy resin serving as the constituent [B] may be used singly or in combination of two or more of the epoxy resins.

The constituent [B] can be produced by the known methods. The production method described in, for example, Japanese Patent No. 4,619,770, Japanese Patent Application Laid-open No. 2005-206814, Japanese Patent Application Laid-open No. 2010-241797, Japanese Patent Application Laid-open No. 2011-98952, Japanese Patent Application Laid-open No. 2011-74366, and Journal of Polymer Science: Part A: Polymer Chemistry, Vol. 42, 3631 (2004) can be referred to.

Specific examples of the constituent [B] include 1,4-bis{4-(oxiranylmethoxy)phenyl}cyclohexane, 1-{3-methyl-4-(oxiranylmethoxy)phenyl-4-{4-(oxiranylmethoxy)phenyl} cyclohexane, 1,4-bis{4-(oxiranylmethoxy)phenyl}-1-cyclohexene, 1-{3-methyl-4-(oxiranylmethoxy)phenyl}-4-{4-(oxiranylmethoxy)phenyl}-1-cyclohexene, 1-{2-methyl-4-(oxiranylmethoxy)phenyl}-4-{4-(oxiranylmethoxy)phenyl}-1-cyclohexene, 1-{3-ethyl-4-(oxiranylmethoxy)phenyl}-4-{4-(oxiranylmethoxy)phenyl}-1-cyclohexene, 1-{2-ethyl-4-(oxiranylmethoxy)phenyl}-4-{4-(oxiranylmethoxy)phenyl}-1-cyclohexene, 1-{3-n-propyl-4-(oxiranylmethoxy)phenyl}-4-{4-(oxiranylmethoxy)phenyl}-1-cyclohexene, 1-{3-isopropyl-4-(oxiranylmethoxy)phenyl}-4-{4-(oxiranylmethoxy)phenyl}-1-cyclohexene, 1,4-bis{4-(oxiranylmethoxy)phenyl}-2-cyclohexene, 1-{3-methyl-4-(oxiranylmethoxy)phenyl}-4-{4-(oxiranylmethoxy)phenyl)-2-cyclohexene, 1,4-bis{4-(oxiranylmethoxy)phenyl}-2,5-cyclohexadiene, 1-{3-methyl-4-(oxiranylmethoxy)phenyl}-4-{4-(oxiranylmethoxy)phenyl}-2,5-cyclohexadiene, 1,4-bis{4-(oxiranylmethoxy)phenyl}-1,5-cyclohexadiene, 1-{3-methyl-4-(oxiranylmethoxy)phenyl}-4-{4-(oxiranylmethoxy)phenyl}-1,5-cyclohexadiene, 1,4-bis{4-(oxiranylmethoxy)phenyl}-1,4-cyclohexadiene, 1-{3-methyl-4-(oxiranylmethoxy)phenyl}-4-{4-(oxiranylmethoxy)phenyl}-1,4-cyclohexadiene, 1,4-bis{4-(oxiranylmethoxy)phenyl}-1,3-cyclohexadiene, 1-{3-methyl-4-(oxiranylmethoxy)phenyl}-4-{4-(oxiranylmethoxy)phenyl}-1,3-cyclohexadiene, 1,4-bis{4-(oxiranylmethoxy)phenyl}benzene, 1-{3-methyl-4-(oxiranylmethoxy)phenyl}-4-{4-(oxiranylmethoxy)phenyl)benzene, 1,4-phenylene-bis{4-(2,3-epoxypropoxy)benzoate}, 1,4-phenylene-bis{4-(2,3-epoxypropoxy)-2-methylbenzoate}, 1,4-phenylene-bis{4-(2,3-epoxypropoxy)-3-methylbenzoate}, 1,4-phenylene-bis{4-(2,3-epoxypropoxy)-3,5-dimethylbenzoate}, 1,4-phenylene-bis{4-(2,3-epoxypropoxy)-2,6-dimethylbenzoate}, 2-methyl-1,4-phenylene-bis{4-(2,3-epoxypropoxy)benzoate}, 2-methoxy-1,4-phenylene-bis(4-hydroxybenzoate), 2-methyl-1,4-phenylene-bis{4-(2,3-epoxypropoxy)-2-methylbenzoate}, 2-methyl-1,4-phenylene-bis{4-(2,3-epoxypropoxy)-3-methylbenzoate}, 2-methyl-1,4-phenylene-bis{4-(2,3-epoxypropoxy)-3,5-dimethylbenzoate}, 2-methyl-1,4-phenylene-bis{4-(2,3-epoxypropoxy)-2,6-dimethylbenzoate}, 2,6-dimethyl-1,4-phenylene-bis{4-(2,3-epoxypropoxy)benzoate}, 2,6-dimethyl-1,4-phenylene-bis{4-(2,3-epoxypropoxy)-3-methylbenzoate}, 2,6-dimethyl-1,4-phenylene-bis{4-(2,3-epoxypropoxy)-3,5-dimethylbenzoate}, 2,3,6-trimethyl-1,4-phenylene-bis{4-(2,3-epoxypropoxy)benzoate}, 2,3,6-trimethyl-1,4-phenylene-bis{4-(2,3-epoxypropoxy)-2,6-dimethylbenzoate}, 2,3,5,6-tetramethyl-1,4-phenylene-bis{4-(2,3-epoxypropoxy) benzoate}, 2,3,5,6-tetramethyl-1,4-phenylene-bis{4-(2,3-epoxypropoxy)-3-methylbenzoate}, 2,3,5,6-tetramethyl-1,4-phenylene-bis{4-(2,3-epoxypropoxy)-3,5-dimethylbenzoate}, 2-methyl-1,4-phenylene-bis{4-(3-oxa-5,6-epoxyhexyloxy)benzoate} 4-{4-(2,3-epoxypropoxy)phenyl}cyclohexyl-4-(2,3-epoxypropoxy)benzoate, 4-{4-(2,3-epoxypropoxy)phenyl}cyclohexyl-4-(2,3-epoxypropoxy)-2-methylbenzoate, 4-{4-(2,3-epoxypropoxy)phenyl}cyclohexyl-4-(2,3-epoxypropoxy)-3-methylbenzoate, 4-{4-(2,3-epoxypropoxy)phenyl}cyclohexyl-4-(2,3-epoxypropoxy)-3-ethylbenzoate, 4-{4-(2,3-epoxypropoxy)phenyl}cyclohexyl-4-(2,3-epoxypropoxy)-2-isopropylbenzoate, 4-{4-(2,3-epoxypropoxy)phenyl}cyclohexyl-4-(2,3-epoxypropoxy)-3,5-dimethylbenzoate, 1,4-bis{4-(3-oxa-5,6-epoxyhexyloxy)phenyl}-1-cyclohexene, 1-{4-(3-oxa-5,6-epoxyhexyloxy)-3-methylphenyl}-4-{4-(3-oxa-5,6-epoxyhexyloxy)phenyl}-1-cyclohexene, 1,4-bis{4-(5-methyl-3-oxa-5,6-epoxyhexyloxy)phenyl}-1-cyclohexene, 1-{4-(5-methyl-3-oxa-5,6-epoxyhexyloxy)-3-methylphenyl}-4-(4-(5-methyl-3-oxa-5,6-epoxyhexyloxy)phenyl}-1-cyclohexene, 1,4-bis{4-(4-methyl-4,5-epoxypentyloxy)phenyl}-1-cyclohexene, 1,4-bis{4-(3-oxa-5,6-epoxyhexyloxy)phenyl}benzene, 1-{4-(3-oxa-5,6-epoxyhexyloxy)-3-methylphenyl}-4-{4-(3-oxa-5,6-epoxyhexyloxy)phenyl}benzene, 1,4-bis{4-(5-methyl-3-oxa-5,6-epoxyhexyloxy)phenyl}benzene, 1-{4-(5-methyl-3-oxa-5,6-epoxyhexyloxy)-3-methylphenyl}-4-{4-(5-methyl-3-oxa-5,6-epoxyhexyloxy)phenyl}benzene, 1,4-bis{4-(4-methyl-4,5-epoxypentyloxy)phenyl}benzene, 1,4-bis{4-(3-oxa-5,6-epoxyhexyloxy)phenyl}cyclohexane, 1-{4-(3-oxa-5,6-epoxyhexyloxy)-3-methylphenyl}-4-{4-(3-oxa-5,6-epoxyhexyloxy)phenyl}cyclohexane, 1,4-bis{4-(5-methyl-3-oxa-5,6-epoxyhexyloxy)phenyl}cyclohexane, 1-{4-(5-methyl-3-oxa-5,6-epoxyhexyloxy)-3-methylphenyl}-4-{4-(5-methyl-3-oxa-5,6-epoxyhexyloxy)phenyl}cyclohexane, and 1,4-bis{4-(4-methyl-4,5-epoxypentyloxy)phenyl}cyclohexane. Of these compounds, 1-(3-methyl-4-oxiranylmethoxyphenyl)-4-(4-oxiranylmethoxyphenyl)-1-cyclohexene, 2-methyl-1,4-phenylene-bis{4-(2,3-epoxypropoxy)benzoate}, 4-{4-(2,3-epoxypropoxy)phenyl}cyclohexyl-4-(2,3-epoxypropoxy)benzoate, and 4-{4-(2,3-epoxypropoxy)phenyl}cyclohexyl-4-(2,3-epoxypropoxy)-3-methylbenzoate are particularly preferable from the viewpoints of the formation of the high-order structure after curing, the handleability, and easy availability of raw materials.

The constituent [B] may include a prepolymer in which a part of the epoxy resin having the structure represented

by the general formula (1) is partially polymerized with a hardener or the like. The epoxy resin having the structure represented by the general formula (1) generally tends to be crystallized and a large number of the epoxy resins require high temperature for impregnating the carbon fiber. Including the prepolymer in which a part of the epoxy resin having the structure represented by the general formula (1) and serving as the constituent [B] is polymerized tends to reduce the crystallization and thus the handleability becomes better. Therefore, this is a preferable aspect.

As a method for partially polymerizing the epoxy resin having the structure represented by the general formula (1), polymerization may be carried out using anionic polymerization catalysts such as tertiary amines and imidazole type compounds and cationic polymerization catalysts such as Lewis acid including a boron trifluoride amine complex or a prepolymerization agent having a functional group that can react with the epoxy resin may be used. In the case where the epoxy resin is partially polymerized, the method for using the prepolymerization agent is preferable because the molecular weight of the prepolymer to be produced is easily controlled. Excessively high molecular weight of the prepolymer results in reducing the cross-linking density of the resin included in the carbon fiber reinforced material and thus heat resistance and mechanical properties may deteriorate.

The prepolymerization agent for partially polymerizing the epoxy resin having a structure represented by the general formula (1) is not particularly limited as long as the prepolymerization agent is a compound having two to four active hydrogens that can react with the epoxy resin. Examples of the prepolymerization agent include a phenol compound, an amine compound, an amide compound, a sulfide compound, and an acid anhydride. Here, the active hydrogen refers to a hydrogen atom bonded to nitrogen, oxygen, or sulfur in an organic compound and having high reactivity. The prepolymerization agent having one active hydrogen results in reducing the cross-linking density of the cured product of the epoxy resin using the prepolymer and thus heat resistance and mechanical properties may deteriorate. The prepolymerization agent having five or more active hydrogens causes difficulty in control of the reaction when the prepolymer is formed from the epoxy resin and may cause gelation. As the prepolymerization agent, a phenol compound having two or three active hydrogens is particularly suitable due to gelation inhibition during prepolymer formation reaction and storage stability of the prepolymer.

Of the phenol compounds having two to four active hydrogen atoms, the phenol compound having one to two benzene rings is suitable because the structure of the prepolymer of the epoxy resin is rigid and thus the high-order structure is easily formed and toughness tends to be improved. In addition, the viscosity of the prepolymer and the epoxy resin composition including the constituent [B] including the epoxy resin having the structure represented by the general formula (1) and the hardener serving as the constituent [C] can be lowered and thus the handleability becomes excellent, which is suitable.

Examples of the phenol compound having two to three active hydrogens include catechol, resorcinol, hydroquinone, bisphenol A, bisphenol F, bisphenol G, bisphenol Z, tris(4-hydroxyphenyl)methane, and derivatives thereof. Examples of the derivatives include compounds in which the hydrogen in the benzene ring is substituted with an alkyl group having a carbon number of 1 to 8 or the like. These phenol compounds may be used singly or in combination of two or more of them.

The molecular weight of the prepolymer included in the constituent [B] is not particularly limited. From the viewpoint of the fluidity of the epoxy resin composition, the number-average molecular weight is preferably 15,000 or less, preferably 10,000 or less, and further preferably 350 to 5,000. The number-average molecular weight in the present invention refers to a conversion molecular weight with GPC (Gel Permeation Chromatography, also referred to as SEC: Size Exclusion Chromatography) in terms of polystyrene.

The method for partially polymerizing the epoxy resin having the structure represented by the general formula (1) to form the prepolymer is not particularly limited. For example, the prepolymer can be synthesized by dissolving the epoxy resin and the above-described prepolymerization agent in a synthetic solvent and stirring the mixture with heating. A catalyst may be used in the range where the gelation does not occur during the prepolymer formation reaction. The prepolymer can be synthesized without using the solvent. However, the constituent [B] has a high melting point and thus high temperature is required for the prepolymer formation reaction without the solvent. Consequently, a method for synthesizing the prepolymer using the synthetic solvent is preferable from the viewpoint of safety.

The constituent [B] including the prepolymer tends to inhibit crystallization and thus the handleability becomes excellent. However, an excessive content of the prepolymer results in excessively high melt viscosity of the epoxy resin composition including the constituent [B] and the constituent [C] and thus the epoxy resin composition may be difficult to be impregnated to the carbon fiber. In the case where the constituent [B] includes the prepolymer, the content of the prepolymer is preferably 80 parts by mass or less and more preferably in the range of 5 parts by mass to 60 parts by mass relative to 100 parts by mass of the total of the prepolymer included in the constituent [B] and the epoxy resin having the structure represented by the general formula (1). The ratio of the peak area originated from the prepolymer in the area of the peak originated from the entire epoxy resin in the measurement with the above-described GPC or HPLC (High Performance Liquid Chromatography) (Peak area originated from prepolymer/Peak area originated from entire epoxy resin) is preferably 0.80 or less and more preferably in the range of 0.05 to 0.60.

The prepreg according to the present invention may include an epoxy resin in addition to the constituent [B],

a thermosetting resin other than the epoxy resin, and a copolymer of the epoxy resin and the thermosetting resin. Examples of the above-described thermosetting resin include an unsaturated polyester resin, a vinyl ester resin, an epoxy resin, a benzoxazine resin, a phenol resin, a urea resin, a melamine resin, and a polyimide resin. These resin compositions and compounds may be used singly or may be used by appropriately blending. At least, the blend of the epoxy resin and the thermosetting resin that do not exhibit the liquid crystallinity satisfies both fluidity of the resin and the heat resistance after curing.

As the epoxy resin other than the constituent [B], an epoxy resin in a liquid state at room temperature (25°C) is suitably used. The term "liquid state" means that a thermosetting resin is defined as the liquid state when a metal piece having a specific gravity of 7 or more and having the same temperature state as the temperature state of the thermosetting resin to be measured is put on the thermosetting resin and the metal piece is immediately sunk under the thermosetting resin. Examples of the metal piece having a specific gravity of 7 or more include iron (steel), cast iron, and copper.

Of the epoxy resins other than the constituent [B], a glycidyl ether epoxy resin using phenol as a precursor is preferably used as the epoxy resin having difunctionality. Examples of such an epoxy resin include a bisphenol A epoxy resin, a bisphenol F epoxy resin, a bisphenol S epoxy resin, a naphthalene epoxy resin, a biphenyl epoxy resin, a urethane modified epoxy resin, a hydantoin epoxy resin, and a resorcinol epoxy resin.

Of the epoxy resins other than the constituent [B], examples of a glycidyl amine epoxy resin having at least a tri-functionality include epoxy resins such as a diaminodiphenylmethane epoxy resin, a diaminodiphenyl sulfone epoxy resin, an aminophenol epoxy resin, a metaxylenediamine epoxy resin, a 1,3-bis(aminomethyl)cyclohexane epoxy resin, and an isocyanurate epoxy resin. Of these compounds, the diaminodiphenylmethane epoxy resin and the aminophenol epoxy resin are particularly preferably used due to well-balanced physical properties.

Examples of the glycidyl ether epoxy resin having at least a tri-functionality include epoxy resins such as a phenol novolac epoxy resin, an orthocresol novolac epoxy resin, a tris(hydroxyphenyl)methane epoxy resin, and a tetraphenylolethane epoxy resin.

In the case where an epoxy resin in the liquid state at 25°C is included as the epoxy resin other than the constituent [B], the constituent [B] is preferably included in the range of 80 parts by mass to 99 parts by mass relative to 100 parts by mass of the entire epoxy resin in the prepreg, and the epoxy resin in the liquid state at 25°C is preferably included in the range of 1 part by mass to 20 parts by mass relative to 100 parts by mass of the entire epoxy resin in the prepreg. The epoxy resins included in these ranges allows smectic structure formation inhibition in the cured product of the epoxy resin composition to be difficult to occur and, in addition, the viscosity of the epoxy resin composition to be lowered. Consequently, the carbon fiber reinforced material having improved reactivity of the resin with the sizing agent existing on the surface of the constituent [A] and having excellent adhesion strength is obtained.

In addition, use of an epoxy resin having a structure represented by the general formula (2) is also preferable. The epoxy resin having the biphenyl structure in its molecule provides the characteristics in that the epoxy resin is easily compatible with the constituent [B] and the phase separation in the epoxy resin composition and in the cured product of the epoxy resin composition is difficult to occur.

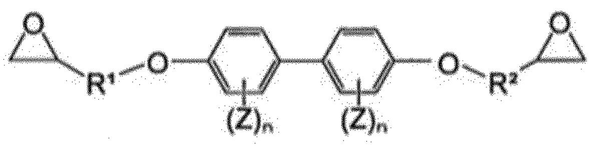 ···(2)

$R^1$ and $R^2$ in the general formula (2) each represent an alkylene group having a carbon number of 1 to 6. Z in the group (I) each independently represents an aliphatic hydrocarbon group having a carbon number of 1 to 8, an aliphatic alkoxy group having a carbon number of 1 to 8, a fluorine atom, a chlorine atom, a bromine atom, an iodine atom, a cyano group, a nitro group, or an acetyl group. n each independently represents an integer of 0 to 4.

In the case where the epoxy resin composition includes the epoxy resin represented by the general formula (2), the content thereof is preferably 1 part by mass to 30 parts by mass and further preferably 1 part by mass to 20 parts by mass relative to 100 parts by mass of the total of the epoxy resin having the structure represented by the general formula (1), the prepolymer, and the other epoxy resins.

The hardener serving as the constituent [C] according to the present invention is a hardener for the epoxy resin and a compound having an active group that can react with the epoxy group. Specific examples of the hardener include dicyandiamide, an aromatic polyamine, aminobenzoic acid esters, various acid anhydrides, a phenol novolac resin, a cresol novolac resin, a polyphenol compound, an imidazole derivative, an aliphatic amine, tetramethylguanidine, a thiourea-added amine, a carboxylic acid anhydride such as methyl hexahydrophthalic acid anhydride, a carboxylic amide, an organic acid hydrazide, polymercaptan, and a Lewis acid complex such as a boron trifluoride ethylamine complex. These hardeners may be used singly or in combination of two or more of them.

Form the viewpoint that the epoxy resin composition including the constituent [B] and the constituent [C] has the nematic-isotropic phase transition temperature in the range of 130°C to 180°C, the hardener serving as the constituent [C] according to the present invention is preferably selected in consideration of the combination with the constituent [B]. For example, in the case where the reaction of the hardener serving as the constituent [C] is excessively fast even when the nematic-isotropic phase transition temperature of the constituent [B] alone is in the range of 130°C to 180°C, the epoxy resin composition including the constituent [B] and the constituent [C] does not always have the nematic-isotropic phase transition temperature in the range of 130°C to 180°C. This is because the curing reaction may instantly proceed at the moment when the constituent [C] dissolves in the constituent [B] or reaches the reaction start temperature, the nematic phase (the liquid crystal structure) that is formed from the epoxy resin composition including the constituents [B] and [C] may be maintained, and thus the nematic-isotropic phase transition temperature as the epoxy resin composition may rise. As a result, the reduction in the resin viscosity is insufficient and the epoxy resin composition insufficiently reacts with the sizing agent on the surface of the constituent [A]. Consequently, the interfacial adhesion property between the epoxy resin composition and the carbon fiber is not improved.

Use of the aromatic polyamine as the constituent [C] provides the cured epoxy resin having excellent heat resistance and thus is preferable. Of the hardeners for the epoxy resin, the aromatic polyamine provides slow curing reaction and thus a time for forming the liquid crystal associated with the progress of the above-described curing of the epoxy resin composition including the constituents [B] and [C] becomes long. Consequently, the high-order structure is easily formed and thus the aromatic polyamine is suitable. Of the aromatic polyamines, various isomers of diaminodiphenyl sulfone provide the cured epoxy resin having excellent heat resistance and, in addition, provide slow curing reaction compared with other aromatic polyamines. Therefore, the above-described liquid crystal formation associated with the progress of the curing of the epoxy resin composition including the constituents [B] and [C] easily occurs. Consequently, the ratio of the high-order structure existing in the cured resin after curing can be increased and thus the various isomers of diaminodiphenyl sulfone are particularly suitable.

In addition, use in combination of dicyandiamide and a urea compound such as 3,4-dichlorophenyl-1,1-dimethylurea or the imidazole type compounds as the hardener provides a fiber reinforced material having high heat resistance and water resistance while curing at relatively low temperature. Curing of the epoxy resin using the acid anhydride provides a cured product having low water absorption coefficient compared with the curing using the amine compound. As other aspect, a latent product of these hardeners, for example, a microencapsulation product, is used, whereby the storage stability of the prepreg, particularly a tackiness property or a draping property, is difficult to change even if the prepreg is allowed to stand at room temperature.

The optimum value of the amount of the hardener serving as the constituent [C] to be added varies depending on the kind of the epoxy resin and the hardener. For example, the aromatic polyamine hardener is preferably added so as to be stoichiometrically equivalent. However, determining the ratio of the active hydrogen amount of the aromatic amine hardener to the epoxy group amount of the epoxy resin to be 0.7 to 1.0 may result in providing a resin having higher modulus than the modulus obtained in the case of using the hardener in equivalent and thus this ratio is a preferable aspect. On the other hand, determining the ratio of the active hydrogen amount of the aromatic polyamine hardener to the epoxy group amount of the epoxy resin to be 1.0 to 1.6 may result in providing a resin having high elongation in addition to increase in the curing rate and thus this ratio is also a preferable aspect. Consequently, the ratio of the active hydrogen amount of the hardener to the epoxy group amount of the epoxy resin is preferably in the range of 0.7 to 1.6.

Examples of the commercially available product of the aromatic polyamine hardener include SEIKACURE S (manufactured by Wakayama Seika Kogyo Co., Ltd.), 3,3'-DAS (manufactured by Mitsui Chemicals, Inc.), "Lonzacure (registered trademark)" M-DEA (manufactured by Lonza Corporation), "Lonzacure (registered trademark)" M-DIPA (manufactured by Lonza Corporation), and "Lonzacure (registered trademark)" M-MIPA (manufactured by Lonza Corporation).

Examples of the commercially available product of dicyandiamide include DICY-7 and DICY-15 (both products are manufactured by Mitsubishi Chemical Corporation). The derivative of the dicyandiamide is a reaction product made by bonding dicyandiamide to various compounds. Examples of the reaction product include a reaction product with an epoxy resin, a reaction product with a vinyl compound, and a reaction product with an acrylic compound.

Each hardener may be used by combining with a curing accelerator or other hardeners for an epoxy resin. Examples of the curing accelerator to be used in combination include urea type compounds, imidazole type compounds, and Lewis acid catalysts.

For such urea compounds, for example, N,N-dimethyl-N'-(3,4-dichlorophenyl)urea, toluene-bis(dimethylurea), 4,4'-methylenebis(phenyldimethylurea), and 3-phenyl-1,1-dimethylurea may be used. Examples of the commercially available product of such urea compounds include DCMU99 (manufactured by Hodogaya Chemical Co., Ltd.) and "Omicure (registered trademark)" 24, 52, and 94 (all products are manufactured by CVC SpecialtyChemicals, Inc.).

Examples of the commercially available product of imidazole type compounds include 2MZ, 2PZ, and 2E4MZ (all products are manufactured by SHIKOKU CHEMICALS CORPORATION). Examples of Lewis acid catalysts include a complex of boron halide and a base such as a boron trifluoride piperidine complex, a boron trifluoride monoethylamine complex, a boron trifluoride triethanolamine complex, and a boron trichloride octylamine complex.

Preferable examples of the organic acid hydrazide compound include 3-hydroxy-2-naphthoic acid hydrazide, 2,6-naphthalenedicarbodihydrazide, salicylic acid hydrazide, terephthalic acid dihydrazide, and isophthalic acid dihydrazide from the viewpoints of a curing acceleration property and storage stability. These organic acid hydrazide compounds may be used by mixing and blending two or more organic acid hydrazide compounds, if necessary. Examples of the commercially available product of the organic acid hydrazide compound include 2,6-naphthalenedicarbodihydrazide (manufactured by Japan Finechem Inc.) and isophthalic acid dihydrazide (manufactured by Otsuka Chemical Co., Ltd.).

In addition, the product of the preliminary reaction of these epoxy resins and hardeners or a part of these compounds may be blended into the epoxy resin composition. This method may be effective for viscosity control and improvement in storage stability.

In the present invention, the minimum viscosity of the epoxy resin composition including the constituents [B] and [C] at 130°C to 150°C is preferably within a range of 0.1 Pa·s to 10.0 Pa·s and further preferably within the range of 0.1 Pa·s to 2.0 Pa·s. The minimum viscosity within this range allows the epoxy resin composition to be sufficiently reacted with the sizing agent applied onto the surface of the constituent [A] to give the carbon fiber reinforced material having excellent adhesiveness between the resin and the carbon fiber.

Although the significant improvement of Mode I interlaminar toughness and Mode II interlaminar toughness of the prepreg according to the present invention can be expected due to the constituents [A] to [C] alone, arrangement of the constituent [D] at the position described below allows, in particular, Mode II interlaminar toughness to be significantly improved. At this time, the prepreg has a configuration in which the epoxy resin composition including the constituents [B], [C], and [D] is impregnated to the constituent [A] and the constituent [D] is localized in the vicinity of one surface or both surfaces. The phrase "localized in the vicinity of the surface" means a state where 90% or more of the constituent [D] exists in the depth range from the surface of the prepreg to a depth of 20% of the prepreg thickness. This existence ratio can be evaluated by, for example, the following method. Specifically, a plate-like cured prepreg is prepared by sandwiching the prepreg between two polytetrafluoroethylene resin plates having smooth surfaces to be closely attached and causing gelation of the prepreg and curing the prepreg by gradually raising temperature to the curing temperature over 7 days. A photomicrograph of the section of the obtained cured product is taken. Using this section photograph, in the case where the constituent [D] exists at both surfaces of the prepreg, respective two lines in parallel with the surface of the prepreg are drawn at a depth position of 20% from the surface of the cured prepreg when the thickness of the prepreg is determined to be 100%. Subsequently, each of the total area of the constituent [D] existing between the surface of the prepreg and the above-described line and the total area of the constituent [D] existing across the thickness of the prepreg is determined. The existence ratio of the constituent [D] existing in a depth of 20% from both surfaces of the prepreg relative to 100% of the prepreg thickness is calculated. In the case of the prepreg in which the constituent [D] exists at one surface, a line in parallel with the surface of the prepreg is drawn in one surface of the cured prepreg at a depth position of 20% from the surface of the cured prepreg. Subsequently, each of the total area of the constituent [D] existing between the surface of the prepreg and the above-described line and the total area of the constituent [D] existing across the thickness of the prepreg is determined. The existence ratio of the constituent [D] existing in a depth of 20% from the surfaces of the prepreg relative to 100% of the prepreg thickness is calculated. Here, the area of the constituent [D] is determined by hollowing out the part of the constituent [D] from the section photograph and converting from the hollowed-out area. In addition, the area can be measured using generally used image processing software.

In the case where the constituent [D] is included as the prepreg according to the present invention, the carbon fiber reinforced material obtained by laminating and curing the prepreg includes carbon fiber layers including the cured product of the epoxy resin composition including the constituents [B] and [C] and the constituent [A] and an interlaminar resin layer placed between adjacent carbon fiber layers and including the cured product of the epoxy resin composition including the constituents [B] and [C] and the constituent [D]. The carbon fiber reinforced material has at least two or more carbon fiber layers and has a configuration in which the carbon fiber layers and the interlaminar resin layers are alternately placed. In the laminate configuration, the uppermost face and the lowermost face may be the carbon fiber layers or may be the resin layers made of the cured product of the resin composition.

The term "interlaminar resin layer" means a region that uniformly has an appropriate interlaminar thickness between the adjacent carbon fiber layers. In this region, the constituent [A] is not included. The phrase "uniformly has an appropriate interlaminar thickness" means that no regions having excessively thin or thick thickness exist and, in particular, the ratio of the region where the interlaminar resin layer thickness is less than 1 μm and thus the interlaminar resin layer is not substantially secured is 30% or less.

In the case where the constituent [D] is included as the prepreg according to the present invention, the carbon fiber reinforced material made by laminating and curing the prepregs has the configuration in which the constituent [D] included in the carbon fiber reinforced material is localized in the interlaminar resin layer. The term "localization" means that 90% or more of the constituent [D] exists in the interlaminar resin layer out of 100% of the constituent [D] blended in the prepreg. The localization of the constituent [D] can be confirmed by the following method. The carbon fiber reinforced material is cut in a direction perpendicular to the carbon fiber and the section is polished. Thereafter, the

photograph of the section is taken in a magnification of 200 times or more under an optical microscope. In randomly selected region on the photograph, a line drawn in parallel to the fiber layer so that the volume content ratio of the carbon fiber (here, this represents an area content ratio because of the section) is 50% and averaged across a length of 1,000 μm is determined to be a boundary between the fiber layer region and the interlaminar resin layer. Each of the areas is calculated by cutting out the constituent [D] in the fiber layer region and the constituent [D] in the interlaminar resin layer region on the photograph using image processing. The localization ratio of the constituent [D] included in the carbon fiber reinforced material can be determined from the ratio of the areas.

The lower limit of the average thickness of the interlaminar resin layer is preferably 5 μm or more and more preferably 10 μm or more. The upper limit of the average thickness of the interlaminar resin layer is preferably 100 μm or less and more preferably 70 μm or less. An excessively thin thickness of the interlaminar resin layer may result in an insufficient effect for improving Mode II interlaminar toughness, whereas an excessively thick thickness of the interlaminar resin layer may cause the volume content of the carbon fiber to be reduced and thus the mechanical properties to deteriorate. Such an interlaminar resin layer thickness can be measured by, for example, the following method. The carbon fiber reinforced material is cut in a direction perpendicular to the carbon fiber and the section is polished. Thereafter, the photograph of the section is taken in a magnification of 200 times or more under an optical microscope. In randomly selected region on the photograph, a line drawn in parallel to the fiber layer so that the volume content ratio of the carbon fiber (here, this represents an area content ratio because of the section) is 50% is used as a boundary between the fiber layer region and the interlaminar resin layer region. An averaged boundary line is drawn across a length of 1,000 μm and the distance therebetween is determined to be the interlaminar resin layer thickness.

The constituent [D] is the necessary component for forming the interlaminar resin layer when the carbon fiber reinforced material is produced using the constituents [A], [B], and [C]. The form and the type of the substance such as an organic substance and an inorganic substance of the constituent [D] are not particularly limited as long as the constituent [D] acts as a spacer for forming the interlaminar resin layer. The carbon fiber reinforced material according to the present invention has remarkably high interlaminar toughness by forming the highly tough interlaminar resin layer including the constituents [B] and [C].

The constituent [D] insoluble in the constituent [B] is preferable because the interlaminar resin layer can be stably formed even when various molding conditions and curing temperatures are used. The phrase "insoluble in the constituent [B]" means that [D] is not substantially dissolved when the epoxy resin composition made of the constituent [B] in which the constituent [D] is dispersed is heated and cured. For example, this phrase indicates that clear boundary between the epoxy resin composition and the constituent [D] can be observed by using an optical microscope or a transmission electron microscope without substantial shrink of the component from the original size in the epoxy resin composition.

The volume ratio of the constituent [D] per interlaminar resin layer is preferably 10% to 80%, more preferably 15% to 70%, and further preferably 20% to 60% from the viewpoint of the mechanical properties of the carbon fiber reinforced material made by laminating and curing the prepregs according to the present invention. The volume ratio of the constituent [D] per interlaminar resin layer is determined to be a value calculated by the following method. The carbon fiber reinforced material is cut in a direction perpendicular to the carbon fiber and the section is polished. Thereafter, the photograph of the section is taken in a magnification of 200 times or more under an optical microscope. On the photograph, the region of the constituent [D] and the other regions (constituents [B] and [C] and the like) are divided binarized across a length of 200 μm in a direction of the inner surface for one randomly selected interlaminar resin layer in accordance with the above-described definition and the region of the constituent [D] is hollowed out to calculate the area. The area ratio of the constituent [D] per interlaminar resin layer is calculated from the area ratio in each of the regions. The average value of the values obtained from 20 times of the above-described operations is defined as the volume ratio of the constituent [D] per interlaminar resin layer.

The form of the constituent [D] may be various forms such as particles, a nonwoven fabric, a short fiber, a knitting, a knit, a film, and a veil. The constituent [D] is particularly preferably the particle that retains the form from the viewpoint of providing stable adhesion strength and impact resistance when the carbon fiber reinforced material is prepared.

For example, in the case where the constituent [D] has the particle form, the shape of the particles may be a spherical shape as described in Japanese Patent Application Laid-open No. H1-110537, non-spherical particles as described in Japanese Patent Application Laid-open No. H1-110536, or porous particles as described in Japanese Patent Application Laid-open No. H5-115. The spherical shape is the preferable form in that viscoelastic properties are excellent due to not deteriorating the flow properties of the resin and provides high impact resistance due to not having the starting point of stress concentration. In the case where the constituent [D] has the particle form, the particles are required to be contained in 3% by mass to 40% by mass, preferably contained in 4% by mass to 30% by mass, and further preferably contained in 5% by mass to 20% by mass in the epoxy resin composition. In the present specification, the term "% by mass" refers to mass percentage. In the case where the content of the constituent [D] is low, the interlaminar resin layer is not sufficiently formed in the carbon fiber reinforced material obtained by laminating and curing the prepregs

and thus improvement effect in Mode II interlaminar toughness is insufficient. On the other hand, in the case where the content is more than 40% by mass, the function may fail to be achieved due to reduction in the interlaminar adhesion strength. In the case where the constituent [D] has the particle form, in order to achieve the object disclosed in the present specification, the number average particle diameter of the particles is preferably in the range of 1 μm to 100 μm, more preferably in the range of 5 μm to 40 μm, and further preferably in the range of 10 μm to 30 μm. Particles having an excessively small number average particle diameter cause the particles to be penetrated between the fibers of the carbon fiber and may deteriorate impact resistance and other mechanical properties. Particles having an excessively large number average particle diameter cause the arrangement of the carbon fiber to be disturbed due to existence of particles having a large diameter and the thickness of the carbon fiber reinforced material obtained by laminating the prepregs to be thickened. Consequently, the volume ratio of the fiber may be relatively lowered and thus the mechanical properties may deteriorate. Here, as the number average particle diameter, a value obtained by observing the constituent [D] in the magnification of 200 times using a laser microscope (Ultra Deep Color 3D Shape Measurement Microscope VK-9510, manufactured by KEYENCE CORPORATION), measuring the diameter of the circle circumscribed to the particle for arbitrary 50 or more particles, and thereafter averaging the measured diameters is used. The material may be inorganic particles or organic particles. For example, thermoplastic resin particles, thermosetting resin particles, thermosetting rubber particles, crosslinked particles, silica particles, carbon black particles, carbon nanotubes, and metal particles may be used.

Of these particles, the thermoplastic resin particles are particularly preferable from the viewpoint of a high toughness material. Specific examples include polyimide, polyamide, polyamideimide, polyphthalamide, polyetherimide, polyetherketone, polyetheretherketone, polyetherketoneketone, polyaryletherketone, polyethersulfone, polyethersulfone, polyphenylene sulfide, liquid crystal polymers, and the derivatives thereof. In addition, the crosslinked particles of the above-described resins such as crosslinked polyethersulfone-polyetherethersulfone particles are also effective. Moreover, the above-described resin particles may be used in combination of two or more types of the resin particles.

Of these resins, polyamide is preferably used due to high elongation, toughness, and adhesiveness to the matrix resin. Examples of the polyamide include polyamide obtained by the polycondensation of a lactam having a three or more membered ring, a polymerizable aminocarboxylic acid, a dibasic acid and a diamine or the salts thereof, or a mixture of these compounds. Polyamide having a glass transition temperature in the range of 40°C to 300°C is preferable.

Examples of the polyamide having a glass transition temperature in the range of 40°C to 300°C include polycapramide (Nylon 6), polyhexamethyleneterephthalamide (Nylon 6T), polynonaneterephthalamide (Nylon 9T), polydodecamide (Nylon 12), polyhexamethyleneadipamide (Nylon 66), poly-m-xyleneadipamide (Nylon MXD), a copolymer of 3,3'-dimethyl-4,4'-diaminodicyclohexylmethane, isophthalic acid, and 1,2-aminododecanoic acid ("Grilamid (registered trademark)" TR55, manufactured by EMS-CHEMIE AG.), a copolymer of 3,3'-dimethyl-4,4'-diaminodicyclohexylmethane and dodecanedioic acid ("Grilamid (registered trademark)" TR90, manufactured by EMS-CHEMIE AG.), a mixture of the copolymer of 3,3'-dimethyl-4,4'-diaminodicyclohexylmethane, isophthalic acid, and 1,2-aminododecanoic acid and the copolymer of 3,3'-dimethyl-4,4'-diaminodicyclohexylmethane and dodecanedioic acid ("Grilamid (registered trademark)" TR70LX, manufactured by EMS-CHEMIE AG.), and a copolymer of 4,4'-diaminodicyclohexylmethane and dodecanedioic acid "Trogamid (registered trademark)" CX7323, manufactured by Degussa AG). Of these polyamides, from the viewpoint that the carbon fiber reinforced material having excellent moisture and heat resistance and solvent resistance in addition to impact resistance, Mode I interlaminar toughness, and Mode II interlaminar toughness when the carbon fiber reinforced material is prepared can be obtained, the polyamides such as the copolymer of 3,3'-dimethyl-4,4'-diaminodicyclohexylmethane, isophthalic acid, and 1,2-aminododecanoic acid ("Grilamid (registered trademark)" TR55, manufactured by EMS-CHEMIE AG.), the copolymer of 3,3'-dimethyl-4,4'-diaminodicyclohexylmethane and dodecanedioic acid ("Grilamid (registered trademark)" TR90, manufactured by EMS-CHEMIE AG.), the mixture of the copolymer of 3,3'-dimethyl-4,4'-diaminodicyclohexylmethane, isophthalic acid, and 1,2-aminododecanoic acid and the copolymer of 3,3'-dimethyl-4,4'-diamino dicyclohexylmethane and dodecanedioic acid ("Grilamid (registered trademark)" TR70LX, manufactured by EMS-CHEMIE AG.), and the copolymer of 4,4'-diaminodicyclohexylmethane and dodecanedioic acid "Trogamid (registered trademark)" CX7323, manufactured by Degussa AG) are preferable.

Subsequently, the case where the form of the constituent [D] is the nonwoven fabric will be described. The production method of the nonwoven fabric is roughly divided into direct fabric production at spinning and fabric production of post processing and the nonwoven fabric can be obtained by these methods. Examples of the direct fabric productions at spinning include a spun-bond method, a melt-blown method, and a flash-spinning method. These methods are properly selectively used depending on the resin viscosity. In the case where the constituent [D] is the nonwoven fabric, the nonwoven fabric is required to be contained in 3% by mass to 40% by mass in the epoxy resin composition. The content is preferably 4% by mass to 30% by mass and further preferably 5% by mass to 20% by mass. The epoxy resin composition having a low content of the constituent [D] results in insufficient formation of the interlaminar resin layer in the carbon fiber reinforced material obtained by laminating and curing the prepregs and thus the effect for improving Mode II interlaminar toughness is not obtained. On the other hand, the epoxy resin composition having a high content of the constituent [D] results in a thick interlaminar resin layer and thus the content ratio of the carbon fiber relatively decreases.

Consequently, the mechanical properties of the obtained carbon fiber reinforced material deteriorate. The material of the nonwoven fabric may be an organic substance such as a thermoplastic resin fiber or may be an inorganic substance such as a glass fiber, a carbon fiber, and a silicon carbide fiber. Similar to the case of the particles, the thermoplastic resin is preferable from the viewpoint of the high toughness material. Specific examples include polyimide, polyamide, polyamideimide, polyphthalamide, polyetherimide, polyetherketone, polyetheretherketone, polyetherketoneketone, polyaryletherketone, polyethersulfone, polyphenylene sulfide, liquid crystal polymers, and the derivatives thereof. The above-described resin particles may be used in combination of two or more types of the resins. Of these resins, polyamide is preferably used due to high elongation, toughness, and adhesiveness with the matrix resin. Examples of the polyamide include polyamide obtained by the polycondensation of a lactam having a three or more membered ring, a polymerizable aminocarboxylic acid, a dibasic acid and a diamine or the salts thereof, or a mixture of these compounds.

Subsequently, the case where the form of the constituent [D] is the short fiber will be described. As the short fiber, a short fiber made by cutting monofilaments or the bundle of the monofilaments to form a short fiber is suitably used. The short fibers having a constant fiber length are preferable. However, the short fiber is not necessarily limited thereto. The term "short fiber" means a fiber having an average fiber length of 30 mm or less. As the specific fiber length of the short fiber, an average fiber length in the range of 1 mm or more and 20 mm or less is preferable and an average fiber length in the range of 2 mm or more and 15 mm or less is more preferable. The short fiber having an average fiber length of 1 mm or less results in the insufficient network structure of the fiber and causes the strength between layers to be deteriorated. Consequently, the carbon fiber reinforced material has fragile layers and thus the mechanical properties of the obtained carbon fiber reinforced material deteriorate. On the other hand, as the average fiber length becomes longer, the thickness of between the layers becomes thicker. Therefore, the mechanical properties of the obtained carbon fiber reinforced material deteriorate. The term "average fiber length of the short fiber" refers to a value obtained by randomly selecting 400 fibers, measuring the lengths of these fibers using an optical microscope, and calculating from the average value from these measured lengths. The diameter the short fiber is preferably 40 $\mu$m or less and more preferably 20 $\mu$m or less.

In the case where the constituent [D] is the short fiber, the short fiber is required to be contained in 3% by mass to 40% by mass in the epoxy resin composition. The content is preferably 4% by mass to 30% by mass and further preferably 5% by mass to 20% by mass. The epoxy resin composition having a low content of the constituent [D] results in insufficient formation of the interlaminar resin layer in the carbon fiber reinforced material obtained by laminating and curing the prepregs and thus the effect for improving Mode II interlaminar toughness is not obtained. On the other hand, the epoxy resin composition having a high content of the constituent [D] results in a thick interlaminar resin layer and thus the content ratio of the carbon fiber relatively decreases. Consequently, the mechanical properties of the obtained carbon fiber reinforced material deteriorate. In addition, at the time of preparing the prepreg, the short fiber may be used in a similar method to the method used for the particles or may be used as a previously formed mat-like short fiber (a short fiber web). The material of the short fiber may be an organic fiber or an inorganic fiber. As the organic fiber, what are called engineering plastics and super-engineering plastics such as polyaramid, polyester, polyacetal, polycarbonate, polyphenylene oxide, polyphenylene sulfide, polyarylate, polybenzimidazole, polyimide, polyetherimide, polysulfone, polyamide, and polyamideimide are preferable. Of these plastics, plastics having a functional group that can react with the epoxy resin such as an amino group, an amide group, and a phenolic hydroxy group are particularly preferable. Examples of the inorganic fiber include a carbon fiber, a glass fiber, and a silicon carbide fiber. As the carbon fiber, a carbon fiber subjected to sizing treatment is preferably used. As the sizing agent, a sizing agent made of a component having at least one functional group selected from an epoxy group, a hydroxy group, an acrylate group, an amide group, a carboxy group, and a carboxylic acid anhydride is preferably used.

In the prepreg according to the present invention, the constituent [D] as described above may be used singly or may be used in combination.

The prepreg according to the present invention can be produced by several methods.

The first method is a method for preparing a primary prepreg by impregnating a sheet-like carbon fiber with the epoxy resin composition from both sides or one side of the sheet-like carbon fiber using a film in which the epoxy resin composition including the constituents [B] and [C] is applied onto a release paper or the like, and spraying or attaching the constituent [D] to both sides or one side of the primary prepreg. Here, in the case where the constituent [D] is a sheet-like product into which the resin can be impregnated such as a porous film, a fabric, a mat, a nonwoven fabric, and a knitting, the epoxy resin composition can be previously impregnated and the resultant sheet-like product can be attached.

The second method is a method for preparing a primary prepreg by impregnating a sheet-like carbon fiber with the epoxy resin composition from both sides or one side of the sheet-like carbon fiber using a film in which the epoxy resin composition including the constituents [B] and [C] is applied onto a release paper or the like, and attaching a product prepared by spraying or attaching the constituent [D] onto the surface of another film in which the epoxy resin composition including the constituents [B] and [C] is applied onto a release paper or the like to both sides or one side of the primary prepreg.

The third method is a method for preparing a primary prepreg by impregnating a sheet-like carbon fiber with the epoxy resin composition from both sides or one side of the sheet-like carbon fiber using a film in which the epoxy resin composition including the constituents [B] and [C] is applied onto a release paper or the like, and attaching a film in which the epoxy resin composition made by kneading the constituents [B], [C], and [D] is applied onto a release paper or the like to both sides or one side of the primary prepreg.

The fourth method is a method for simultaneously attaching the epoxy resin composition including the constituents [B] and [C] and the constituent [D] to both sides or one side of the sheet-like carbon fiber. This method is applicable in the case where the constituent [D] is the sheet-like product (for example, a film, a fabric, a mat, a knitting, and a nonwoven fabric) or a thread-like product (for example, a long fiber, a spun yarn, and a tape-like film).

In the prepreg according to the present invention, in the case where the constituent [D] is further placed at the determined position in addition to the constituents [A] to [C], the interlaminar resin layer is formed by the cured product of the epoxy resin composition including the constituents [B] and [C] and having high resin toughness due to the formation of the high-order structure (the smectic structure) in the carbon fiber reinforced material prepared by laminating and curing the prepregs. Consequently, in particular, the significant improvement effect of Mode II interlaminar toughness is observed. At this time, the significant effect is expected when the cured product of the epoxy resin composition including the constituents [B] and [C] forms the high-order structure (the smectic structure). Therefore, the lower limit temperature of the nematic-isotropic phase transition may be about 20°C lower than that of Condition [I]. Specifically, the cured product of the resin composition including the constituents [B] and [C] forms the high-order structure by satisfying a Condition [I'] having the nematic-isotropic phase transition temperature in the range of 110°C to 180°C and thus significant improvement in Mode II interlaminar toughness is expected in addition to high Mode I interlaminar toughness.

In the present invention, a thermoplastic resin may also be used by dissolving the thermoplastic resin into the epoxy resin composition including the above-described constituents [B] and [C]. Use of the thermoplastic resin allows the tackiness property of the obtained prepreg to be controlled and the fluidity of the epoxy resin composition at the time of molding the carbon fiber reinforced material to be controlled and thus the thermoplastic resin is preferably used. As such a thermoplastic resin, the thermoplastic resin having a bond selected from the group consisting of a carbon-carbon bond, an amide bond, an imide bond, an ester bond, an ether bond, a carbonate bond, a urethane bond, a thioether bond, a sulfone bond, and a carbonyl bond in the main chain is generally preferable. This thermoplastic resin may have a partial cross-linked structure and may be crystalline or noncrystalline. In particular, it is suitable that at least one resin selected from the group consisting of polyamide, polycarbonate, polyacetal, polyphenylene oxide, polyphenylene sulfide, polyarylate, polyester, polyamideimide, polyimide, polyetherimide, polyimide having a phenyltrimethylindane structure, polysulfone, polyethersulfone, polyetherketone, polyetheretherketone, polyaramid, polyethernitrile, and polybenzimidazole is mixed with or dissolved into any of the epoxy resins included in the above-described epoxy resin composition.

Above all things, in order to obtain excellent heat resistance, the glass transition temperature (Tg) of the thermoplastic resin is at least 150°C or more and preferably 170°C or more. Use of the thermoplastic resin to be blended having a glass transition temperature of less than 150°C may be likely to cause deformation by heat when the carbon fiber reinforced material is used as a molded article. The thermoplastic resin having a terminal functional group such as a hydroxy group, a carboxy group, a thiol group, and an acid anhydride is preferably used because this thermoplastic resin can react with a cationic polymerizable compound. Specifically, "SUMIKAEXCEL (registered trademark)" PES3600P, "SUMIKAEXCEL (registered trademark)" PES5003P, "SUMIKAEXCEL (registered trademark)" PES5200P, and "SUMIKAEXCEL (registered trademark)" PES7600P (all products are manufactured by Sumitomo Chemical Company) and "Virantage (registered trademark)" VW-10200RFP and "Virantage (registered trademark)" VW-10700RFP (both products are manufactured by Solvay Advanced Polymers, LLC), which are commercially available products of polyethersulfone, can be used. In addition, examples of the thermoplastic resin include a copolymer oligomer of polyethersulfone and polyetherethersulfone as described in Japanese Translation of PCT International Application Publication No. JP-T-2004-506789, and "Ultem (registered trademark)" 1000, "Ultem (registered trademark)" 1010, and "Ultem (registered trademark)" 1040 (all products are manufactured by Solvay Advanced Polymers, LLC), which are commercially available products of polyetherimide. The oligomer refers to a relatively low molecular weight polymer in which about 10 to about 100 of the finite number of monomers are bonded.

In the present invention, an elastomer may be further blended to the above-described epoxy resin composition including the constituents [B] and [C]. Such an elastomer is blended for the purpose of forming a fine elastomer phase in the epoxy matrix phase after curing. This allows plane strain generated at the time of stress loading to the cured epoxy resin to be eliminated by forming fracture voids (cavitation) of the elastomer phase. As a result of inducing plastic deformation of the epoxy matrix phase, large energy absorption occurs. This leads to further improvement in the interlaminar toughness as the carbon fiber reinforced material.

The elastomer refers to a polymer material having domain having a glass transition temperature of less than 20°C. Examples of the elastomer include a liquid rubber, a solid rubber, cross-linked rubber particles, core-shell rubber particles, a thermoplastic elastomer, and a block copolymer having a block having a glass transition temperature of less than 20°C. Of these compounds, elastomers selected from the block copolymer having the block having a glass transition

temperature of less than 20°C and the rubber particles are preferable. This allows fine elastomer phase to be introduced while compatibility of the elastomer into the epoxy resin is being reduced to the minimum level and thus the interlaminar toughness as the carbon fiber reinforced material is significantly improved while the deterioration in heat resistance and the reduction in modulus are being prevented.

As the rubber particles, the cross-linked rubber particles and the core shell rubber particles in which a different kind of polymer is graft-polymerized onto the surface of the cross-linked rubber particles are preferably used from the viewpoints of the handleability and the like. The primary particle diameter of such rubber particles is preferably in the range of 50 nm to 300 nm and particularly preferably 80 nm to 200 nm. In addition, such rubber particles are preferably rubber particles that have excellent affinity to the epoxy resin to be used and do not cause secondary agglomeration during resin preparation and molding and curing.

As the commercially available products of the cross-linked rubber particles, FX501P made of the cross-linked product of a carboxy-modified butadiene-acrylonitrile copolymer (manufactured by JSR Corporation), CX-MN series made of acrylic rubber fine particles (manufactured by NIPPON SHOKUBAI CO., LTD.), and YR-500 series (manufactured by NIPPON STEEL & SUMIKIN MATERIALS CO., LTD.) can be used.

As the commercially available products of the core shell rubber particles, "Paraloid (registered trademark)" EXL-2655 made of a butadiene-alkyl methacrylate-styrene copolymer (manufactured by KUREHA CORPORATION), "Staphyloid (registered trademark)" AC-3355 and TR-2122 made of an acrylic ester-methacrylic ester copolymer (manufactured by Takeda Pharmaceutical Company), "PARALOID (registered trademark)" EXL-2611 and EXL-3387 (manufactured by Rohm & Haas Company), and "Kane Ace (registered trademark)" MX series (manufactured by KANEKA CORPORATION) made of a butyl acrylate-methyl methacrylate copolymer can be used.

The mass fraction of the carbon fiber in the prepreg according to the present invention is preferably 40% by mass to 90% by mass and more preferably 50% by mass to 80% by mass. Excessively low mass fraction of the carbon fiber results in excessively large mass of the obtained carbon fiber reinforced material and thus the advantage of the carbon fiber reinforced material excellent in specific strength and specific modulus may be impaired, whereas excessively high mass fraction of the carbon fiber is likely to cause defective impregnation of the epoxy resin composition and to provide the carbon fiber reinforced material having a large number of voids and thus the mechanical properties of the carbon fiber reinforced material may significantly deteriorate.

The prepreg according to the present invention can be suitably produced by a wet method in which the viscosity is lowered by dissolving the epoxy resin composition made of the constituents [B] and [C] and the like in a solvent such as methyl ethyl ketone and methanol to be impregnated to the carbon fiber and a hot melt method in which the viscosity of the epoxy resin composition is lowered by heating to be impregnated to the carbon fiber.

The wet method is a method in which the carbon fiber is immersed into the solution of the epoxy resin composition and thereafter is pulled out of the solution and the solvent is evaporated using an oven or the like to give the prepreg.

The hot melt method is a method in which the epoxy resin composition of which viscosity is lowered by heating is directly impregnated to the carbon fiber or a method for previously preparing a resin film made by applying the epoxy resin composition onto a sheet of release paper or the like, subsequently overlapping the resin film on both sides or one side of the carbon fiber, transferring the epoxy resin composition and impregnating the overlapped carbon fiber with the epoxy resin composition by subjecting the overlapped carbon fiber to heating and pressurizing to give the prepreg. In the hot melt method, substantially no solvent remains in the prepreg and thus this method is a preferable aspect.

In the case where the prepreg is produced by the hot melt method, the viscosity of the epoxy resin composition is preferably 0.01 Pa·s to 30 Pa·s based on the minimum viscosity measured in accordance with the method described below. The phrase "minimum viscosity of the epoxy resin composition" refers to the lowest value of a complex viscosity $\eta^*$ measured with a dynamic viscoelasticity measuring device using paralleled plates (ARES, manufactured by TA Instruments Inc.) under conditions of an angular frequency of 3.14 rad/s and a plate distance of 1 mm at a temperature ramp rate of 2 °C/minute in a temperature range of 40°C to 180°C.

The prepreg preferably has an amount of the carbon fiber per unit area of 50 g/$m^2$ to 1,000 g/$m^2$. The prepreg having such an amount of the carbon fiber of less than 50 g/$m^2$ is required to increase the number of the laminated layers in order to obtain the predetermined thickness when the carbon fiber reinforced material is molded and thus the operation may be complicated. On the other hand, the prepreg having such an amount of the carbon fiber of more than 1,000 g/$m^2$ tends to deteriorate the draping property of the prepreg.

As one example, the carbon fiber reinforced material of the present invention can be produced by a method of laminating the above-described prepregs according to the present invention in a predetermined form and molding the laminated prepregs by pressurizing and heating. As the method for applying heat and pressure, a press molding method, an autoclave molding method, a bag molding method, a wrapping tape method, and an internal pressure molding method are used. In particular, for the molding of the sporting goods, the wrapping tape method and the internal pressure molding method are preferably used.

The wrapping tape method is a method for winding the prepreg to a core metal such as a mandrel to mold a tube-like product made of the carbon fiber reinforced material and is a suitable method for producing a rod-like product

such as the shaft of a golf club and a fishing rod. More specifically, the wrapping tape method is a method for winding the prepreg to the mandrel, winding the wrapping tape made of a thermoplastic resin film on the outer side of the prepreg in order to fix the prepreg and to apply pressure, curing the epoxy resin composition by heating in an oven, and providing the tube-like product by removing the core metal.

The internal pressure molding method is a method for setting a preform formed by winding the prepreg to an internal pressure providing body such as a tube made of a thermoplastic resin into a mold and subsequently introducing high pressure gas into the internal pressure providing body to provide pressure and at the same time heating the mold to mold a tube-like product. This internal pressure molding method is particularly preferably used when complex shape products such as the shaft of a golf club, a bat, and rackets for tennis and badminton are molded.

In the case where the carbon fiber reinforced material is obtained by curing the laminated body of the prepreg according to the present invention, in addition to the above-described production methods, an out-of-autoclave method in which an expensive pressurization facility such as an autoclave is not used and the production is carried out by using a vacuum pump and an oven alone can also be used. In the case where the out-of-autoclave method is used, the viscosity of the epoxy resin composition at 30°C is preferably $1.0 \times 10^5$ Pa·s or more from the viewpoint of the handleability of the prepreg. The epoxy resin composition having an excessively low viscosity at 30°C may fail to prepare the resin film required for the preparation of the prepreg. In addition, the epoxy resin composition having an excessively low viscosity at 30°C causes the epoxy resin composition to be likely to be sunk in the unimpregnated part of the fibers in the prepreg at the time of the storage. This causes securing of the continuity of the unimpregnated part for the removal of a volatile component to be difficult, in addition to the tackiness property to be lost. Consequently, the effective removal of the volatile component is difficult and thus a large number of voids may be generated in the carbon fiber reinforced material at the time of the out-of-autoclave molding.

In addition, in the case where the carbon fiber reinforced material is obtained by curing the prepreg according to the present invention by the out-of-autoclave method, the minimum viscosity of the epoxy resin composition exists at 110°C or more. The minimum viscosity is preferably 0.1 Pa·s to 15 Pa·s and more preferably 0.3 Pa·s to 10 Pa·s. An excessively low minimum viscosity results in the excessive flow of the epoxy resin and thus the resin flows out from the prepreg at the time of curing the prepreg. In addition, the target resin ratio in the obtained carbon fiber reinforced material cannot be achieved. An excessively high minimum viscosity causes the resin viscosity due to which water vapor released from inside of the matrix resin and enclosed air at the time of the lamination can be removed to the outside of the molded panel during curing not to be secured. In addition, the impregnation of the epoxy resin composition to the unimpregnated part of the fibers during molding is insufficient and thus the unimpregnated part of the fiber forms unfilled spaces. Consequently, a large number of voids are formed in the obtained carbon fiber reinforced material.

In the case where the carbon fiber reinforced material is obtained by curing the prepreg according to the present invention using the out-of-autoclave method, the softening point of the epoxy resin composition is preferably equal to or less than the curing temperature and more preferably 90°C or less. The epoxy resin composition having a softening point of equal to or less than the curing temperature can prevent the subduction of the epoxy resin composition into the unimpregnated part of the fibers at the time of storage at room temperature and thus the continuity of the unimpregnated part for volatile component removal at the time of molding to be secured. Consequently, the voids in the carbon fiber reinforced material is difficult to form. In addition, the restriction of the carbon fiber becomes less due to the retention of the continuity of the unimpregnated part and thus the draping property is easily secured. The epoxy resin composition having a softening point of equal to or more than the curing temperature prevents the inflow of the resin into the unimpregnated region of the fiber at the molding process due to low fluidity of the matrix resin and thus the unimpregnated fiber remains in the molded articles. Consequently, a large number of the voids are likely to be formed in the obtained carbon fiber reinforced material. The term "softening point" refers to a temperature of an intersection point determined by extending two straight line parts to the change curve of the complex viscosity obtained by the viscosity measurement of the epoxy resin composition. The first straight line is drawn by extending the straight line part before the complex viscosity initially rapidly drops to the high temperature part. The second straight line is drawn by extending the straight line part of an intermediate part after the complex viscosity initially rapidly drops to the low temperature part. A vertical line at the intersection point of both lines is drawn to the temperature axis of a horizontal coordinate and the temperature is determined to be the softening point.

The above-described softening point of the epoxy resin composition including the constituents [B] and [C] is preferably originated from the liquid crystal transition. At the time of molding the carbon fiber reinforced material having a curved surface shape, the prepreg may fail to follow the curved surface shape of a molding mold in the case of the rigid prepreg. In the case where the softening point of the epoxy resin composition is originated from the glass transition point, the prepreg in a glass state is rigid and thus has an inferior dripping property. On the other hand, in the case where the softening point of the epoxy resin composition is originated from the liquid crystal transition point, the epoxy resin composition in the liquid crystal state in the prepreg has excellent followability to deformation along the curved surface shape and thus this prepreg has a superior draping property to the draping property of the prepreg in the glass state.

The prepreg used in the out-of-autoclave method preferably has a form in which one surface alone of the sheet-like carbon fiber is covered with the epoxy resin composition serving as the matrix resin. The prepreg including the carbon fiber not impregnated with the matrix resin in one surface allows this surface to act as a deaeration path. In particular, at the time of heating molding under low pressure such as an oven, this prepreg has an effect of reducing the voids in the obtained carbon fiber reinforced material.

The prepreg used for the out-of-autoclave method preferably has a form in which the carbon fiber is partially impregnated with the epoxy resin composition. As the degree of impregnation of the epoxy resin composition to the carbon fiber in the prepreg, a water absorption coefficient WPU of the prepreg calculated from a water absorption test is preferably 1% to 15%, more preferably 3% to 15%, and further preferably 5% to 12%. WPU in the present invention refers to the water absorption coefficient of the prepreg calculated from the water absorption test and the indicator of the degree of the impregnation of the epoxy resin composition including the constituents [B] and [C] to the carbon fiber serving as the constituent [A]. The prepreg having WPU of 1% or more allows the unimpregnated part of the fiber for removing the water vapor released from inside of the matrix resin and the air enclosed at the time of the lamination to the outside of the molded panel during molding to function as a flow path and thus void generation to be easily reduced. The prepreg having WPU of 15% or less results in reduction in the crack of the prepreg in an out-of-plane direction at the time of prepreg lamination and easy handleability of the prepreg.

The measurement of the water absorption coefficient WPU of the prepreg is carried out as follows. First, a prepreg having a size of 100 mm × 100 mm in which the carbon fiber is arranged in one direction is prepared and the mass is measured. The mass at this time is determined to be W1. The prepared prepreg is held from both sides with thin aluminum plates so that 5 mm of the prepreg protrudes. At this time, the protruded prepreg has a size of 5 mm in the fiber direction and 100 mm in the face perpendicular to the fiber. The aluminum plates are held by a clamp. Five millimeters of the protruded part is immersed in a water having a temperature of 23°C for 5 minutes. After the immersion, the prepreg is taken out and all water existing on the prepreg surface is removed. The mass of the water-absorbed prepreg is measured. The mass at this time is determined to be W2. The water absorption coefficient WPU is calculated in accordance with the following formula.

$$WPU(\%) = (W2 - W1)/W1 \times 100$$

The carbon fiber reinforced material according to the present invention can also be produced using the above-described epoxy resin composition not through the prepreg.

As such a method, a method for directly impregnating the carbon fiber serving as the constituent [A] with the epoxy resin composition including the constituents [B] and [C] and thereafter heating to cure, that is, a hand lay-up method, a filament winding method, and a pultrusion method and a method for impregnating the continuous carbon fiber substrate that is previously formed as a part shape with the resin composition and curing, that is, a resin film infusion method, a resin injection molding method, a resin transfer molding method (RTM) and the like are used.

The epoxy resin composition according to the present invention is also suitably used in the molding methods such as such as VARTM (Vacuum-assisted Resin Transfer Molding), VIMP (Variable Infusion Molding Process), TERTM (Thermal Expansion RTM), RARTM (Rubber-Assisted RTM), RIRM (Resin Injection Recirculation Molding), CRTM (Continuous RTM), CIRTM (Co-injection Resin Transfer Molding), RLI (Resin Liquid Infusion), and SCRIMP (Seeman's Composite Resin Infusion Molding Process), which are described in a review for the RTM methods (SAMPE Journal, Vol. 34, No. 6, pp. 7-19).

[Example]

Hereinafter, the present invention will be described in detail with reference to Examples. However, the scope of the present invention is not limited to Examples. The unit of the composition ratio "part" means part by mass, unless otherwise particularly noted. The measurements of various properties (physical properties) are carried out under an environment at a temperature of 23°C and a relative humidity of 50%, unless otherwise particularly noted.

<Raw materials used in Examples and Comparative Examples>

(1) Constituent [A]

• Carbon fiber 1

Dry-jet wet spinning and carbonization of an acrylonitrile-based copolymer were carried out to give a carbon fiber having a total number of filaments of 24,000, a total fineness of 1,000 tex, a specific gravity of 1.8, a strand tensile

strength of 6.6 GPa, and a strand Young's modulus of 324 GPa. Subsequently, the carbon fiber was subjected to electrochemical treatment of the fiber surface at an electric quantity per 1 g of the carbon fiber of 80 coulombs using an aqueous ammonium hydrogen carbonate solution having a concentration of 0.1 mol/l as an electrolytic solution. This carbon fiber subjecting to electrochemical treatment of the fiber surface was subsequently washed with water and dried in a heated air at a temperature of 150°C to give the carbon fiber serving as the raw material. By measuring in accordance with the method described in (8) below, the surface oxygen concentration O/C was 0.16.

An aqueous dispersion emulsion made of "jER (registered trademark)" 152 (manufactured by Mitsubishi Chemical Corporation), polyglycerin polyglycidyl ether, and an emulsifying agent was prepared and this aqueous dispersion emulsion was used as the sizing agent. This sizing agent was applied to the surface-treated carbon fiber by an immersing method and thereafter the applied carbon fiber was subjected to drying treatment to give a sizing agent-coated carbon fiber bundle. The attached amount of the sizing agent was adjusted so as to be 0.6% by mass relative to the sizing agent-coated carbon fiber.

Measurement of thus prepared carbon fiber in accordance with the method described in (10) below resulted in an attached amount of the sizing agent of 0.16% by mass after washing the sizing agent-coated carbon fiber, which was a preferable attached amount. In addition, the interfacial shear strength measured in accordance with the method described in (11) below was 44 MPa.

• Carbon fiber 2

Dry-jet wet spinning and carbonization of an acrylonitrile-based copolymer were carried out to give a carbon fiber having a total number of filaments of 12,000, a total fineness of 1,000 tex, a specific gravity of 1.8, a strand tensile strength of 4.9 GPa, and a strand Young's modulus of 230 GPa. Subsequently, the carbon fiber was subjected to electrochemical treatment of the fiber surface at an electric quantity per 1 g of the carbon fiber of 80 coulombs using an aqueous ammonium hydrogen carbonate solution having a concentration of 0.1 mol/l as an electrolytic solution. This carbon fiber subjecting to electrochemical treatment of the fiber surface was subsequently washed with water and dried in a heated air at a temperature of 150°C to give the carbon fiber serving as the raw material. At this time, the surface oxygen concentration O/C was 0.15.

Using this carbon fiber, a sizing agent-coated carbon fiber bundle was obtained in the same manner as the manner in Carbon fiber 1. The attached amount of the sizing agent was adjusted so as to be 0.6% by mass relative to the sizing agent-coated carbon fiber. The attached amount of the sizing agent after washing was 0.17% by mass, which was a preferable attached amount. In addition, the interfacial adhesion strength was 43 MPa.

• Carbon fiber 3

Dry-jet wet spinning and carbonization of an acrylonitrile-based copolymer were carried out to give a carbon fiber having a total number of filaments of 24,000, a total fineness of 1,000 tex, a specific gravity of 1.8, a strand tensile strength of 5.9 GPa, and a strand Young's modulus of 294 GPa. Subsequently, the carbon fiber was subjected to electrochemical treatment of the fiber surface at an electric quantity per 1 g of the carbon fiber of 120 coulombs using an aqueous ammonium hydrogen carbonate solution having a concentration of 0.1 mol/l as an electrolytic solution. This carbon fiber subjecting to electrochemical treatment of the fiber surface was subsequently washed with water and dried in a heated air at a temperature of 150°C to give the carbon fiber serving as the raw material. At this time, the surface oxygen concentration O/C was 0.20.

Using this carbon fiber, a sizing agent-coated carbon fiber bundle was obtained in the same manner as the manner in Carbon fiber 1. The attached amount of the sizing agent was adjusted so as to be 0.6% by mass relative to the sizing agent-coated carbon fiber. The attached amount of the sizing agent after washing was 0.19% by mass, which was a preferable attached amount. In addition, the interfacial adhesion strength was 45 MPa.

• Carbon fiber 4

The sizing agent-coated carbon fiber bundle was obtained in the same manner as the manner in Carbon fiber 3 except that the carbon fiber was subjected to electrochemical treatment of the fiber surface at an electric quantity per 1 g of the carbon fiber of 80 coulombs. The surface oxygen concentration O/C was 0.15. The attached amount of the sizing agent was adjusted so as to be 0.6% by mass relative to the sizing agent-coated carbon fiber. The attached amount of the sizing agent after washing was 0.16% by mass, which was a preferable attached amount. In addition, the interfacial adhesion strength was 43 MPa.

• Carbon fiber 5

The sizing agent-coated carbon fiber bundle was obtained in the same manner as the manner in Carbon fiber 3 except that the carbon fiber was subjected to electrochemical treatment of the fiber surface at an electric quantity per 1 g of the carbon fiber of 40 coulombs. The surface oxygen concentration O/C was 0.13. The attached amount of the sizing agent was adjusted so as to be 0.6% by mass relative to the sizing agent-coated carbon fiber. The attached amount of the sizing agent after washing was 0.12% by mass, which was a preferable attached amount. In addition, the interfacial adhesion strength was 29 MPa.

• Carbon fiber 6

The carbon fiber serving as a raw material to which the electrochemical treatment of the fiber surface was subjected was obtained in the same manner as the manner in Carbon fiber 3. Using this carbon fiber, a sizing agent-coated carbon fiber bundle in which the attached amount of the sizing agent was 0.2% by mass relative to the sizing agent-coated carbon fiber was obtained in the same manner as the manner in Carbon fiber 1. The attached amount of the sizing agent after washing was 0.08% by mass, which was a preferable attached amount. In addition, the interfacial adhesion strength was 25 MPa.

(2) Carbon fiber other than constituent [A]

• Carbon fiber 7

Dry-jet wet spinning and carbonization of an acrylonitrile-based copolymer were carried out to give a carbon fiber having a total number of filaments of 24,000, a total fineness of 1,000 tex, a specific gravity of 1.8, a strand tensile strength of 5.9 GPa, and a strand Young's modulus of 294 GPa. At this time, the surface oxygen concentration O/C was 0.15. This carbon fiber was used without applying the sizing agent. The attached amount of the sizing agent after washing was 0% by mass. In addition, the interfacial adhesion strength was 22 MPa.

(3) Constituent [B]

• Epoxy resin 1

Compound name: 2-methyl-1,4-phenylene-bis{4-(2,3-epoxypropoxy)benzoate}, refer to Japanese Patent Application Laid-open No. 2010-241797, epoxy equivalent weight: 245 g/eq) was heated and melted at 200°C and resorcinol (hydroxy group equivalent weight: 55 g/eq) as the prepolymerization agent was added to the melted resin so that Number of epoxy equivalent weight:Number of hydroxy group equivalent weight was 100:25. The resultant mixture was heated at 200°C for three hours under nitrogen atmosphere to give Epoxy resin 1. The content of the prepolymer was 53 parts by mass relative to the 100 parts by mass of the total of 2-methyl-1,4-phenylene-bis{4-(2,3-epoxypropoxy)benzoate} and the prepolymer thereof. The epoxy equivalent weight measured in accordance with JIS K7236 was 353 g/eq.

• Epoxy resin 2

Compound name: 4-{4-(2,3-epoxypropoxy)phenyl}cyclohexyl-4-(2,3-epoxypropoxy)benzoate, refer to Japanese Patent No. 5,471,975, epoxy equivalent weight: 213 g/eq) was heated and melted at 200°C and resorcinol (hydroxy group equivalent weight: 55 g/eq) as the prepolymerization agent was added to the melted resin so that Number of epoxy equivalent weight:Number of hydroxy group equivalent weight was 100:25. The resultant mixture was heated at 200°C for three hours under nitrogen atmosphere to give Epoxy resin 2. The content of the prepolymer was 53 parts by mass relative to the 100 parts by mass of the total of 4-{4-(2,3-epoxypropoxy)phenyl}cyclohexyl-4-(2,3-epoxypropoxy)benzoate and the prepolymer thereof. The epoxy equivalent weight measured in accordance with JIS K7236 was 320 g/eq.

• Epoxy resin 3

Compound name: 4-{4-(2,3-epoxypropoxy)phenyl}cyclohexyl-4-(2,3-epoxypropoxy)benzoate, refer to Japanese Patent No. 5,471,975, epoxy equivalent weight: 213 g/eq) was heated and melted at 200°C and bisphenol F (hydroxy group equivalent weight: 100 g/eq) as the prepolymerization agent was added to the melted resin so that Number of epoxy equivalent weight:Number of hydroxy group equivalent weight was 100:15. The resultant mixture was heated at 200°C for three hours under nitrogen atmosphere to give Epoxy resin 3. The content of the prepolymer was

38 parts by mass relative to the 100 parts by mass of the total of 4-{4-(2,3-epoxypropoxy)phenyl}cyclohexyl-4-(2,3-epoxypropoxy)benzoate and the prepolymer thereof. The epoxy equivalent weight measured in accordance with JIS K7236 was 309 g/eq.

(4) Epoxy resin other than constituent [B]

Epoxy resin in a liquid state at 25°C

- "Araldite (registered trademark)" MY0610 (triglycidyl m-aminophenol, manufactured by Huntsman Advanced Materials Inc.)
- "jER (registered trademark)" 604 (tetraglycidyl diaminodiphenylmethane, manufactured by Mitsubishi Chemical Corporation)
- "EPICLON (registered trademark)" 830 (bisphenol A epoxy resin, manufactured by DIC Corporation)
- "jER (registered trademark)" 828 (bisphenol A epoxy resin, manufactured by Mitsubishi Chemical Corporation) Epoxy resin of general formula (2)
- "jER (registered trademark)" YX4000 (biphenyl epoxy resin, manufactured by Mitsubishi Chemical Corporation).

(5) Constituent [C]

- 3,3'-DAS (3,3'-diaminodiphenyl sulfone, manufactured by MITSUI FINE CHEMICALS, Inc.)
- "SEIKACURE" (registered trademark) S (4,4'-diaminodiphenyl sulfone, manufactured by Wakayama Seika Kogyo Co., Ltd.)
- "Lonzacure (registered trademark)" DETDA80 (manufactured by Lonza Corporation)
- KAYAHARD A-A (4,4'-diamino-3,3'-diethyldiphenylmethane, manufactured by Nippon Kayaku Co., Ltd)
- MEH-7500 (phenol resin, manufactured by Meiwa Plastic Industries, Ltd.)

(6) Constituent [D]

Particle form

- Particle A obtained by the following production method (number average particle diameter: 13 μm)
  Into a mixed solvent of 300 parts by mass of chloroform and 100 parts by mass of methanol, 90 parts by mass of transparent polyamide ("Grilamid (registered trademark)" TR55 (manufactured by EMS-CHEMIE (Japan) Ltd.), 7.5 parts by mass of an epoxy resin ("jER (registered trademark)" 828, manufactured by Mitsubishi Chemical Corporation), and 2.5 parts by mass of a hardener ("Tohmide" (registered trademark) #296, manufactured by T&K TOKA Corporation) were dissolved to give a homogeneous solution. Subsequently, the solute was precipitated by spraying the obtained homogeneous solution in a mist-like state toward the liquid surface of 3,000 parts of stirred n-hexane using a spray gun for painting. The precipitated solid was separated by filtration, sufficiently washed with n-hexane, and dried in vacuum at a temperature of 100°C for 24 hours to give Particle A made of epoxy-modified nylon having a spherical semi-IPN structure.
- Particle B: "Orgasol (registered trademark)" 1002D (manufactured by Arkema S.A.).
- Particle C: "Ultem (registered trademark)" 1000F3SP-1000 (manufactured by SABIC Japan LLC).

Nonwoven fabric form

- Nonwoven fabrics 1 and 2 obtained by the following production method
  The fiber of amorphous polyamide "Grilamid (registered trademark)" TR55 (manufactured by EMS-CHEMIE (Japan) Ltd., amorphous polyamide, glass transition temperature 157°C) discharged from a spinneret equipped with one orifice (diameter 0.5 mm) was stretched and sprinkled on a wire mesh using an aspirator equipped with an impact plate at the tip and air compression to repair. The fiber sheet repaired on the wire mesh was subjected to heat adhesion using a heating press machine to give two nonwoven fabrics 1 and 2 of "Grilamid (registered trademark)" TR55 having different fiber areal weights (a spun-bond method).

Nonwoven fabric 1: TR55, fiber areal weight 13 g/$m^2$
Nonwoven fabric 2: TR55, fiber areal weight 6 g/$m^2$

- Nonwoven fabrics 3 and 4 obtained by the following production method
  Nylon 6 or nylon 12 melted by an extruder was blown out in a thread-like state by high temperature and high speed air flow from a die equipped with a spinneret and the centrifuged fiber-like resin was accumulated on a belt conveyer to prepare the following nonwoven fabrics 3 and 4 made of nylon 6 and nylon 12, respectively (a melt-blown method).

Nonwoven fabric 3: Nylon 6, fiber areal weight 17 g/$m^2$
Nonwoven fabric 4: Nylon 12, fiber areal weight 19 g/$m^2$

Short fiber web form

- Short fiber webs 1, 2, 3, and 4 obtained by the following production method
  The carbon fiber "torayca (registered trademark)" T700S-12K, manufactured by Toray Industries, Inc., was cut into a predetermined length using a cartridge cutter to prepare a chopped carbon fiber (carbon short fiber). A dispersion liquid made of water and a surfactant (polyoxyethylene lauryl ether (trade name), manufactured by NACALAI TESQUE, INC.) and having a surfactant concentration of 0.1% by mass was prepared. From this dispersion liquid and the above-described chopped carbon fiber, the following five types of carbon short fiber webs were prepared using a production apparatus for the carbon short fiber web.

Short fiber web 1 (CF1): Average fiber length 3 mm, fiber areal weight 6 g/$m^2$
Short fiber web 2 (CF2): Average fiber length 6 mm, fiber areal weight 6 g/$m^2$
Short fiber web 3 (CF3): Average fiber length 12 mm, fiber areal weight 6 g/$m^2$
Short fiber web 4 (CF4): Average fiber length 6 mm, fiber areal weight 12 g/$m^2$

(7) Other components

- Thermoplastic resin "SUMIKAEXCEL (registered trademark)" 5003P (polyethersulfone, manufactured by Sumitomo Chemical Company)
- "Virantage (registered trademark)" VW-10700RFP (polyethersulfone, manufactured by Solvay Specialty Polymers Japan, K.K.)
- Additive "TPP" (triphenylphosphine, manufactured by HOKKO CHEMICAL INDUSTRY CO., LTD.)

<Various evaluation method>

(8) Measurement of surface oxygen concentration O/C of carbon fiber

The surface oxygen concentration O/C of the carbon fiber was determined by X-ray photoelectron spectroscopy in accordance with the following procedure. First, the carbon fiber from which contamination attached to the surface was removed with a solvent was cut into a length of about 20 mm and spread on a sample support stage made of copper. Subsequently, a sample support stage was set in a sample chamber and the pressure in the sample chamber was maintained at $1 \times 10^{-8}$ Torr. Subsequently, measurement was carried out at a photoelectron takeoff angle of 90° using $AlK_{\alpha1,2}$ as an X-ray source. The binding energy value of the main peak (top peak) of C1s was adjusted to 284.6 eV as the correction value of the peak associated with electrostatic charge during the measurement. The main area of $C_{1s}$ was determined by drawing a linear base line in the range of 282 eV to 296 eV. The peak area of $O_{1s}$ was determined by drawing a linear base line in the range of 528 eV to 540 eV. Here, the surface oxygen concentration (O/C) refers to a value calculated as an atomic number ratio from the above-described ratio of the $O_{1s}$ peak area and the $C_{1s}$ peak area using the apparatus-specific sensitivity correction value. In the case where ESCA-1600 manufactured by ULVAC-PHI, Inc. was used as the X-ray photoelectron spectroscopy apparatus, the above-described apparatus-specific sensitivity correction value was 2.33.

(9) Measurement of attached amount of sizing agent

The attached amount of the sizing agent in the sizing agent-coated carbon fiber was determined in accordance with the following procedure. First, 2 ± 0.5 g of the sizing agent-coated carbon fiber was collected and subjected to the heat treatment at 450°C for 15 minutes under a nitrogen atmosphere. A mass percentage of the value obtained by dividing a mass change amount before and after the heat treatment by a mass before the heat treatment was determined to be the attached amount of the sizing agent.

(10) Measurement of attached amount of sizing agent after washing

The attached amount of the sizing agent after washing was measured as follows. First, to 10 ml of a solution prepared by mixing acetonitrile and chloroform in a volume ratio of 9:1, 2 ± 0.5 g of the sizing agent-coated carbon fiber was immersed and subjected to ultrasonic washing for 20 minutes to elute the sizing agent from the fiber. Thereafter, the carbon fiber was sufficiently dried and the mass was measured. Furthermore, the carbon fiber after washing was subjected to heat treatment at 450°C for 15 minutes under a nitrogen atmosphere. A mass percentage of the value obtained by dividing a mass change amount before and after the heat treatment by a mass before the heat treatment was determined to be the attached amount of the sizing agent after washing.

(11) Measurement of interfacial shear strength (IFSS)

The interfacial shear strength (IFSS) was measured in accordance with the following (a) to (d) procedures.

(a) Preparation of resin

100 parts by mass of bisphenol A epoxy compound "jER (registered trademark)" 828 (manufactured by Mitsubishi Chemical Corporation) and 14.5 parts by mass of meta-phenylenediamine (manufactured by Sigma-Aldrich Japan G. K.) were placed in a container. Thereafter, the compounds were heated at a temperature of 75°C for 15 minutes in order to reduce the viscosity of the above-described jER 828 and to dissolve meta-phenylenediamine. Thereafter, both of the compounds were mixed sufficiently and the resultant mixture was subjected to vacuum defoaming at a temperature of 80°C for about 15 minutes.

(b) Fixing single fiber of carbon fiber to single-use mold

A single fiber was pulled out from the carbon fiber bundle and both edges of the single fiber were fixed using an adhesive in a dumbbell-shaped mold in a longitudinal direction in a state where constant tension was applied to the single fiber. Thereafter, in order to remove water attached to the carbon fiber and the mold, vacuum drying was carried out at a temperature of 80°C for 30 minutes or more. The dumbbell-shaped mold was made of silicone rubber. A cast molding part had the shape of a center part width of 5 mm, a length of 25 mm, a both edge part width of 10 mm, and an entire length of 150 mm.

(c) From resin cast molding to curing

The resin prepared in accordance with the above-described procedure (a) was poured into the mold after the vacuum drying in accordance with the above-described procedure (b). The temperature was raised to 75°C at a temperature ramp rate of 1.5 °C/min, retained for 2 hours, thereafter raised to 125°C at a temperature ramp rate of 1.5 °C/min, retained for 2 hours, and thereafter lowered to 30°C at a temperature lowering rate of 2.5 °C/min. Thereafter, the molded resin was removed from the mold to give a test specimen.

(d) Measurement of interfacial shear strength (IFSS)

Tensile tension was applied to the test specimen obtained by the above-described procedure (c) in a fiber axis direction (longitudinal direction) at a strain rate of 0.3 %/second to generate a strain of 12%. Thereafter, the number of fiber breaks N (breaks) in the center part of the test specimen in a range of 22 mm was measured with a polarizing microscope. Subsequently, an average broken fiber length la was calculated in accordance with the formula la (μm) = 22 × 1,000 (μm)/N (breaks). Subsequently, critical fiber length lc was calculated from the average broken fiber length la in accordance with the formula lc (μm) = (4/3) × la (μm). The strand tensile strength σ and the diameter d of the single fiber of the carbon fiber were measured and the interfacial shear strength IFSS, which is an indicator of the adhesive strength of the interface between the carbon fiber and the resin was calculated in accordance with the following formula.

In Examples, the average of the value obtained by measuring five times was determined to be the test result.

$$\cdot\text{Interfacial shear strength IFSS (MPa)} = \sigma\ \text{(MPa)} \times d\ (\mu m)/(2 \times lc)\ (\mu m).$$

(12) Preparation of epoxy resin composition (in a case where constituent [D] is not included)

In a kneader, the resin component other than the hardener and the additive were charged in the predetermined amount in each blend ratio (parts by mass) listed in Tables 1 and 2. The temperature of the resultant mixture was raised to 160°C with kneading and the heated mixture was kneaded at 160°C for 1 hour to give a clear viscous liquid. The temperature of the viscous liquid was lowered to 90°C with kneading and thereafter the hardener and the additive were added to the cooled viscous liquid in predetermined amounts. The resultant mixture was further kneaded to give an epoxy resin composition.

(13) Preparation of prepreg (in a case where constituent [D] is not included)

The epoxy resin composition prepared in (12) was applied onto a sheet of release paper with a knife coater to prepare a resin film. Subsequently, to the sheet-like carbon fiber arranged in unidirection serving as the constituent [A], two resin films were overlapped on both surfaces of the carbon fiber. The resin was impregnated to the carbon fiber by heating and pressurizing to give a unidirectional prepreg having a fiber areal weight of 190 g/$m^2$ and a mass fraction of the epoxy resin composition of 35%.

(14) Preparation of prepreg in a case where constituent [D] is included and constituent [D] is particles

The prepreg was prepared by the following method.

(Preparation of Epoxy resin composition 1)

The constituent [B] listed in Tables 3 and 4 and the other resin component(s) were charged in a kneading apparatus. The temperature of the mixture was raised to 160°C with kneading and the heated mixture was kneaded at 160°C for 1 hour. The temperature of the mixture was lowered to 80°C with kneading and thereafter the constituent [C] was charged. The resultant mixture was kneaded to give Epoxy resin composition 1.

(Preparation of Epoxy resin composition 2)

The constituent [B] listed in Tables 3 and 4 and the other resin component(s) were charged in a kneading apparatus. The temperature of the mixture was raised to 160°C with kneading and the heated mixture was kneaded at 160°C for 1 hour. The temperature of the mixture was lowered to 80°C with kneading and thereafter the constituents [D] and [C] were charged in this order. The resultant mixture was kneaded to give Epoxy resin composition 2.

(Preparation of prepreg)

Epoxy resin composition 1 obtained above was applied onto a sheet of release paper with a knife coater to prepare two Resin films 1 having a resin areal weight of 30 g/$m^2$. Similarly, Epoxy resin composition 2 obtained above was applied onto a sheet of release paper to prepare two Resin films 2 having a resin areal weight of 23 g/$m^2$.

Subsequently, to the carbon fiber serving as the constituent [A] and arranged in a unidirection so as to form a sheet-like product, two Resin films 1 were overlapped from both sides of the carbon fiber and the epoxy resin composition was impregnated by heating and pressurizing to give a prepreg precursor having a carbon fiber areal weight of 192 g/$m^2$.

To the obtained prepreg precursor, two resin films 2 were overlapped from both sides of the prepreg precursor and subjected to heating and pressurizing to give a prepreg. Here, in Table 3 and 4, the composition ratios of the epoxy resin compositions in the final prepregs are listed.

(15) Preparation of prepreg in a case where constituent [D] is a nonwoven fabric.

The prepreg was prepared by the following method.

(Preparation of epoxy resin composition)

The constituent [B] listed in Table 5 and the other resin component(s) were charged in a kneading apparatus. The temperature of the mixture was raised to 160°C with kneading and the heated mixture was kneaded at 160°C for 1 hour. The temperature of the mixture was lowered to 80°C with kneading and thereafter the constituent [C] was charged. The resultant mixture was kneaded to give an epoxy resin composition.

(Preparation of prepreg)

The epoxy resin composition obtained above was applied onto a sheet of release paper with a knife coater to prepare Resin film 1 having a resin areal weight of 30 g/$m^2$. In addition, for nonwoven fabrics having fiber areal weights of 6 g/$m^2$, 12 g/$m^2$, 17 g/$m^2$, and 19 g/$m^2$, Resin films 2 having resin areal weights of 40 g/$m^2$, 34 g/$m^2$, 29 g/$m^2$, and 27 g/$m^2$ were prepared in the same manner, respectively.

Subsequently, to the carbon fiber serving as the constituent [A] and arranged in a unidirection so as to form a sheet-like product, two Resin films 1 were overlapped from both sides of the carbon fiber and the epoxy resin composition was impregnated by heating and pressurizing to give a prepreg precursor having a carbon fiber areal weight of 192 g/$m^2$.

To the obtained prepreg precursor, one nonwoven fabric serving as the constituent [D] listed in Table 5 was overlapped on the upper surface of the prepreg precursor. One Resin film 2 was overlapped on the upper surface thereof and subjected to heating and pressurizing to give a prepreg.

(16) Preparation of prepreg in a case where constituent [D] is short fiber web

(Preparation of epoxy resin composition)

The constituent [B] listed in Table 6 and the other resin component(s) were charged in a kneading apparatus. The temperature of the mixture was raised to 160°C with kneading and the heated mixture was kneaded at 160°C for 1 hour. The temperature of the mixture was lowered to 80°C with kneading and thereafter the constituent [C] was charged. The resultant mixture was kneaded to give an epoxy resin composition.

(Preparation of prepreg)

The epoxy resin composition obtained above was applied onto a sheet of release paper with a knife coater to prepare Resin film 1 having a resin areal weight of 30 g/$m^2$. In addition, for short fiber webs having fiber areal weights of 6 g/$m^2$ and 12 g/$m^2$, Resin films 2 having resin areal weights of 40 g/$m^2$ and 32 g/$m^2$ were prepared in the same manner, respectively.

Subsequently, to the carbon fiber serving as the constituent [A] and arranged in a unidirection so as to form a sheet-like product, two Resin films 1 were overlapped from both sides of the carbon fiber and the epoxy resin composition was impregnated by heating and pressurizing to give a prepreg precursor having a carbon fiber areal weight of 192 g/$m^2$.

To the obtained prepreg precursor, one short fiber web serving as the constituent [D] listed in Table 6 was overlapped on the upper surface of the prepreg precursor. One Resin film 2 was overlapped on the upper surface thereof and subjected to heating and pressurizing to give a prepreg.

(17) Measurement of nematic-isotropic phase transition temperature of epoxy resin composition including constituents [B] and [C]

The resin composition including the constituents [B] and [C] was collected from the prepreg and about 1 mg of the collected resin composition was thinly spread on a thin film glass. The sample was set in the heating part of a temperature control unit (TH-600PM, manufactured by JAPAN HIGH TECH CO., LTD.). The polarizing microscope observation images of the resin composition including the constituent [B] and [C] were taken at a magnification of 300 times at intervals of 5°C from 40°C to 190°C at a temperature ramp rate of 2 °C/min. For the obtained images, each of the area where the isotropic phase (the region where the interference fringes were not observed) existed and the area where the nematic phase existed was calculated by binarizing the images. The nematic phase refers to the region where the observed interference fringes are a schlieren texture, a thread-like texture, a sand-like texture, and a droplet texture whereas the isotropic phase refers to the region where although the resin composition exists, light is not transmitted due to the optical isotropy and thus the visual field is dark. The lowest temperature (the nematic-isotropic phase transition temperature) at which the ratio of the area where the isotropic phase existed was 40% or more relative to the area of the entire resin composition where the nematic phase and the isotropic phase were added was determined.

(18) Preparation of composite material plate for Mode I interlaminar toughness ($G_{IC}$) test and measurement of $G_{IC}$

The composite material plate for $G_{IC}$ was prepared by the following (a) to (e) procedures in accordance with JIS K7086 (1993).

(a) Twenty plies of the unidirectional prepreg prepared in (13) to (16) were laid-up in a state where the fiber direction was arranged. Here, a fluorocarbon resin film having a width of 40 mm and a thickness of 50 μm was sandwiched perpendicular to the fibber arrangement direction between the center surfaces of the laid-up (between the tenth ply and the eleventh ply).
(b) The laid-up prepreg was wrapped with a nylon film without uncovered part. The prepreg was heated and pressurized in an autoclave at 180°C for 2 hours under an internal pressure of 0.59 MPa and cured to form a unidirectional carbon fiber reinforced material.
(c) The unidirectional carbon fiber reinforced material obtained in (b) was cut into a test specimen having a width of 20 mm and a length of 195 mm. The cutting was carried out so that the fiber direction was in parallel with the length side of the test specimen.
(d) The adhesion part was peeled off at the time of the test in the case where the block for pin load (length 25 mm, made of aluminum) described in JIS K7086 (1993) was used. Therefore, triangle shape grips were used instead of the block for pin load (FIG. 1). At the place 4 mm away from the one end (the side where the fluorocarbon resin film was sandwiched) of the test specimen, a notch having a length of 1 mm was formed at both ends in a width direction and the triangle shape grips were hooked. In the test, the load was applied to the test specimen by pulling the triangle shape grips with the cross head of Instron universal tester (manufactured by Instron Japan Co., Ltd.).
(e) In order to facilitate the observation of crack propagation, white paint was applied onto both sides of the test specimen.

$G_{IC}$ was measured in accordance with the following procedure using the prepared composite material plate. In accordance with JIS K7086 (1993) Appendix 1, the test was carried out using Instron universal tester (manufactured by Instron Japan Co., Ltd.). The cross-head speed was set to 0.5 mm/minute until the crack propagation reached 20 mm and 1 mm/minute after the crack propagation reached 20 mm. The test was carried out until the crack propagation reached 100 mm. $G_{IC}$ was calculated from the area of a load-displacement chart obtained during the test.

(19) Measurement of Mode II interlaminar toughness ($G_{IIC}$)

The same test specimen as the test specimen from (a) to (c) in the $G_{IC}$ test (18) was prepared to give a test specimen having a width of 20 mm and a length of 195 mm. In accordance with JIS K7086 (1993) Appendix 2, the $G_{IIC}$ test was carried out using this test specimen.

(20) Preparation of composite material plate for 0° tensile strength test and measurement

The unidirectional prepreg prepared in (13) to (16) was cut into a predetermined size. Six of the cut prepregs were laid-up in one direction and thereafter vacuum bag molding was carried out. The laid-up prepregs were heated and pressurized using an autoclave at 180°C for 2 hours under an internal pressure of 0.59 MPa and cured to give a unidirectional carbon fiber reinforced material. This unidirectional carbon fiber reinforced material obtained was cut into a piece having a width of 12.7 mm and a length of 230 mm. Tabs made of a glass fiber-reinforced plastic having 1.2 mm and a length of 50 mm were bonded to both ends of the piece to give a test specimen. The 0° tensile test of this test specimen was carried out in accordance with the specification of JIS K7073 (1988) using Instron universal tester.

(21) Molding of composite material plate for Mode I interlaminar toughness ($G_{IC}$) and Mode II interlaminar toughness ($G_{IIC}$) tests by press molding and measurement

(a) Twenty plies of the prepreg using the fiber substrate prepared in (13) to (16) were laid-up in a state where the fiber direction was arranged. Here, a fluorocarbon resin film having a width of 40 mm and a thickness of 50 μm was sandwiched perpendicular to the fibber arrangement direction between the center surfaces of the laid-up (between the tenth ply and the eleventh ply).
(b) The laid-up prepregs were placed on a mold and thereafter flowed and molded with a heating-type press molding machine at 180°C for 4 hours under pressurizing at 1.0 MPa to mold a unidirectional carbon fiber reinforced material.
(c) $G_{IC}$ was measured in the same method as the method in the $G_{IC}$ test of (c) to (e) in (18) and $G_{IIC}$ was measured

in the same method as the method in the $G_{IIC}$ test in (19).

(22) Preparation of composite material plate for 0° tensile strength test by press molding and measurement

The prepreg prepared in (13) to (16) was cut into a predetermined size. Six of the cut prepregs were laid-up in one direction and thereafter the laid-up prepregs were placed on a mold and flowed and molded using an heating type press molding machine at 180°C for 4 hours under a pressure of 1.0 MPa to give a unidirectional carbon fiber reinforced material. This unidirectional carbon fiber reinforced material obtained was cut into a piece having a width of 12.7 mm and a length of 230 mm. Tabs made of a glass fiber-reinforced plastic having 1.2 mm and a length of 50 mm were bonded to both ends of the piece to give a test specimen. The 0° tensile test of this test specimen was carried out in accordance with the specification of JIS K7073 (1988) using Instron universal tester.

(23) Observation of carbon fiber reinforced material with polarizing microscope

The unidirectional prepreg prepared in (13) or (16) was cut into a width of 50 mm and a length of 50 mm. The fiber intervals were spread by hand so that the width of the prepreg was 80 mm or more and thereafter the prepreg was cured using an oven under conditions of 180°C for 2 hours to give a test body of the carbon fiber reinforced material for observation. The resin region of the test body was observed with a polarizing microscope (manufactured by KEYENCE CORPORATION, VHX-5000, polarized filter is attached). The case where the high-order structure such as a fan shape texture and a focal conic texture was observed was determined to be "A", whereas the case where the high-order structure was not observed was determined to be "B".

(24) Wide angle X-ray diffraction measurement of prepreg

A measurement sample was prepared by cutting the prepreg prepared in (13) to (16) into a length of 20 mm and a width of 10 mm. The measurement sample was set in a temperature control unit (FP82; manufactured by Mettler-Toledo International Inc.) attached to a wide angle X-ray diffractometer (D8 DISCOVER; manufactured by Bruker AXS GmbH) and two-dimensional wide angle X-ray diffraction was measured. For Condition [II], the temperature of the measurement sample was raised from 40°C to 100°C at 2 °C/minute using the temperature control unit and the measurement sample was retained for 30 minutes from the time when the temperature reached 100°C. The presence or absence of the peak existing in $2\theta$ = 1.0° to 6.0° was confirmed for the obtained diffraction pattern by the wide angle X-ray diffraction measurement immediately after 30 minutes passed. For Condition [III], the temperature of the measurement sample was raised from 40°C to 180°C at 2 °C/minute using the temperature control unit and the measurement sample was retained for 2 hours from the time when the temperature reached 180°C. The presence or absence of the peak existing in $2\theta$ = 1.0° to 6.0° was confirmed for the obtained diffraction pattern by the wide angle X-ray diffraction measurement immediately after 2 hours passed.

- Apparatus: D8 DISCOVER; manufactured by Bruker AXS GmbH
- X-ray source: CuKα line (X-ray tube voltage 50 kV and X-ray tube current 22 mA)
- Detector: Vantec500
- Temperature control unit: FP82; manufactured by Mettler-Toledo International Inc.

The case where the peak of a diffraction angle $2\theta$ existed in the range of 1.0° to 6.0° was determined to be "A", whereas the case where the peak did not exist was determined to be "B".

(25) Measurement of molecular anisotropy in cured resin by polarized Raman spectroscopy

From the carbon fiber reinforced material obtained by curing the prepreg prepared in (13) and (16), a square having a side of 2 cm was cut out to give a test specimen. The measurement was carried out at arbitrary 5 places of the resin part in the carbon fiber reinforced material under the following conditions.

- Apparatus: PDP320 (manufactured by PHOTON Design Corporation)
- Beam diameter: 1 μm.
- Light source: YAG laser/1,064 nm
- Diffraction grating: Single 300 gr/mm

- Slit: 100 μm
- Detector: CCD: Jobin Yvon 1,024 × 256
- Objective lens: × 100

An arbitrary direction of the measured test specimen was determined to be 0° and polarization direction was changed from 0° to 150° at intervals of 30° to measure polarized Raman spectroscopy. The case where a fluctuation range had a polarization direction of 20% or more for the intensity of Raman band in the vicinity of 1,600 $cm^{-1}$ derived from C=C stretching vibration of the aromatic ring was determined to be molecular anisotropy presence "A", whereas the case where the fluctuation range was less than 20% at measured 5 places in any of polarization directions of 0° to 150° was determined to be anisotropy absence "B". The results are listed in Tables 1 to 6.

(26) Viscosity measurement of epoxy resin composition including constituents [B] and [C]

The viscosity measurement of the epoxy resin composition including constituents [B] and [C] was evaluated using a dynamic viscoelasticity measuring device (ARES-G2, manufactured by TA Instruments Inc.). In the measurement, a parallel plate having a diameter of 40 mm was used and the measurement conditions were determined to be an angular frequency of 3.14 rad/s and a gap of 1.0 mm. In the measurement, the epoxy resin composition was melted at 90°C for 3 minutes. The gap was set to 1 mm and thereafter, the temperature of the epoxy resin was lowered to 40°C and raised from 40°C to 160°C at a rate of 2 °C/minute. The results of the lowest viscosities at 130°C to 150°C are listed in Tables 1 to 6.

(27) Measurement of diffraction angle 2θ by X-ray diffraction

The unidirectional prepreg prepared in (13) or (16) was laid-up so that the thickness was about 1 mm and thereafter the laid-up prepreg was wrapped with a nylon film without uncovered part. The prepreg was heated and pressurized in an autoclave at 180°C for 2 hours under an internal pressure of 0.59 MPa and cured to form a unidirectional carbon fiber reinforced material. The molded carbon fiber reinforced material was cut into a length of 40 mm and a width of 10 mm to give a test specimen. The measurement was carried out under following conditions at parallel (0°), perpendicular (90°), and 45° to the carbon fiber axis in the carbon fiber reinforced material.

- Apparatus: X' PertPro (manufactured by PANalytical Division, Spectris Co., Ltd.)
- X-ray source CuKα line (X-ray tube voltage 45 kV and X-ray tube current 40 mA)
- Detector: Goniometer + monochromator + scintillation counter
- Scanning range: 2θ = 1° to 90°
- Scanning mode: Step scan, step unit 0.1°, and counting time 40 seconds

The peaks of the diffraction angle 2θ in the range of 1° to 10° are listed in Tables 1 to 6. In the case of no peak, "B" is listed.

(28) Existence ratio of constituent [D] existing in range of depth of 20% relative to prepreg thickness

A plate-like cured resin was prepared by sandwiching the unidirectional prepreg prepared in (13) to (16) between two polytetrafluoroethylene resin plates having smooth surfaces to closely attach and causing gelation of the prepreg and curing the prepreg by gradually raising temperature to 180°C over 7 days. After the curing, the cured resin was cut in a direction perpendicular to the closely attached surface and the section was polished. Thereafter, the photograph of the section was taken in a magnification of 200 times or more under an optical microscope so that the upper and lower surfaces of the prepreg existed in the visual field. The distances between the polytetrafluoroethylene resin plates at five positions in the horizontal direction of the photograph of the cress-section were measured and the average value of the measured values was determined to be the thickness of the prepreg. A line in parallel with the surface of the prepreg was drawn at a depth position of 20% from the surface of the prepreg. Subsequently, the total area of the constituent [D] existing between the surface of the prepreg and the above-described line and the total area of the constituent [D] across the thickness of the prepreg were determined. The existence ratio of the constituent [D] existing in a depth of 20% from both surfaces of the prepreg relative to 100% of the prepreg thickness was calculated. Here, the total area of the constituent [D] was determined by hollowing out the part of the constituent [D] from the section photograph and converting from the mass of the hollowed-out part.

(29) Measurement of interlaminar resin layer thickness of carbon fiber reinforced material

The carbon fiber reinforced material prepared in (18) was cut in a direction perpendicular to the carbon fiber

and the section was polished. Thereafter, the photograph of the section was taken in a magnification of 200 times or more under an optical microscope. In a randomly selected fiber layer region on the photograph, a line drawn in parallel to the carbon fiber layer so that the volume content ratio of the carbon fiber was 50% was used as a boundary line between the fiber layer region and the interlaminar resin layer region. An averaged boundary line was drawn across a length of 1,000 μm and the distance therebetween was determined to be the interlaminar resin layer thickness. The same operation was carried out for five positions of the interlaminar resin layer region in total and the average value of the measured values was employed.

(30) Measurement of phase transition of high-order structure by differential scanning calorimetry

The unidirectional prepreg prepared in (13) or (16) was laid-up so that the thickness was about 1 mm and thereafter the laid-up prepreg was wrapped with a nylon film without uncovered part. The prepreg was heated and pressurized in an autoclave at 180°C for 2 hours under an internal pressure of 0.59 MPa and cured to form a unidirectional carbon fiber reinforced material. Five milligrams of the molded and obtained carbon fiber reinforced material was weighed in a sample pan and the temperature of the sample was raised from 50°C to 400°C at a temperature ramp rate of 5 °C/min under nitrogen atmosphere using a differential scanning calorimeter (Q-2000: manufactured by TA Instruments Inc.). Change in a heat flow amount was recorded and the presence or absence of an endothermic peak in a temperature region of 250°C or more was confirmed. The case where the unidirectional carbon fiber reinforced material has the peak at 250°C or more is determined to be "A", whereas the case where the unidirectional carbon fiber reinforced material does not have the peak is determined to be "B". The results are listed in Tables 1 to 6.

(Examples 1 to 9 and Comparative Examples 1 to 12)

In accordance with the blend ratio in Tables 1 and 2, the epoxy resin composition for the carbon fiber reinforced material was prepared by the procedure of above-described (12) Preparation of epoxy resin composition. Using the obtained epoxy resin composition, the nematic-isotropic phase transition temperature of the resin composition including the constituents [B] and [C] using the above-described procedure (17) and the prepreg was obtained by the procedure of (13) Preparation of prepreg. Using the obtained prepreg, above-described (18) Preparation of composite material plate for Mode I interlaminar toughness ($G_{IC}$) test and $G_{IC}$ measurement, (19) Preparation of composite material plate for Mode II interlaminar toughness ($G_{IIC}$) test and $G_{IIC}$ measurement, (23) Observation of carbon fiber reinforced material with polarizing microscope, (24) Wide angle X-ray diffraction measurement of prepreg, (25) Measurement of anisotropy in resin composition by polarized Raman spectroscopy, and (26) Viscosity measurement of epoxy resin composition including constituents [B] and [C] were carried out. The results are listed in Table 1 and 2.

Each of the measured results in Examples is as listed in Table 1. As Examples 1 to 9, the carbon fiber reinforced materials having excellent Mode I interlaminar toughness $G_{IC}$ and Mode II interlaminar toughness $G_{IIC}$ were obtained by the combination of the carbon fiber reinforced material to which the sizing agent was applied and the epoxy resin composition satisfying Conditions [I] to [III].

Comparative Example 1 is the case where the constituents [A] and [C] in the present invention are used but the constituent [B] is not included and Conditions [I] and [III] are not satisfied. It is found that Mode I interlaminar toughness $G_{IC}$ and Mode II interlaminar toughness $G_{IIC}$ of Comparative Example 1 are significantly lower than those of Example 2, which uses the same constituents [A] and [C]. In particular, Mode I interlaminar toughness $G_{IC}$ and Mode II interlaminar toughness $G_{IIC}$ of the prepreg according to the present invention are dramatically improved.

Comparative Example 2 is the case where the carbon fiber in which Conditions [I] to [III] are satisfied but the constituent [A] in the present invention is not satisfied is used. The interfacial shear strength, Mode I interlaminar toughness $G_{IC}$, and Mode II interlaminar toughness $G_{IIC}$ of Comparative Example 2 are lower than those of Example 2, which uses the same constituents [B] and [C]. From these results, it is found that the application of the sizing agent to the surface of the carbon fiber is important.

Comparative Examples 3 and 4 are the cases where the constituents [A], [B], and [C] according to the present invention are used but the requirement of nematic-isotropic phase transition temperature in Condition [I] is not satisfied. Due to the formation of the smectic structure in the cured product of the epoxy resin composition, Mode I interlaminar toughness $G_{IC}$ has a higher value than that of the case where the high-order structure is not formed. However, in particular, Mode II interlaminar toughness $G_{IIC}$ is low compared with that of Examples 4 and 2, which have the same constituents [A] and [C] as the constituents of the Comparative Examples 3 and 4 and have the nematic-isotropic phase transition temperature within the range of Condition [I]. It is found that Mode II interlaminar toughness $G_{IIC}$ is improved because the nematic-isotropic phase transition temperature satisfies Condition [I].

Comparative Examples 5 to 7 are the cases where Condition [I] is not satisfied. It is found that Mode I interlaminar toughness $G_{IC}$ and Mode II interlaminar toughness $G_{IIC}$ are lower than those of Example 4 and Example 2, which

use the same constituents [A] and [C] and Mode I interlaminar toughness $G_{IC}$ and Mode II interlaminar toughness $G_{IIC}$ are improved by satisfying the requirement of Condition [I].

Comparative Examples 8 and 9 are the cases where Conditions [I] and [III] are not satisfied. It is found that Mode I interlaminar toughness $G_{IC}$ and Mode II interlaminar toughness $G_{IIC}$ are lower because the cured product of the epoxy resin composition cannot form the smectic structure.

Comparative Example 10 is the case where Conditions [I] and [II] are not satisfied. It is found that Mode I interlaminar toughness $G_{IC}$ and Mode II interlaminar toughness $G_{IIC}$ are significantly lower than those of Example 2, which uses the same constituents [A] and [B]. It is considered that the sizing agent existing on the surface of the constituent [A] and the epoxy resin composition are not sufficiently reacted due to insufficient reduction in the resin viscosity at the curing process and, as a result, the adhesiveness between the resin and the carbon fiber is worsened. Similar to Comparative Example 10, Comparative Example 11 has high curing reaction after dissolving the constituent [C] into the constituent [B] and thus the nematic phase that the epoxy resin composition including the constituents [B] and [C] forms is maintained. Consequently, the nematic-isotropic phase transition does not exist in the range of 130°C to 180°C and thus the viscosity cannot be sufficiently reduced. Therefore, it is found that Mode I interlaminar toughness $G_{IC}$ and Mode II interlaminar toughness $G_{IIC}$ are significantly lower than those of Example 5, which uses the same constituents [A] and [B]. In addition, Comparative Example 12 causes remarkably fast curing reaction at the time of dissolving the constituent [C] into the constituent [B] and the viscosity is significantly increased. Consequently, the prepreg could not be prepared.

(Examples 10 to 22 and Comparative Examples 13 to 23)

In accordance with the blend ratio in Tables 3 and 4, the prepreg was obtained by the above-described procedure (14). Using the obtained prepreg, above-described (28) Existence ratio of constituent [D] existing in range of depth of 20% relative to prepreg thickness, (18) Preparation of composite material plate for Mode I interlaminar toughness ($G_{IC}$) test and $G_{IC}$ measurement, (19) Preparation of composite material plate for Mode II interlaminar toughness ($G_{IIC}$) test and $G_{IIC}$ measurement, (23) Observation of carbon fiber reinforced material with polarizing microscope, (24) Wide angle X ray diffraction measurement of prepreg, (25) Measurement of anisotropy in resin composition by polarized Raman spectroscopy, (20) Preparation of composite material plate for 0° tensile strength test and measurement, (29) Measurement of interlaminar resin layer thickness of carbon fiber reinforced material, (23) Observation with polarizing microscope, and (27) Measurement of diffraction angle 2θ by X-ray diffraction were carried out. In addition, measurement of the nematic-isotropic phase transition temperature of the resin composition including the above-described constituent [B] and [C] and (26) Viscosity measurement of resin composition including constituents [B] and [C] were also carried out.

The various measurement results of Examples are as listed in Table 3 and the various measurement results of Comparative Examples are as listed in Table 4. As Examples 10 to 22, excellent Mode I interlaminar toughness $G_{IC}$, Mode II interlaminar toughness $G_{IIC}$, and tensile strength were obtained by placing the interlaminar resin layer in which the particles serving as spacers were used between the carbon fiber layers.

Both Comparative Examples 13 and 14 are the cases where the cured product of the epoxy resin composition including the constituents [B] and [C] forms the high-order structure and does not include the constituent [D] and thus interlaminar resin layers are not formed. It is found that Mode II interlaminar toughness $G_{IIC}$ of Comparative Examples 13 and 14 are lower than those of Examples 12, 13, 16 to 19, 20, and 21, which use the same constituents [B] and [C] and that Mode II interlaminar toughness $G_{IIC}$ of the prepreg according to the present invention is dramatically improved. In addition, Comparative Example 15 is the case where although the constituent [D] is placed so as to satisfy Condition [I] and the cured product of the resin composition including the constituents [B] and [C] forms the high-order structure, the content ratio of the constituent [D] in the epoxy resin composition is low and thus the interlaminar resin layer having sufficient thickness is not formed. In this case, the improvement effect of Mode II interlaminar toughness $G_{IIC}$ was not observed. Comparative Examples 20 to 23 are the cases where the cured product of the epoxy resin composition does not form the high-order structure and the interlaminar resin layer having sufficient thickness is formed due to the existence of the constituent [D]. From the comparison of Comparative Example 20 with Examples 10 and 16, the comparison of Comparative Example 21 with Examples 11 and 17, and the comparison of Comparative Example 22 with Examples 12 and 18, it is found that all of Mode I interlaminar toughness $G_{IC}$, Mode II interlaminar toughness $G_{IIC}$, and tensile strength are lower than those of each of Examples, which use the same constituents [A] and [D]. It is found that in particular, Mode I interlaminar toughness $G_{IC}$ and Mode II interlaminar toughness $G_{IIC}$ of the prepreg according to the present invention are dramatically improved. In addition, Comparative Example 23 is the case where the cured product of the epoxy resin composition does not form the high-order structure, the constituent [D] is not included, and thus the interlaminar resin layer is not formed. When the Comparative Example 23 is compared with Examples 10 to 22 and Comparative Examples 13 and 14, it can be confirmed that the cured product of the epoxy resin composition forming the high-order structure dramatically improves Mode I interlaminar toughness $G_{IC}$ and Mode II interlaminar toughness $G_{IIC}$. Comparative Examples 17 and 18 are the cases where the nematic-isotropic phase transition temperature of the

epoxy resin composition including the constituents [B] and [C] is lower than 110°C and the cured product does not form the high-order structure (the smectic structure). In this case, it is found that Mode I interlaminar toughness $G_{IC}$ is not sufficiently improved.

(Examples 23 to 28 and Comparative Examples 24 to 27)

In accordance with the blend ratio in Table 5, the prepreg was obtained by the above-described procedure (15). Using the obtained prepreg, above-described (28) Existence ratio of constituent [D] existing in range of depth of 20% relative to prepreg thickness, (18) Preparation of composite material plate for Mode I interlaminar toughness ($G_{IC}$) test and $G_{IC}$ measurement, (19) Preparation of composite material plate for Mode II interlaminar toughness ($G_{IIC}$ test and $G_{IIC}$ measurement, (23) Observation of carbon fiber reinforced material with polarizing microscope, (24) Wide angle X ray diffraction measurement of prepreg, (25) Measurement of anisotropy in epoxy resin composition by polarized Raman spectroscopy, (20) Preparation of composite material plate for 0° tensile strength test and measurement, (29) Measurement of interlaminar resin layer thickness of carbon fiber reinforced material, (23) Observation with polarizing microscope, and (27) Measurement of diffraction angle 2θ by X-ray diffraction were carried out. In addition, measurement of the nematic-isotropic phase transition temperature of the epoxy resin composition including the above described constituent [B] and [C] and (26) Viscosity measurement of epoxy resin composition including constituents [B] and [C] were also carried out. Each of the measured results in Examples is as listed in Table 5. As Examples 23 to 28, the carbon fiber reinforced materials having excellent Mode I interlaminar toughness $G_{IC}$ and Mode II interlaminar toughness $G_{IIC}$ were obtained by placing the interlaminar resin layer in which the high-order structure was formed between the carbon fiber layers using the nonwoven fabric serving as the spacer.

Any Comparative Examples 24 to 27 are the cases where the cured product of the epoxy resin composition does not form the high-order structure and the interlaminar resin layer having a sufficient thickness using the nonwoven fabric serving as a spacer is formed. From the comparison of Comparative Example 25 with Examples 23 and 25, the comparison of Comparative Example 26 with Example 26, and the comparison of Comparative Example 27 with Example 28, it is found that, in particular, Mode I interlaminar toughness $G_{IC}$ and Mode II interlaminar toughness $G_{IIC}$ are dramatically improved by the present invention as compared with each of Examples using the constituents [A], [C], and [D]. In addition, from the comparison of Comparative Example 27 with Example 27 and Example 28, it is also found that Mode II interlaminar toughness $G_{IIC}$ can be effectively improved by placing the interlaminar resin layer in which the cured product of the epoxy resin composition forms the high-order structure. Comparative Example 24 is the case where the nematic-isotropic phase transition temperature of the epoxy resin composition including the constituents [B] and [C] is lower than 110°C and the cured product does not form the high-order structure (the smectic structure). In this case, it is found that Mode I interlaminar toughness $G_{IC}$ is not sufficiently improved.

(Examples 29 to 37 and Comparative Examples 28 to 32)

In accordance with the blend ratio in Table 6, the prepreg was obtained by the above-described procedure (16). Using the obtained prepreg, above-described (28) Existence ratio of constituent [D] existing in range of depth of 20% relative to prepreg thickness, (18) Preparation of composite material plate for Mode I interlaminar toughness ($G_{IC}$) test and $G_{IC}$ measurement, (19) Preparation of composite material plate for Mode II interlaminar toughness ($G_{IIC}$ test and $G_{IIC}$ measurement, (23) Observation of carbon fiber reinforced material with polarizing microscope, (24) Wide angle X ray diffraction measurement of prepreg, (25) Measurement of anisotropy in epoxy resin composition by polarized Raman spectroscopy, (20) Preparation of composite material plate for 0° tensile strength test and measurement, (29) Measurement of interlaminar resin layer thickness of carbon fiber reinforced material, (23) Observation with polarizing microscope, and (27) Measurement of diffraction angle 2θ by X-ray diffraction were carried out. In addition, measurement of the nematic-isotropic phase transition temperature of the epoxy resin composition including the constituent [B] and [C] and (26) Viscosity measurement of epoxy resin composition including constituents [B] and [C] were also carried out. Each of the measured results in Examples is as listed in Table 6. As Examples 29 to 37, the carbon fiber reinforced materials having excellent Mode I interlaminar toughness $G_{IC}$, Mode II interlaminar toughness $G_{IIC}$, and tensile strength were obtained by placing the interlaminar resin layer in which the high-order structure was formed between the carbon fiber layers using the short fiber web serving as the spacer.

Any Comparative Examples 28 to 32 are the cases where the cured product of the epoxy resin composition does not form the high-order structure and the interlaminar resin layer having a sufficient thickness using the nonwoven fabric serving as a spacer is formed. From the comparison of Comparative Example 29 with Examples 29 and 33, the comparison of Comparative Example 30 with Examples 30 and 34, the comparison of Comparative Example 31 with Examples 31 and 35, and Comparative Example 32 with Example 32 and 36, it is confirmed that, in particular, Mode I interlaminar toughness $G_{IC}$ and Mode II interlaminar toughness $G_{IIC}$ are dramatically improved by the present invention. Comparative Example 28 is the case where the nematic-isotropic phase transition temperature of the epoxy resin

composition including the constituents [B] and [C] is lower than 110°C and the cured product dos not form the high-order structure (the smectic structure). In this case, it is found that Mode I interlaminar toughness $G_{IC}$ is not sufficiently improved.

Table 1

| | | Example 1 | Example 2 | Example 3 | Example 4 | Example 5 | Example 6 | Example 7 | Example 8 | Example 9 |
|---|---|---|---|---|---|---|---|---|---|---|
| Constituent [A] | • Carbon fiber 1 | • | | | | | | | | |
| | • Carbon fiber 2 | | • | | | | | | | |
| | • Carbon fiber 3 | | | • | | | | | | |
| | • Carbon fiber 4 | | | | • | • | | | • | • |
| | • Carbon fiber 5 | | | | | | • | | | |
| | • Carbon fiber 6 | | | | | | | • | | |
| Carbon fiber other than constituent [A] | • Carbon fiber 7 | | | | | | | | | |
| Constituent [B] | • Epoxy resin 1 | 97 | | 97 | 97 | | | 97 | | 97 |
| | • Epoxy resin 2 | | 97 | | | 97 | 97 | | 92 | |
| | • Epoxy resin 3 | | | | | | | | | |
| Epoxy resin other than constituent [B] | • "Araldite (registered trademark)" MY0600 | 3 | 3 | | | 3 | 3 | | | |
| | • "jER (registered trademark)" YX4000 | | | | | | | | 8 | |
| | • "EPICLON (registered trademark)" 830 | | | | | | | | | 3 |
| | • "jER (registered trademark)" 604 | | | | | | | | | |
| | • "jER (registered trademark)" 828 | | | 3 | 3 | | | 3 | | |

(continued)

| | | | Example 1 | Example 2 | Example 3 | Example 4 | Example 5 | Example 6 | Example 7 | Example 8 | Example 9 |
|---|---|---|---|---|---|---|---|---|---|---|---|
| Constituent [C] | • 3, 3' -DAS | | 17 | 18 | 18 | 18 | 18 | 18 | 18 | 19 | 18 |
| | • "SEIKACURE" (registered trademark) S | | | | | | | | | | |
| | • KAYAHARD A-A | | | | | | | | | | |
| | "Lonzacure (registered trademark)" DETDA80 | | | | | | | | | | |
| | • MEH-7500 | | | | | | | | | | |
| Thermoplastic resin | "SUMIKAEXCEL (registered trademark)" 5003P | | | | | | | | | | |
| Additive | • TPP | | | | | | | | | | |
| Characteristics of Constituent [A] | Surface oxygen concentration O/C | | 0.16 | 0.15 | 0.20 | 0.15 | 0.15 | 0.13 | 0.20 | 0.15 | 0.15 |
| | Attached amount of sizing agent after washing (% by mass) | | 0.15 | 0.7 | 0.19 | 0.16 | 0.16 | 0.12 | 0.08 | 0.16 | 0.16 |
| | Interfacial shear strength (MPa) | | 44 | 43 | 45 | 43 | 43 | 29 | 25 | 43 | 43 |
| Characteristics of resin composition including constituents [B] and [C] | Nematic-isotropic phase transition temperature (°C) | | 140 | 135 | 145 | 145 | 135 | 135 | 145 | 135 | 150 |
| | Minimum viscosity between 130 to 150°C (Pa·s) | | 0.8 | 0. 7 | 0.8 | 0.8 | 0.7 | 0. 7 | 0.8 | 0.8 | 1.0 |
| Characteristics of prepreg | Presence or absence of peak in 2θ = 1.0 to 6.0° observed by X-ray diffraction | After holding at 100°C for 30 minutes | B | B | B | B | B | B | B | B | B |
| | | After holding at 180°C for 2 hours | A | A | A | A | A | A | A | A | A |

(continued)

| | | Example 1 | Example 2 | Example 3 | Example 4 | Example 5 | Example 6 | Example 7 | Example 8 | Example 9 |
|---|---|---|---|---|---|---|---|---|---|---|
| | Observation result with polarizing microscope | A | A | A | A | A | A | A | A | A |
| | Molecular anisotropy in matrix resin by polarized Raman spectroscopy | A | A | A | A | A | A | A | A | A |
| | $G_{IC}$ (in-lb/in$^2$) | 7.8 | 7.8 | 8.2 | 7.9 | 7.7 | 7.8 | 7.6 | 7.4 | 8.1 |
| | $G_{IIC}$ (in-lb/in$^2$) | 9.3 | 9.9 | 9.5 | 9.1 | 9.5 | 8.8 | 8.3 | 8.5 | 9.2 |

Table 2

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|
| Constituent [A] | • Carbon fiber 1 | | | | | | | | | | | • | |
| | • Carbon fiber 2 | • | | | • | | • | | | | • | | |
| | • Carbon fiber 3 | | | | | | | | | | | | |
| | • Carbon fiber 4 | | | • | | • | | • | | • | | | • |
| | • Carbon fiber 5 | | | | | | | | • | | | | |
| | • Carbon fiber 6 | | | | | | | | | | | | |
| Carbon fiber other than constituent [A] | • Carbon fiber 7 | | • | | | | | | | | | | |
| Constituent [B] | • Epoxy resin 1 | | | 100 | | | | | | 70 | | 97 | |
| | • Epoxy resin 2 | | 97 | | 100 | | 90 | 85 | 80 | | 97 | | 97 |
| | • Epoxy resin 3 | | | | | 95 | | | | | | | |
| Epoxy resin other than constituent [B] | • "Araldite (registered trademark)" MY0600 | | 3 | | | | | 15 | 20 | | 3 | 3 | 3 |
| | • "jER (registered trademark)" YX4000 | | | | | | 5 | | | | | | |
| | • "EPICLON (registered trademark)" 830 | | | | | | 5 | | | | | | |
| | • "jER (registered trademark)" 604 | 60 | | | | 5 | | | | | | | |
| | • "jER (registered trademark)" 828 | 40 | | | | | | | | 30 | | | |

(continued)

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|
| Constituent [C] | • 3,3'-DAS | 47 | 18 | 16 | 16 | 19 | 20 | 23 | 25 | 21 | | | |
| | • "SEIKACURE" (registered trademark) S | | | | | | | | | | | | |
| | • KAYAHARD A-A | | | | | | | | | | | 18 | |
| | "Lonzacure (registered trademark)" DETDA80 | | | | | | | | | | 14 | | |
| | • MEH-7500 | | | | | | | | | | | | 28 |
| Thermoplastic resin | "SUMIKAEXCEL (registered trademark)" 5003P | 10 | | | | | | | | | | | |
| Additive | • TPP | | | | | | | | | | | | 1.0 |
| Characteristics of Constituent | Surface oxygen concentration O/C | 0.15 | 0.15 | 0.15 | 0.15 | 0.15 | 0.15 | 0.15 | 0.13 | 0.15 | 0.15 | 0.16 | 0.15 |
| | Attached amount of | 0.17 | 0 | 0.16 | 0.17 | 0.16 | 0.17 | 0.16 | 0.12 | 0.16 | 0.17 | 0.15 | 0.16 |
| [A] | sizing agent after washing (% by mass) | | | | | | | | | | | | |
| | Interfacial shear strength (MPa) | 43 | 22 | 43 | 43 | 43 | 43 | 43 | 29 | 43 | 43 | 44 | 43 |

(continued)

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|---|
| Characteristics of resin composition including constituents [B] and [C] | nematic-isotropic phase transition temperature (°C) | | *1 | 135 | 190 < | 190 < | 125 | 120 | 115 | 105 | 100 | 190 < | 190 < | 190 < |
| | Minimum viscosity between 130 to 150°C (Pa·s) | | 0.3 | 0. 7 | 0.9 | 0.9 | 0. 7 | 0. 7 | 0.6 | 0.6 | 0.5 | 3 | 36 | 106 |
| Characteristics of prepreg | Presence or absence of peak in 2θ = 1.0 to 6.0° observed by X-ray diffraction | After holding at 100°C for 30 minutes | B | B | B | B | B | B | B | B | B | A | A | - |
| | | After holding at 180°C for 2 hours | B | A | A | A | A | A | A | B | B | A | A | - |
| Characteristics of carbon fiber reinforced material | Observation result with polarizing microscope | | B | A | A | A | A | A | A | A | A | A | A | - |
| | Molecular anisotropy in matrix resin by polarized Raman spectroscopy | | B | A | A | A | A | A | A | A | A | A | A | - |
| | $G_{IC}$ (in-lb/in$^2$) | | 1.7 | 5.0 | 8.1 | 8.4 | 7.3 | 6.9 | 4.8 | 2.7 | 2.0 | 2.1 | 2.5 | - |
| | $G_{IIC}$ (in-lb/in$^2$) | | 3.3 | 4.9 | 7.3 | 7.4 | 6.7 | 6.5 | 6.5 | 6.3 | 6.1 | 3.1 | 3.5 | - |

(*1) The resin composition does not form the nematic phase.

Table 3

| | | Example 10 | Example 11 | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|---|---|---|
| Constituent [A] | • Carbon fiber 1 | | | | | | | | | | | | | |
| | • Carbon fiber 2 | | | | | • | | | | | | • | • | |
| | • Carbon fiber 3 | | | | | | | | | | | | | |
| | • Carbon fiber 4 | • | • | • | • | | | • | • | • | • | | | |
| | • Carbon fiber 5 | | | | | | • | | | | | | | • |
| | • Carbon fiber 6 | | | | | | | | | | | | | |
| Carbon fiber other than constituent [A] | • Carbon fiber 7 | | | | | | | | | | | | | |
| Constituent | • Epoxy resin 1 | 97 | 97 | | | 97 | | | | | | | | |
| [B] | • Epoxy resin 2 | | | 97 | 97 | | 97 | 95 | 95 | 95 | 95 | | | 95 |
| | • Epoxy resin 3 | | | | | | | | | | | 90 | 90 | |
| Epoxy resin other than constituent [B] | • "EPICLON (registered trademark)" 830 | | | | | | | | | | | 5 | 5 | 5 |
| | • "jER (registered trademark)" 604 | | 3 | 3 | 3 | | | 5 | 5 | 5 | 5 | 5 | 5 | |
| | • "Araldite (registered trademark)" MY0600 | | | | | | 3 | | | | | | | |
| | • "jER (registered trademark)" 828 | 3 | | | | 3 | | | | | | | | |
| Constituent [C] | • "SEIKACURE" (registered trademark) S | | | | | | | | | | | | | |
| | • 3,3'-DDS | 18 | 18 | 18 | 18 | 18 | 18 | 19 | 19 | 19 | 19 | 20 | 20 | 18 |

(continued)

| | | Example 10 | Example 11 | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|---|---|---|
| Constituent [D] (content relative to 100 parts by mass of total of [B] and epoxy resin other than [B] ) | • Particle A | 16 | | | 6 | | | 16 | | | 6 | | | |
| | • Particle B | | 16 | | | 7 | 7 | | 16 | | | 16 | 7 | 7 |
| | • Particle C | | | 16 | | | | | | 16 | | | | |
| Physical properties of constituent [D] | • Average particle diameter (µm) | 13 | 20 | 15 | 13 | 20 | 20 | 13 | 20 | 15 | 13 | 20 | 20 | 20 |
| | • Glass transition temperature or melting point (°C) | 160 | 217 | 140 | 160 | 217 | 217 | 160 | 217 | 140 | 160 | 217 | 217 | 217 |
| | • Content ratio of [D] with reference to entire mass of resin composition (%) | 12 | 12 | 12 | 5 | 5 | 5 | 12 | 12 | 12 | 5 | 12 | 5 | 5 |
| Other resin component | "SUMIKAEXCEL (registered trademark)" 5003P | | | | | | | | | | | | | |
| Constitution of prepreg | • Existence ratio of particles in surface layer (%) | 98 | 98 | 98 | 98 | 98 | 99 | 98 | 98 | 98 | 98 | 99 | 98 | 99 |
| Characteristics of Constituent [A] | Surface oxygen concentration O/C | 0.15 | 0.15 | 0.15 | 0.15 | 0.15 | 0.13 | 0.15 | 0.15 | 0.15 | 0.15 | 0.15 | 0.15 | 0.13 |
| | Attached amount of sizing agent after washing (% by mass) | 0.16 | 0.16 | 0.16 | 0.16 | 0.17 | 0.12 | 0.16 | 0.16 | 0.16 | 0.16 | 0.17 | 0.17 | 0.12 |
| | Interfacial shear strength (MPa) | 43 | 43 | 43 | 43 | 43 | 29 | 43 | 43 | 43 | 43 | 43 | 43 | 29 |

(continued)

| | | | Example 10 | Example 11 | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|---|---|---|---|
| Characteristics of resin composition including constituents [B] and [C] (excluding [D]) | Nematic-isotropic phase transition temperature (°C) | | 145 | 145 | 140 | 140 | 145 | 135 | 125 | 125 | 125 | 125 | 120 | 120 | 125 |
| | Minimum viscosity between 130 to 150°C (Pa·s) | | 0.8 | 0.8 | 0.8 | 0.8 | 0.9 | 0.8 | 0.8 | 0.8 | 0.8 | 0.8 | 0.7 | 0.8 | 0.8 |
| Characteristics of prepreg | Presence or absence of peak in 2θ = 1.0 to 6.0° observed by X-ray diffraction | After holding at 100°C for 30 minutes | B | B | B | B | B | B | B | B | B | B | B | B | B |
| | | After holding at 180°C for 2 hours | A | A | A | A | A | A | A | A | A | A | A | A | A |

(continued)

| | | Example 10 | Example 11 | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|---|---|---|
| Characteristics of carbon fiber reinforced material | Average thickness of interlaminar resin layer ($\mu$m) | 26 | 34 | 32 | 23 | 28 | 29 | 24 | 33 | 31 | 22 | 32 | 27 | 28 |
| | Existence ratio of particles in interlaminar resin layer (%) | 98 | 97 | 98 | 98 | 98 | 98 | 98 | 97 | 98 | 98 | 98 | 98 | 98 |
| | Observation result with polarizing microscope | A | A | A | A | A | A | A | A | A | A | A | A | A |
| | Diffraction angle 2$\theta$ by X-ray diffraction (°) | 3.2 | 3.2 | 3.3 | 3.3 | 3.2 | 3.3 | 3.3 | 3.3 | 3.3 | 3.3 | 3.3 | 3.3 | 3.3 |
| | Molecular anisotropy in matrix resin by polarized Raman spectroscopy | A | A | A | A | A | A | A | A | A | A | A | A | A |
| | Peak at 250°C or more in DSC measurement of cured resin | A | A | A | A | A | A | A | A | A | A | A | A | A |
| | $G_{IC}$ (in-lb/in$^2$) | 8.5 | 8.2 | 8.4 | 8.3 | 7.8 | 7.9 | 7.3 | 7.2 | 7.4 | 7.3 | 7.0 | 6.6 | 6.8 |
| | $G_{IIC}$ (in-lb/in$^2$) | 19.1 | 14.8 | 17.8 | 13.5 | 11.7 | 12.1 | 16.9 | 12.5 | 16.3 | 11.5 | 12.1 | 9.9 | 9.5 |
| | Tensile strength (ksi) | 458 | 453 | 455 | 456 | 408 | 443 | 450 | 453 | 447 | 453 | 405 | 408 | 445 |

(*1) The resin composition does not form the nematic phase.
(*2) The interlaminar resin layer is not formed.

Table 4

| | | Comparative Example 13 | Comparative Example 14 | Comparative Example 15 | Comparative Example 17 | Comparative Example 18 | Comparative Example 19 | Comparative Example 20 | Comparative Example 21 | Comparative Example 22 | Comparative Example 23 |
|---|---|---|---|---|---|---|---|---|---|---|---|
| Constituent [A] | • Carbon fiber 1 | | | | | | | | | | |
| | • Carbon fiber 2 | | • | | • | | | | | | |
| | • Carbon fiber 3 | | | | | | | | | | |
| | • Carbon fiber 4 | • | | • | | • | | • | • | • | • |
| | • Carbon fiber 5 | | | | | | | | | | |
| | • Carbon fiber 6 | | | | | | | | | | |
| Carbon fiber other than constituent [A] | • Carbon fiber 7 | | | | | | • | | | | |
| Constituent [B] | • Epoxy resin 1 | | | | 80 | | | | | | |
| | • Epoxy resin 2 | 95 | | 95 | | 80 | 97 | | | | |
| | • Epoxy resin 3 | | 90 | | | | | | | | |
| Epoxy resin other than constituent [B] | • "EPICLON (registered trademark)" 830 | | 5 | | | | | | | | |
| | • "jER (registered trademark)" 604 | 5 | 5 | 5 | 20 | | | 60 | 60 | 60 | 60 |
| | • "Araldite (registered trademark)" MY0600 | | | | | 20 | 3 | | | | |
| | • "jER (registered trademark)" 828 | | | | | | | 40 | 40 | 40 | 40 |
| Constituent [C] | • "SEIKACURE" (registered trademark) S | | | | | | | | | | |
| | • 3,3'-DDS | 19 | 20 | 19 | 25 | 25 | 18 | 47 | 47 | 47 | 47 |

(continued)

| | | Comparative Example 13 | Comparative Example 14 | Comparative Example 15 | Comparative Example 17 | Comparative Example 18 | Comparative Example 19 | Comparative Example 20 | Comparative Example 21 | Comparative Example 22 | Comparative Example 23 |
|---|---|---|---|---|---|---|---|---|---|---|---|
| Constituent [D] (content relative to 100 parts by mass of total of [B] and epoxy resin in other than [B]) | • Particle A | - | - | | 16 | | | 21 | | | - |
| | • Particle B | - | - | 3 | | 7 | 7 | | 21 | | - |
| | • Particle C | - | - | | | | | | | 21 | - |
| Physical properties of constituent [D] | • Average particle diameter ($\mu m$) | - | - | 20 | 13 | 20 | 20 | 13 | 20 | 15 | - |
| | • Glass transition temperature or melting point (°C) | - | - | 217 | 160 | 217 | 217 | 160 | 217 | 140 | - |
| | • Content ratio of [D] with reference to entire mass of resin composition (%) | - | - | 2 | 12 | 5 | 5 | 12 | 12 | 12 | - |
| Other resin component | "SUMIKAEXCEL (registered trademark)" 5003P | | | | | | | 10 | 10 | 10 | 10 |
| Constitution of prepreg | • Existence ratio of particles in surface layer (%) | - | - | 99 | 98 | 99 | 99 | 97 | 98 | 98 | - |

(continued)

| | | | Comparative Example 13 | Comparative Example 14 | Comparative Example 15 | Comparative Example 17 | Comparative Example 18 | Comparative Example 19 | Comparative Example 20 | Comparative Example 21 | Comparative Example 22 | Comparative Example 23 |
|---|---|---|---|---|---|---|---|---|---|---|---|---|
| Characteristics of Constituent [A] | Surface oxygen concentration O/C | | 0.15 | 0.15 | 0.15 | 0.15 | 0.15 | 0.15 | 0.15 | 0.15 | 0.15 | 0.15 |
| | Attached amount of sizing agent after washing (% by mass) | | 0.16 | 0.17 | 0.16 | 0.16 | 0.17 | 0 | 0.16 | 0.16 | 0.16 | 0.16 |
| | Interfacial shear strength (MPa) | | 43 | 43 | 43 | 43 | 43 | 22 | 43 | 43 | 43 | 43 |
| Characteristics of | Nematic-isotropic phase transition | | 125 | 120 | 125 | 105 | 105 | 135 | *1 | *1 | *1 | *1 |
| resin composition including constituents [B] and [C] (excluding [D]) | temperature (°C) | | | | | | | | | | | |
| | Minimum viscosity between 130 to 150°C (Pa·s) | | 0.7 | 0.6 | 0.7 | 0.6 | 0.6 | 0.8 | 0.3 | 0.3 | 0.3 | 0.3 |
| Characteristics of prepreg | Presence or absence of peak in 2θ = 1.0 to 6.0° observed by X-ray diffraction | After holding at 100°C for 30 minutes | B | B | B | B | B | B | B | B | B | B |
| | | After holding at 180°C for 2 hours | A | A | A | B | B | A | B | B | B | B |

(continued)

| | | Comparative Example 13 | Comparative Example 14 | Comparative Example 15 | Comparative Example 17 | Comparative Example 18 | Comparative Example 19 | Comparative Example 20 | Comparative Example 21 | Comparative Example 22 | Comparative Example 23 |
|---|---|---|---|---|---|---|---|---|---|---|---|
| Characteristics of carbon fiberreinforced material | Average thickness of interlaminar resin layer (μm) | < 1 *2 | < 1 *2 | < 1 *2 | 25 | 31 | 32 | 23 | 32 | 29 | < 1 *2 |
| | Existence ratio of particles in interlaminar resin layer (%) | - | - | *2 | 97 | 97 | 97 | 97 | 97 | 98 | - |
| | Observation result with polarizing microscope | A | A | A | A | A | A | B | B | B | B |
| | Diffraction angle 2θ by X-ray diffraction (°) | 3.3 | 3.3 | 3.3 | - | - | 3.3 | B | B | B | B |
| | Molecular anisotropy in matrix resin by polarized Raman spectroscopy | A | A | A | A | A | A | B | B | B | B |
| | Peak at 250°C or more in DSC measurement of cured resin | A | A | A | A | A | A | B | B | B | B |
| | $G_{IC}$ (in-lb/in$^2$) | 7.1 | 6.6 | 7.4 | 3.0 | 2.8 | 5.2 | 1.9 | 1.8 | 1.9 | 1.5 |
| | $G_{IIC}$ (in-lb/in$^2$) | 6.6 | 6.5 | 6.8 | 15.4 | 9.3 | 8.2 | 13.5 | 10.1 | 12.8 | 3.3 |
| | Tensile strength (ksi) | 451 | 405 | 444 | 372 | 412 | 439 | 376 | 373 | 375 | 372 |

(*1) The resin composition does not form the nematic phase.
(*2) The interlaminar resin layer is not formed.

Table 5

| | | Example 23 | Example 24 | Example 25 | Example 26 | Example 27 | Example 28 | Comparative Example 24 | Comparative Example 25 | Comparative Example 26 | Comparative Example 27 |
|---|---|---|---|---|---|---|---|---|---|---|---|
| Constituent [A] | • Carbon fiber 1 | • | | • | • | | | • | • | • | |
| | • Carbon fiber 2 | | | | | | | | | | |
| | • Carbon fiber 3 | | • | | | • | • | | | | • |
| | • Carbon fiber 4 | | | | | | | | | | |
| | • Carbon fiber 5 | | | | | | | | | | |
| | • Carbon fiber 6 | | | | | | | | | | |
| Carbon fiber other than constituent [A] | • Carbon fiber 7 | | | | | | | | | | |
| Constituent [B] | • Epoxy resin 1 | 97 | | 90 | 90 | | | 80 | | | |
| | • Epoxy resin 2 | | 97 | | | | | | | | |
| | • Epoxy resin 3 | | | | | 95 | 95 | | | | |
| Epoxy resin other than constituent [B] | • "EPICLON (registered trademark)" 830 | 3 | | 10 | 10 | | | 20 | | | |
| | • "jER (registered trademark)" 604 | | 3 | | | 5 | 5 | | 60 | 60 | 60 |
| | • "Araldite (registered trademark)" MY0600 | | | | | | | | | | |
| | • "jER (registered trademark)" 828 | | | | | | | | 40 | 40 | 40 |
| Constituent [C] | • "SEIKACURE" (registered trademark) S | | | | | 9 | 9 | | | | 24 |
| | • 3, 3' -DDS | 18 | 18 | 18 | 18 | 9 | 9 | 25 | 47 | 47 | 24 |

(continued)

| | | Example 23 | Example 24 | Example 25 | Example 26 | Example 27 | Example 28 | Comparative Example 24 | Comparative Example 25 | Comparative Example 26 | Comparative Example 27 |
|---|---|---|---|---|---|---|---|---|---|---|---|
| Constituent [D] (nonwoven fabric form) | • Forming material | Nonwoven fabric 3 | Nonwoven fabric 2 | Nonwoven fabric 3 | Nonwoven fabric 4 | Nonwoven fabric 1 | Nonwoven fabric 2 | Nonwoven fabric 3 | Nonwoven fabric 3 | Nonwoven fabric 4 | Nonwoven fabric 2 |
| | • Weight per unit area ($g/m^2$) | 17 | 12 | 17 | 19 | 6 | 12 | 17 | 17 | 19 | 12 |
| | • Content relative to 100 parts by mass of total of [B] and epoxy other than [B] (part by mass) | 22 | 15 | 22 | 25 | 7 | 15 | 30 | 30 | 33 | 19 |
| | • Content ratio of [D] with reference to entire mass of resin composition (%) | 16 | 11 | 16 | 18 | 6 | 11 | 16 | 16 | 18 | 11 |
| Thermoplastic resin | "SUMIKAEXCEL (registered trademark)" 5003P | | | | | | | | 10 | 10 | 10 |
| Constitution of prepreg | • Existence ratio of nonwoven fabric in surface layer (%) | 96 | 96 | 96 | 95 | 98 | 96 | 96 | 96 | 96 | 97 |
| Characteristics of Constituent [A] | Surface oxygen concentration O/C | 0.16 | 0.20 | 0.16 | 0.16 | 0.20 | 0.20 | 0.16 | 0.16 | 0.16 | 0.20 |
| | Attached amount of sizing agent after washing (% by mass) | 0.15 | 0.19 | 0.15 | 0.15 | 0.19 | 0.19 | 0.15 | 0.15 | 0.15 | 0.19 |
| | Interfacial shear strength (MPa) | 44 | 45 | 44 | 44 | 45 | 45 | 44 | 44 | 44 | 45 |

(continued)

| | | | Example 23 | Example 24 | Example 25 | Example 26 | Example 27 | Example 28 | Comparative Example 24 | Comparative Example 25 | Comparative Example 26 | Comparative Example 27 |
|---|---|---|---|---|---|---|---|---|---|---|---|---|
| Characteristics of resin composition including constituents [B] and [C] (excluding [D]) | Nematic-isotropic phase transition temperature (°C) | | 145 | 140 | 120 | 120 | 125 | 125 | 105 | *1 | *1 | *1 |
| | Minimum viscosity between 130 to 150°C (Pa·s) | | 1.0 | 1.0 | 0.7 | 0.7 | 0.8 | 0.8 | 0.6 | 0.3 | 0.3 | 0.3 |
| Characteristics of prepreg | Presence or absence of peak in $2\theta$ = 1.0 to 6.0° observed by X-ray diffraction | After holding at 100°C for 30 minutes | B | B | B | B | B | B | B | B | B | B |
| | | After holding at 180°C for 2 hours | A | A | A | A | A | A | B | B | B | B |

(continued)

| | | Example 23 | Example 24 | Example 25 | Example 26 | Example 27 | Example 28 | Comparative Example 24 | Comparative Example 25 | Comparative Example 26 | Comparative Example 27 |
|---|---|---|---|---|---|---|---|---|---|---|---|
| Characteristics of carbon fiber reinforced material | Average thickness of interlaminar resin layer ($\mu$m) | 38 | 30 | 37 | 43 | 25 | 29 | 34 | 35 | 40 | 27 |
| | Existence ratio of nonwoven fabric in interlaminar resin layer (%) | 98 | 97 | 98 | 97 | 98 | 97 | 97 | 97 | 97 | 97 |
| | Observation result with polarizing microscope | A | A | A | A | A | A | A | B | B | B |
| | Diffraction angle $2\theta$ by X-ray diffraction (°) | 3.2 | 3.3 | 3.2 | 3.2 | 3.3 | 3.3 | 3.2 | B | B | B |
| | Molecular anisotropy in matrix resin by polarized Raman spectroscopy | A | A | A | A | A | A | A | B | B | B |
| | Peak at 250°C or more in DSC measurement of cured resin | A | A | A | A | A | A | A | B | B | B |
| | $G_{IC}$ (in-lb/in$^2$) | 8.6 | 8.4 | 8.1 | 7.8 | 7.8 | 7.9 | 3.5 | 2.6 | 4.3 | 2.5 |
| | $G_{IIC}$ (in-lb/in$^2$) | 20.7 | 17.6 | 18.4 | 21.1 | 13.3 | 15.4 | 17.1 | 15.6 | 19.2 | 12.7 |
| | Tensile strength (ksi) | 485 | 446 | 485 | 490 | 441 | 448 | 467 | 440 | 425 | 363 |

(*1) The resin composition does not form the nematic phase.
(*2) The interlaminar resin layer is not formed.

Table 6

| | | Example 29 | Example 30 | Example 31 | Example 32 | Example 33 | Example 34 | Example 35 | Example 36 | Example 37 | Comparative Example 28 | Comparative Example 29 | Comparative Example 30 | Comparative Example 31 | Comparative Example 32 |
|---|---|---|---|---|---|---|---|---|---|---|---|---|---|---|---|
| Constituent [A] | • Carbon fiber 1 | | | | | | | | | | | | | | |
| | • Carbon fiber 2 | • | | | • | | | | | | | | | | |
| | • Carbon fiber 3 | | | | | | | | | | | | | | |
| | • Carbon fiber 4 | | | • | | • | • | • | • | • | • | • | • | • | • |
| | • Carbon fiber 5 | | • | | | | | | | | | | | | |
| | • Carbon fiber 6 | | | | | | | | | | | | | | |
| Carbon fiber other than constituent [A] | • Carbon fiber 7 | | | | | | | | | | | | | | |
| Constituent [B] | • Epoxy resin 1 | | 97 | | | | | | | 90 | | | | | |
| | • Epoxy resin 2 | 97 | | 97 | 97 | 95 | 95 | 95 | 95 | | 80 | | | | |
| | • Epoxy resin 3 | | | | | | | | | | | | | | |
| Epoxy resin other than constituent [B] | • "EPICLON (registered trademark)" 830 | | | | | | | | | | | | | | |
| | • "jER (registered trademark)" 604 | 3 | | | | 5 | 5 | 5 | 5 | | | 60 | 60 | 60 | 60 |
| | • "Araldite (registered trademark)" MY0600 | | | 3 | 3 | | | | | | 20 | | | | |
| | • "jER (registered trademark)" 828 | | 3 | | | | | | | 10 | | 40 | 40 | 40 | 40 |
| Constituent [C] | • "SEIKACURE" (registered trademark) S | | | | | | | | | | | | | | |
| | • 3,3'-DDS | 18 | 18 | 18 | 18 | 19 | 19 | 19 | 19 | 23 | 25 | 47 | 47 | 47 | 47 |

(continued)

| | | Example 29 | Example 30 | Example 31 | Example 32 | Example 33 | Example 34 | Example 35 | Example 36 | Example 37 | Comparative Example 28 | Comparative Example 29 | Comparative Example 30 | Comparative Example 31 | Comparative Example 32 |
|---|---|---|---|---|---|---|---|---|---|---|---|---|---|---|---|
| Constituent [D] (short fiber web form) | • Forming material | CF1 | CF2 | CF3 | CF4 | CF1 | CF2 | CF3 | CF4 | CF3 | CF3 | CF1 | CF2 | CF3 | CF4 |
| | • Average fiber length (mm) | 3 | 6 | 12 | 6 | 3 | 6 | 12 | 6 | 12 | 12 | 3 | 6 | 12 | 6 |
| | • Weight per unit area (g/m$^2$) | 6 | 6 | 6 | 12 | 6 | 6 | 6 | 12 | 6 | 6 | 6 | 6 | 6 | 12 |
| | • Average fiber diameter (μm) | 7 | 7 | 7 | 7 | 7 | 7 | 7 | 7 | 7 | 7 | 7 | 7 | 7 | 7 |
| | • Content relative to 100 parts by mass of total of [B] and epoxy other than [B] (part by mass) | 7 | 7 | 7 | 15 | 7 | 7 | 7 | 15 | 7 | 7 | 9 | 9 | 9 | 19 |
| | • Content ratio of [D] with reference to entire mass of resin composition (%) | 6 | 6 | 6 | 11 | 6 | 6 | 6 | 11 | 6 | 6 | 6 | 6 | 6 | 11 |
| Thermoplastic resin | "SUMIKAEXCEL (registered trademark)" 5003P | | | | | | | | | | | 10 | 10 | 10 | 10 |
| Constitution of prepreg | • Existence ratio of short fiber in surface layer (%) | 96 | 96 | 95 | 95 | 96 | 96 | 95 | 95 | 95 | 95 | 97 | 97 | 96 | 95 |

(continued)

| | | | Example 29 | Example 30 | Example 31 | Example 32 | Example 33 | Example 34 | Example 35 | Example 36 | Example 37 | Comparative Example 28 | Comparative Example 29 | Comparative Example 30 | Comparative Example 31 | Comparative Example 32 |
|---|---|---|---|---|---|---|---|---|---|---|---|---|---|---|---|---|
| Characteristics of Constituent [A] | Surface oxygen concentration O/C | | 0.15 | 0.13 | 0.15 | 0.15 | 0.15 | 0.15 | 0.15 | 0.15 | 0.15 | 0.15 | 0.15 | 0.15 | 0.15 | 0.15 |
| | Attached amount of sizing agent after washina (% by mass) | | 0.17 | 0.12 | 0.16 | 0.17 | 0.16 | 0.16 | 0.16 | 0.16 | 0.16 | 0.16 | 0.16 | 0.16 | 0.16 | 0.16 |
| | Interfacial shear strength (MPa) | | 43 | 29 | 43 | 43 | 43 | 43 | 43 | 43 | 43 | 43 | 43 | 43 | 43 | 43 |
| Characteristics of resin composition including constituents [B] and [C] (excludinq [D]) | Nematic-isotropic phase transition temperature (°C) | | 145 | 145 | 135 | 135 | 125 | 125 | 125 | 125 | 120 | 105 | *1 | *1 | *1 | *1 |
| | Minimum viscosity between 130 to 150°C (Pa·s) | | 0.7 | 0.7 | 0.7 | 0.7 | 0.7 | 0.7 | 0.7 | 0.7 | 0.6 | 0.6 | 0.3 | 0.3 | 0.3 | 0.3 |
| Characteristics of prepreg | Presence or absence of peak in 2θ = 1.0 to 6.0° observed by X-ray diffraction | after holding at 100°C for 30 minutes | B | B | B | B | B | B | B | B | B | B | B | B | B | B |
| | | after holding at 180°C for 2 hours | A | A | A | A | A | A | A | A | A | B | B | B | B | B |

(continued)

| | | Example 29 | Example 30 | Example 31 | Example 32 | Example 33 | Example 34 | Example 35 | Example 36 | Example 37 | Comparative Example 28 | Comparative Example 29 | Comparative Example 30 | Comparative Example 31 | Comparative Example 32 |
|---|---|---|---|---|---|---|---|---|---|---|---|---|---|---|---|
| Characteristics of carbon fiber reinforced material | Average thickness of interlaminar resin layer (μm) | 30 | 36 | 39 | 60 | 29 | 35 | 37 | 58 | 34 | 36 | 27 | 33 | 35 | 57 |
| | Existence ratio of short fiber in interlaminar resin layer (%) | 97 | 97 | 98 | 97 | 97 | 96 | 97 | 96 | 97 | 98 | 97 | 97 | 96 | 97 |
| | Observation result with polarizing microscope | A | A | A | A | A | A | A | A | A | A | B | B | B | B |
| | Diffraction angle 2θ by X-ray diffraction (°) | 3.3 | 3.2 | 3.3 | 3.3 | 3.3 | 3.3 | 3.3 | 3.3 | 3.2 | 3.2 | B | B | B | B |
| | Molecular anisotropy in matrix resin by polarized Raman spectroscopy | A | A | A | A | A | A | A | A | A | A | B | B | B | B |
| | Peak at 250°C or more in DSC measurement of cured resin | A | A | A | A | A | A | A | A | A | A | B | B | B | B |
| | $G_{IC}$ (in-lb/in$^2$) | 8.9 | 8.5 | 8.9 | 9.0 | 8.4 | 8.5 | 8.3 | 8.7 | 7.8 | 3.5 | 3.0 | 3.1 | 3.0 | 3.2 |
| | $G_{IIC}$ (in-lb/in$^2$) | 14.2 | 13.8 | 14.3 | 14.6 | 11.9 | 12.3 | 12.0 | 12.1 | 12.2 | 11.5 | 9.1 | 9.7 | 9.2 | 9.1 |
| | Tensile strength (ksi) | 390 | 435 | 432 | 389 | 432 | 435 | 431 | 435 | 433 | 378 | 342 | 345 | 343 | 338 |

(*1) The resin composition does not form the nematic phase.
(*2) The interlaminar resin layer is not formed.

**Claims**

1. A prepreg comprising
the following constituents [A] to [C], the prepreg satisfying the following conditions [I] to [III]:

[A]: a sizing agent-coated carbon fiber;
[B]: an epoxy resin having a structure represented by a general formula (1):

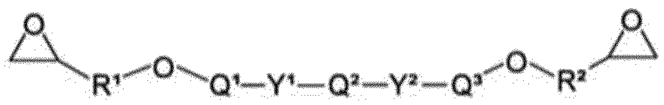

···(1)

in the general formula (1), $Q^1$, $Q^2$, and $Q^3$ each include one structure selected from a group (I); $R^1$ and $R^2$ in the general formula (1) each represent an alkylene group having a carbon number of 1 to 6; Z in the group (I) each independently represents an aliphatic hydrocarbon group having a carbon number of 1 to 8, an aliphatic alkoxy group having a carbon number of 1 to 8, a fluorine atom, a chlorine atom, a bromine atom, an iodine atom, a cyano group, a nitro group, or an acetyl group; n each independently represents an integer of 0 to 4; and $Y^1$, $Y^2$, and $Y^3$ each in the general formula (1) and the group (I) are selected from a single bond or one group from a group (II); and

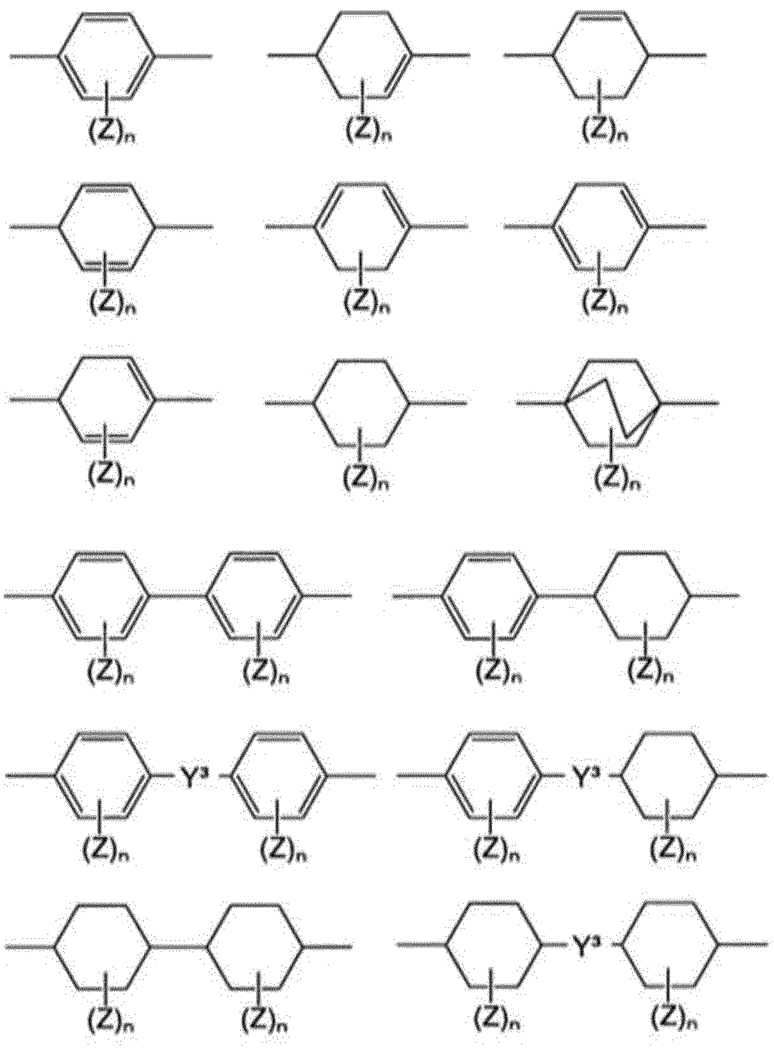

Group (I)

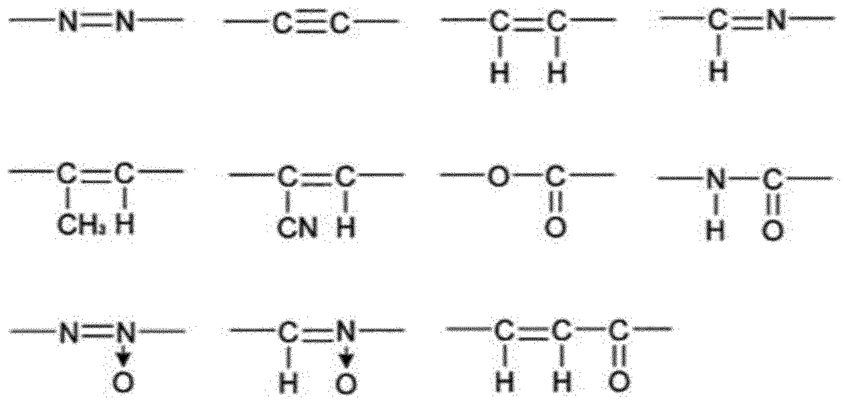

Group (II)

[C]: a hardener for [B],

[I]: an epoxy resin composition including the constituents [B] and [C] has a nematic-isotropic phase transition temperature in a temperature range of 130°C to 180°C;
[II]: a prepreg after isothermal holding at 100°C for 30 minutes does not have a high-order structure originated from a diffraction angle of 2θ = 1.0° to 6.0° measured by wide angle X-ray diffraction at 100°C; and
[III]: a prepreg after isothermal holding at 180°C for 2 hours has a high-order structure originated from the diffraction angle of 2θ = 1.0° to 6.0° measured by wide angle X-ray diffraction at 180°C.

**2.** A prepreg comprising the following constituents [A] to [D], the prepreg satisfying the following conditions [I'], [II], [III], [IV], and [V]:

[A]: a sizing agent-coated carbon fiber;
[B]: an epoxy resin having a structure represented by the general formula (1);

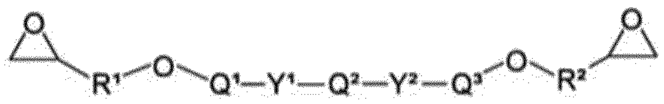

···(1)

in the general formula (1), $Q^1$, $Q^2$, and Q3 each include one structure selected from a group (I); $R^1$ and $R^2$ in the general formula (1) each represent an alkylene group having a carbon number of 1 to 6; Z in the group (I) each independently represents an aliphatic hydrocarbon group having a carbon number of 1 to 8, an aliphatic alkoxy group having a carbon number of 1 to 8, a fluorine atom, a chlorine atom, a bromine atom, an iodine atom, a cyano group, a nitro group, or an acetyl group; n each independently represents an integer of 0 to 4; and $Y^1$, $Y^2$, and $Y^3$ each in the general formula (1) and the group (I) are selected from a single bond or one group from a group (II) ;

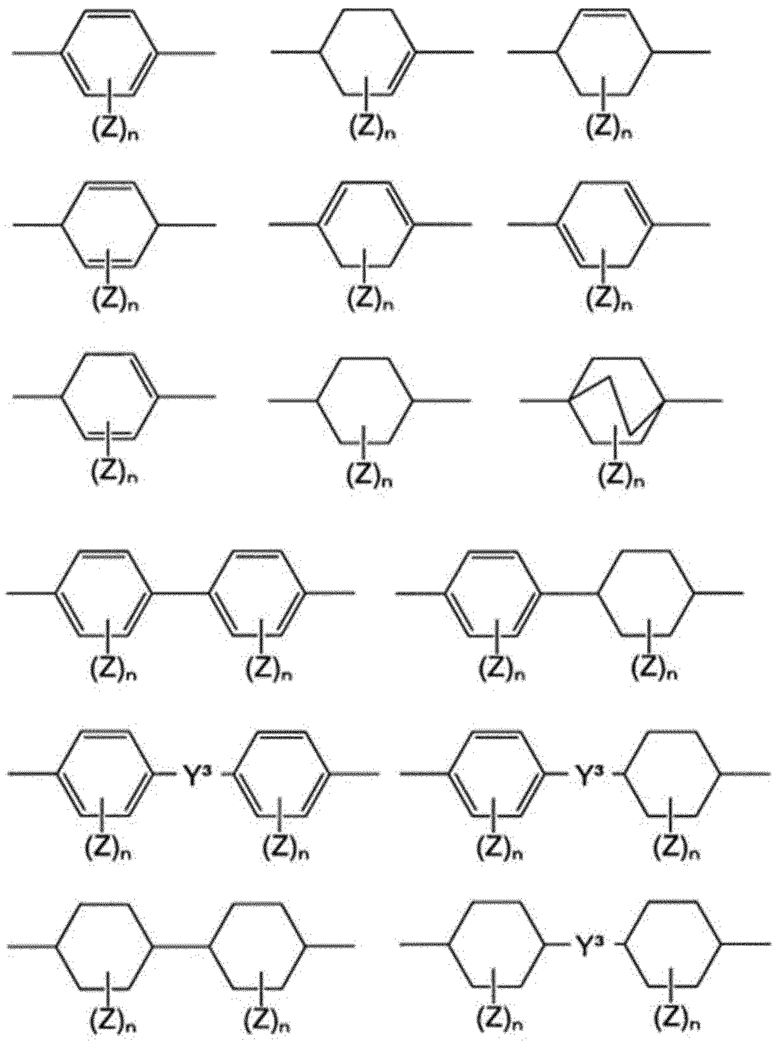

Group (I)

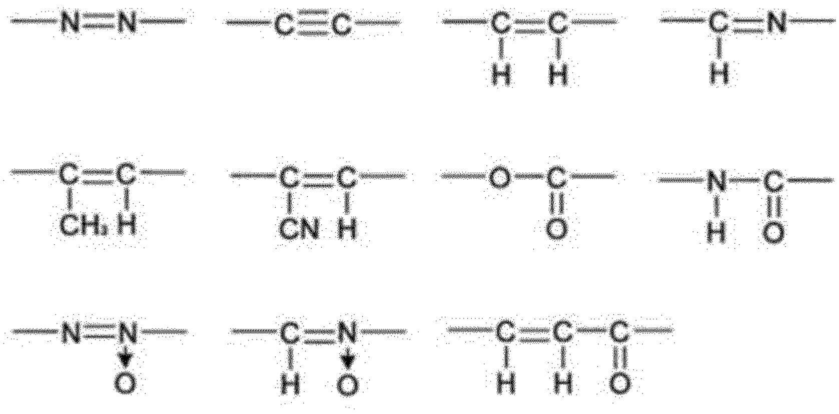

Group (II)

[C]: a hardener for [B], and
[D]: a spacer material,

[I']: an epoxy resin composition including the constituents [B] and [C] has a nematic-isotropic phase transition temperature in a temperature range of 110°C to 180°C;
[II] a prepreg after isothermal holding at 100°C for 30 minutes does not have a high-order structure originated from a diffraction angle of 2θ = 1.0° to 6.0° measured by wide angle X-ray diffraction at 100°C;
[III]: a prepreg after isothermal holding at 180°C for 2 hours has a high-order structure originated from the

diffraction angle of 2θ = 1.0° to 6.0° measured by wide angle X-ray diffraction at 180°C;
[IV]: 90% or more of the constituent [D] exists within a depth of 20% of a prepreg thickness from a prepreg surface; and
[V]: a content ratio of the constituent [D] in the epoxy resin composition is 3% by mass to 40% by mass.

**3.** The prepreg according to claim 1 or 2, wherein the prepreg satisfying the following condition [VI]:
[VI]: an attached amount of a sizing agent of the carbon fiber after washing the sizing agent-coated carbon fiber measured in accordance with a method defined in the present specification is 0.08% by mass or more relative to the sizing agent-coated carbon fiber.

**4.** The prepreg according to any one of claims 1 to 3, wherein
the constituent [B] includes a prepolymer in which a part of the epoxy resin having the structure represented by the general formula (1) is polymerized.

**5.** The prepreg according to any one of claims 1 to 4, wherein the prepreg satisfying the following condition [VII]:
[VII]: a minimum viscosity of the epoxy resin composition including the constituents [B] and [C] at 130°C to 150°C measured at an angular frequency of 3.14 rad/s in a temperature ramp process of 2 °C/minute from 40°C is in a range of 0.1 Pa·s to 10.0 Pa·s.

**6.** The prepreg according to any one of claims 1 to 5, wherein the prepreg comprises an epoxy resin in a liquid state at 25°C in addition to the epoxy resin having the structure represented by the general formula (1); and
the constituent [B] is comprised in a range of 80 parts by mass to 99 parts by mass and the epoxy resin in the liquid state at 25°C is comprised in a range of 1 part by mass to 20 parts by mass relative to 100 parts by mass of the resin of the total of the constituent [B] and the epoxy resin in the liquid state at 25°C.

**7.** The prepreg according to any one of claims 1 to 5, wherein the prepreg comprises an epoxy resin having a structure represented by a general formula (2) in addition to the epoxy resin having the structure represented by the general formula (1); and
the constituent [B] is comprised in a range of 80 parts by mass to 99 parts by mass and the epoxy resin having the structure represented by the general formula (2) is comprised in a range of 1 part by mass to 20 parts by mass relative to 100 parts by mass of the resin of the total of the constituent [B] and the epoxy resin having the structure represented by the general formula (2).

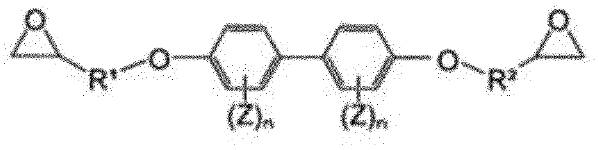 ··· (2)

$R^1$ and $R^2$ in the general formula (2) each represent an alkylene group having a carbon number of 1 to 6; Z each independently represents an aliphatic hydrocarbon group having a carbon number of 1 to 8, an aliphatic alkoxy group having a carbon number of 1 to 8, a fluorine atom, a chlorine atom, a bromine atom, an iodine atom, a cyano group, a nitro group, or an acetyl group; and n each independently represents an integer of 0 to 4.

**8.** The prepreg according to any one of claims 1 to 7, wherein the constituent [C] is an aromatic polyamine.

**9.** The prepreg according to any one of claims 2 to 8, wherein the prepreg satisfying the following condition [VIII]:
[VIII]: the carbon fiber reinforced material comprises an interlaminar resin layer placed between adjacent carbon fiber layers in the carbon fiber reinforced material obtained by laminating two of the prepregs and heating and curing; and
an average thickness of the interlaminar resin layer is in a range of 5 μm to 100 μm.

**10.** The prepreg according to any one of claims 2 to 9, wherein the constituent [D] is insoluble into the constituent [B].

**11.** The prepreg according to any one of claims 2 to 10, wherein a form of the constituent [D] is particles.

**12.** The prepreg according to any one of claims 2 to 10, wherein a form of the constituent [D] is a nonwoven fabric.

**13.** The prepreg according to any one of claims 2 to 10, wherein a form of the constituent [D] is a short fiber web.

**14.** The prepreg according to claim 11, wherein an average particle diameter of the particles is 1 $\mu$m to 100 $\mu$m.

**15.** The prepreg according to claim 11 or 14, wherein the particles are made of a thermoplastic resin.

**16.** The prepreg according to claim 12, wherein the nonwoven fabric is made of a thermoplastic resin.

**17.** The prepreg according to claim 11, 14 or 15, wherein the particles comprise a resin selected from the group consisting of polyimide, polyamide, polyamideimide, polyphthalamide, polyetherimide, polyetherketone, polyetheretherketone, polyetherketoneketone, polyaryletherketone, polyethersulfone, polyphenylsulfide, liquid crystal polymers, and the derivatives thereof.

**18.** The prepreg according to claim 13, wherein a short fiber constituting the short fiber web has an average fiber length in a range of 2 mm to 20 mm.

**19.** A carbon fiber reinforced material made by curing the prepreg as claimed in any one of claims 1 to 18.

FIG.1

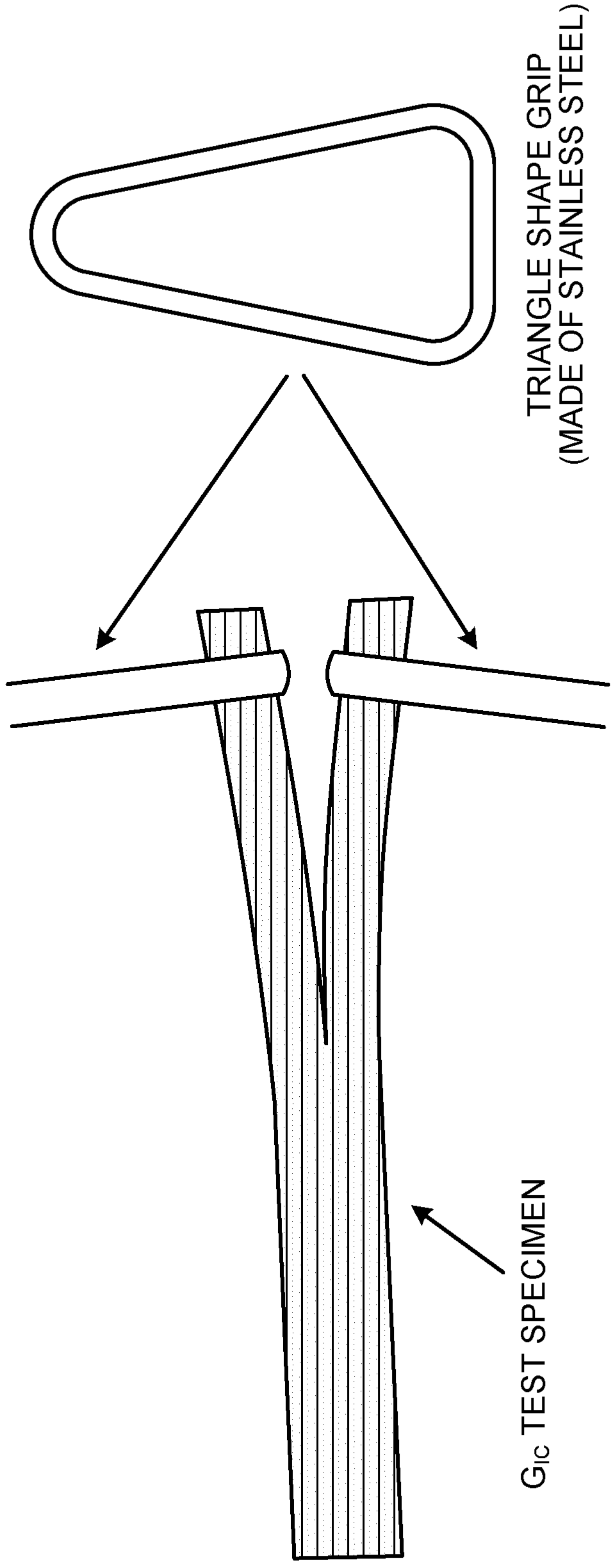
TRIANGLE SHAPE GRIP
(MADE OF STAINLESS STEEL)
$G_{IC}$ TEST SPECIMEN

## INTERNATIONAL SEARCH REPORT

International application No. PCT/JP2019/015807

A. CLASSIFICATION OF SUBJECT MATTER
Int.Cl. C08J5/24(2006.01)i
According to International Patent Classification (IPC) or to both national classification and IPC

B. FIELDS SEARCHED
Minimum documentation searched (classification system followed by classification symbols)
Int.Cl. B29B11/16, B29B15/08-B29B15/14, C08J5/04-C08J5/10, C08J5/24

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | CN 1762686 A (ZHEJIANG UNIVERSITY) 26 April 2006, entire text (Family: none) | 1-19 |
| A | JP 4-233935 A (BAYER AG.) 21 August 1992, entire text & US 5266405 A, entire text & EP 475023 A2 | 1-19 |

☒ Further documents are listed in the continuation of Box C.   ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 04 July 2019 (04.07.2019) | 16 July 2019 (16.07.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/015807

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-84557 A (SUMITOMO CHEMICAL CO., LTD.) 28 April 2011, entire text (Family: none) | 1-19 |
| A | WO 2006/068185 A1 (NIPPON KAYAKU CO., LTD.) 29 June 2006, entire text & US 2008/0153976 A1, entire text & CN 101084252 A & KR 10-2007-0098814 A | 1-19 |
| A | WO 2016/190323 A1 (HITACHI CHEMICAL INDUSTRY CO., LTD.) 01 December 2016, entire text & US 2018/0148622 A1, entire text & EP 3305856 A1 & CN 107614620 A | 1-19 |
| A | WO 2018/070053 A1 (HITACHI CHEMICAL INDUSTRY CO., LTD.) 19 April 2018, entire text & TW 201817760 A | 1-19 |
| A | WO 2017/221810 A1 (HITACHI CHEMICAL INDUSTRY CO., LTD.) 28 December 2017, entire text & EP 3476878 A1, entire text & CN 109328203 A | 1-19 |
| A | JP 2013-227451 A (HITACHI CHEMICAL INDUSTRY CO., LTD.) 07 November 2013, entire text (Family: none) | 1-19 |
| P, A | JP 2018-162451 A (TORAY INDUSTRIES, INC.) 18 October 2018, entire text (Family: none) | 1-19 |
| P, A | WO 2019/021613 A1 (TORAY INDUSTRIES, INC.) 31 January 2019, entire text (Family: none) | 1-19 |

Form PCT/ISA/210 (continuation of second sheet) (January 2015)

INTERNATIONAL SEARCH REPORT

International application No.
PCT/JP2019/015807

The invention in claim 1 of the present application specifies that, in a prepreg including: a sizing agent-coated carbon fiber; an epoxy resin [B] having a structure represented by general formula (1); and a curing agent [C] of [B], an epoxy resin composition including components [B] and [C] has a nematic-isotropic phase-transition temperature in a temperature range of 130-180°C (condition [I]).

In addition, the present description indicates that as a means for setting a nematic-isotropic phase-transition temperature within the specific range, a curing agent of component [C] is preferably selected considering combination with component [B] from the point of view that the epoxy resin composition including components [B] and [C] has a nematic-isotropic phase-transition temperature in a range of 130-180°C (paragraph [0077]).

However, for example, comparative examples 3-9 of the present description discloses those which are obtained by the same preparing method using the same epoxy resin (component [B]) and curing agent(component [C]) as examples 1-9 of the present application, and which do not satisfy condition [I] specified in claim 1 of the present application.

In addition, the present specification does not particularly disclose other means to set condition [I] within the specific range.

Moreover, it cannot be said that the means for setting condition [I] within the specific range is common technical knowledge at the time of filing.

Therefore, even with reference to the description of the present description and the common technical knowledge at the time of filing, a person skilled in the art cannot understand how to prepare a prepreg satisfying condition [I] specified in claim 1 of the present application by using those other than an epoxy resin composition described in examples of the present application.

In addition, although a person skilled in the art could understand how to do so, since it is necessary to prepare a prepreg optimizing preparation conditions by using an epoxy resin including very many kinds of structures represented by general formula (1), and to measure and verify whether or not to satisfy condition [I], it is recognized that trial and errors exceeding the expectation of a person skilled in the art should be undergone.

Accordingly, the description of the present application is not described clearly and sufficiently enough for a person skilled in the art to carry out the invention in claim 1 of the present application, and thus does not comply with the requirement regarding support stipulated in PCT Article 5.

In addition, based on the same reasoning, the invention in claims 2-19 of the present application also does not comply with the requirement regarding support stipulated in PCT Articles 5.

Therefore, when it comes to a prepreg described in the invention as in claims 1-19 of the present application, a meaningful examination could not be carried out regarding those other than a prepreg that is an epoxy resin composition used in examples of the present application. Thus, an examination was not carried out.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001139662 A
- JP H7278412 B
- JP S60231738 B
- JP H694515 B
- JP 4619770 B
- JP 2005206814 A
- JP 2010241797 A
- JP 2011098952 A
- JP 2011074366 A
- JP H1110537 B
- JP H1110536 B
- JP H5115 A
- JP 2004506789 W
- JP 5471975 B

### Non-patent literature cited in the description

- **DRZAL, L. T.** *Master, Sci, Eng.,* 1990, vol. A126, 289
- *Journal of Polymer Science: Part A: Polymer Chemistry,* 2004, vol. 42, 3631
- *SAMPE Journal,* vol. 34 (6), 7-19